(19) Europäisches Patentamt
European Patent Office
Office européen des brevets

(11) **EP 3 576 009 A1**

(12) **EUROPÄISCHE PATENTANMELDUNG**

(43) Veröffentlichungstag:
04.12.2019 Patentblatt 2019/49

(51) Int Cl.:
*G06K 9/00* (2006.01)   *G02B 5/04* (2006.01)

(21) Anmeldenummer: 18175227.0

(22) Anmeldetag: 30.05.2018

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Technische Hochschule Mittelhessen 35390 Giessen (DE)**

(72) Erfinder: **BEHRENS, Michael 61231 Bad Nauheim (DE)**

(74) Vertreter: **Stumpf, Peter c/o TransMIT GmbH Kerkrader Strasse 3 35394 Gießen (DE)**

(54) **OPTISCHER FINGERABDRUCKSENSOR**

(57)    Die Erfindung betrifft das Gebiet der Sicherheitstechnik, insbesondere einen optischen Fingerabdrucksensor, der für die Zutrittskontrolle zu sensiblen Bereichen, aber auch zum Entsperren von elektronischen Geräten, insbesondere von Mobilgeräten, geeignet ist.

Der optische Fingerabdrucksensor weist einen modular aufgebauten Sensorkörper auf. Der Sensorkörper eignet sich darüber hinaus für alle Sensoren, die zur Erfassung der Oberflächenstrukturen flexibler oder elastischer Gegenstände vorgesehen sind.

Fig. 5a

**Beschreibung**

**Gebiet der Erfindung**

Die Erfindung betrifft das Gebiet der Sicherheitstechnik, insbesondere einen optischen Fingerabdrucksensor, der für die Zutrittskontrolle zu sensiblen Bereichen, aber auch zum Entsperren von elektronischen Geräten, insbesondere von Mobilgeräten, geeignet ist. Der optische Fingerabdrucksensor weist einen modular aufgebauten Sensorkörper auf. Der Sensorkörper eignet sich darüber hinaus für alle Sensoren, die zur Erfassung der Oberflächenstrukturen flexibler oder elastischer Gegenstände vorgesehen sind.

**Definition von Begriffen**

| Fingerbeere | - Unterseite des vordersten, den Fingerabdruck tragenden, Gliedes eines Fingers |
|---|---|
| Papillarleisten, Papillen | - erhabene Strukturen eines Fingerabdrucks |
| Täler | - zwischen den Papillen liegende Senken |
| Hellfeldabbildung | - Papillen erscheinen als dunkle Linien vor hellem Hintergrund |
| Dunkelfeldabbildung | - Papillen erscheinen als helle Linien vor dunklem Hintergrund |
| dreiseitiges Prisma | - Prisma mit kongruenter dreieckiger Grund- und Deckfläche, die parallel zueinander verlaufen und über drei Seitenflächen miteinander verbunden sind |

**Stand der Technik**

Fingerabdrucksensoren, bei denen die Bilderzeugung durch die Erfassung von Helligkeitsdifferenzen infolge von Totalreflexion (total internal reflection, TIR) an Tälern und gestörter Totalreflexion (frustrated total internal reflection, FTIR) an Papillen erfolgt, sind aus dem Stand der Technik bekannt. Sie werden als Hellfeld- oder als Dunkelfeldsensoren ausgeführt.

Beispielhaft seien hier genannt die Schriften EP2562682B1, EP2871593A1, DE202014010426U1 und DE202014105781U1, in welchen Prismen mit dreieckigem Querschnitt als Sensorkörper von Fingerabdrucksensoren verwendet werden. Diese Sensoren sind für die Dunkelfeldmessung ausgelegt. Ihre Anwendung zur Hellfeldmessung wird erwähnt, jedoch nicht näher beschrieben. Ebenfalls bekannt sind Fingerabdrucksensoren mit plattenförmigem Sensorkörper, bei denen LED-Licht über eine Seitenfläche der Platte eingekoppelt und durch TIR im Inneren der Platte gehalten wird. Ein solcher Sensor ist in der WO2015/005959A1 beschrieben.

Ein gemeinsames Merkmal dieser bekannten Lösungen besteht in der Verwendung von Lichtquellen, die divergentes oder sogar diffuses Licht bereitstellen. Dieses Licht erfüllt zwar die Aufgabe, die Auflagefläche des Fingerabdrucksensors gleichmäßig zu beleuchten, es kann wegen seines großen Öffnungswinkels und (im Falle diffusen Lichtes) undefinierten Quellpunktes aber nicht direkt quantitativ analysiert, d. h. für die Gewinnung des Bildes eines Fingerabdrucks genutzt werden.

Für die Gewinnung eines Fingerabdruckbildes steht somit lediglich das an den Papillen einer aufgelegten Fingerbeere gestreute Licht zur Verfügung. Dieses Streulicht entsteht, da an den Berührungslinien der Papillen mit der Auflagefläche der Brechungsindex $n_F$ des menschlichen Gewebes zum Tragen kommt, der gegenüber dem Brechungsindex der in den Tälern zwischen den Papillen befindlichen Luft ($n_L$ = 1) erhöht ist. An den Berührungslinien ist die Bedingung für TIR aufgrund des geänderten Brechungsindexverhältnisses nicht mehr erfüllt, es kommt dort zu FTIR, wobei die Berührungslinien als Quellen für Streulicht wirken. Bei einem Schnitt quer zu den Papillen bilden deren Berührungsstellen mit der Auflagefläche punktförmige Streuzentren, von denen divergentes Streulicht in den Sensorkörper zurückgestrahlt wird und durch eine Linse hinter dem Sensorkörper gesammelt und auf einen Empfänger abgebildet werden kann. Die Intensität dieses Streulichts ist im Vergleich zur eingestrahlten Lichtintensität sehr klein.

Die kleine Lichtintensität begrenzt die Aufnahmegeschwindigkeit des Fingerabdrucksensors, es ist ein hoher Zeitaufwand für die Aufnahme eines Fingerabdruckbildes erforderlich. Insbesondere ist es sehr aufwendig, den Fingerabdrucksensor als "dynamischen" Sensor auszulegen, bei dem der Finger schnell über den Sensor hinweggezogen wird (sogenannte swipe-Sensoren), denn dazu werden schnelle Zeilensensoren, die aus hochempfindlichen Empfangsdioden für sehr geringe Lichtmengen zusammengesetzt sind, benötigt. Die EP2336805B1 schlägt hierzu die Verwendung von Avalanche-Photodioden und pin-Photodioden in Fingerabdrucksensoren vor.

**Aufgabe der Erfindung**

Aufgabe der Erfindung ist es, einen optischen Fingerabdrucksensor bereitzustellen, der Signale mit einer höheren Lichtintensität und optimiertem Kontrast liefert. Insbesondere soll der Fingerabdrucksensor für Massenprodukte, z. B. Smartphones, geeignet sein. Dazu muss der Sensor einen kompakten Aufbau aufweisen, wobei die Form des Sensorkörpers in Abhängigkeit vom Gerätedesign frei wählbar und die Auflagefläche für eine Fingerbeere ergonomisch geformt sein soll. Zum Einsatz in Massenprodukten muss der Sensor außerdem:

- kostengünstig herstellbar sein,
- eine hohe Ortsauflösung im Bereich der Auflagefläche aufweisen ($\leq$ 50 $\mu$m, bevorzugt 10 $\mu$m),
- eine verzerrungsfreie Abbildung gewährleisten,
- eine hohe Fehlersicherheit gewährleisten (1 : 10$^6$ oder besser),
- eine hohe Fälschungssicherheit gewährleisten,
- einen kompakten Aufbau aufweisen,
- in verschiedenartige Geräte integrierbar sein,
- intuitiv zu bedienen sein,
- mit Halbleiterschaltungen kombinierbar sein.

**Lösung der Aufgabe**

Die Aufgabe der Erfindung wird gelöst durch einen optischen Fingerabdrucksensor gemäß Anspruch 1. Der Fingerabdrucksensor umfasst eine Lichtquelle und eine Eingangsoptik, die einen scharf begrenzten und kollimierten Lichtstrahl erzeugen und formen. Der Lichtstrahl kann monochromatisch oder polychromatisch sein oder ein kontinuierliches Spektrum aufweisen.

Außerdem kann er polarisiert, bevorzugt linear polarisiert, sein. Der Fingerabdrucksensor umfasst ferner einen Sensorkörper, der zumindest in den Frequenzbereichen des von der Lichtquelle erzeugten Lichts transparent ist. Die Form des Sensorkörpers ist weitgehend frei wählbar, bevorzugt sind prismenförmige Sensorkörper, insbesondere quaderförmige oder dreiseitige Prismen. Der Sensorkörper weist ferner eine hinreichend große Auflagefläche auf, auf die eine Fingerbeere aufgelegt oder mit direktem Kontakt (berührend) darüber hinweggeführt werden kann. Die Auflagefläche kann ergonomisch geformt sein, d. h. an die Form der Fingerbeere angepasst sein. Der Sensorkörper des Fingerabdrucksensors kann kompakt, d. h. als Vollkörper, ausgeführt sein. Bevorzugt weist der Sensorkörper jedoch einen modularen Aufbau auf, gekennzeichnet durch ebene, parallele Module konstanter Dicke, sogenannte Lichtleiterplatten. Die Lichtleiterplatten stehen vorzugsweise senkrecht zur Auflagefläche, können aber auch leicht gegen die Senkrechte geneigt sein, vorzugsweise bis zu 10°. Die Dicke der Lichtleiterplatten wird entsprechend der gewünschten Ortsauflösung des Fingerabdrucksensors gewählt. Die lateralen Abmessungen der Lichtleiterplatten sind dabei wesentlich größer als die Dicke der Lichtleiterplatte. Jede Lichtleiterplatte wird somit durch zwei parallele Basisflächen mit den lateralen Abmessungen der Lichtleiterplatte und mehreren Seitenflächen in Form schmaler Rechtecke, deren kurze Seite durch die Dicke der Lichtleiterplatte gegeben ist, begrenzt (4 bzw. 3 Seitenflächen bei einem Sensorkörper in Form eines quaderförmigen bzw. dreiseitigen Prismas). Die Lichtleiterplatten sind voneinander durch dünne Grenzschichten an den Basisflächen separiert. Die Separation wird durch in den Grenzschichten angeordnete Aussparungen gewährleistet. Alternativ kann die Separation durch eine Metallisierung der Basisflächen der Lichtleiterplatten erfolgen. Solche metallischen Grenzschichten sind durch Bedampfung, Lackierung, Beschichtung oder Einlegung von Metallfolien (Folierung) herstellbar. Die Dicke der Grenzschichten wird auf wenige Wellenlängen $\lambda$ des Lichts, das vom Sensor genutzt wird, eingestellt. Bevorzugt beträgt die Dicke der Grenzschichten 2 $\lambda$ bis 5 $\lambda$. Wird polychromatisches Licht eingesetzt, so ist für die Bestimmung der Dicke der Grenzschichten die größte enthaltene Wellenlänge zu verwenden. Wird Licht mit einem kontinuierlichen Spektrum verwendet, so ist für die Bestimmung der Dicke der Grenzschichten die Wellenlänge am langwelligen Rand dieses Spektrums zu verwenden.

Die lateralen Abmessungen der Lichtleiterplatten sind weitgehend frei wählbar und können für alle Lichtleiterplatten eines Sensorkörpers identisch sein. Lichtleiterplatten mit rechteckiger, insb. quadratischer, oder dreieckiger Form sind bevorzugt. Passgenau übereinanderliegende rechteckige bzw. quadratische Lichtleiterplatten bilden einen quaderförmigen Sensorkörper. Passgenau übereinanderliegende dreieckige Lichtleiterplatten bilden einen Sensorkörper in Form eines dreiseitigen Prismas. Durch unterschiedliche große Anschnitte der einzelnen Lichtleiterplatten entlang einer Seitenkante oder an einer Ecke können ergonomisch geformte Auflageflächen am Sensorkörper gebildet werden.

Jede Lichtleiterplatte weist an ihren Seitenflächen zumindest in Teilbereichen glatte Oberflächen auf, die zur Einkopplung eines von der Optik gelieferten kollimierten Lichtstrahls und zur Auskopplung eines reflektierten Lichtstrahls und eines gestreuten Lichtstrahls geeignet sind. Diese Bereiche mit glatter Oberfläche werden nachfolgend als Einkoppel- bzw. Auskoppelbereiche bezeichnet. Der kollimierte Lichtstrahl wird anteilig in jede der den Sensorkörper bildenden Lichtleiterplatten eingekoppelt, indem er so gerichtet wird, dass sein Querschnitt senkrecht über die Seitenflächen der nebeneinander angeordneten Lichtleiterplatten verläuft. Durch die Einkopplung in einen Einkoppelbereich einer Seitenfläche jeder Lichtleiterplatte wird gewährleistet, dass der jeweilige Anteil des Lichtstrahls an den Basisflächen der Lichtleiterplatte, die die oben beschriebenen Grenzschichten aufweisen, totalreflektiert wird. Er kann die Lichtleiterplatte somit nicht über eine Basisfläche verlassen und nicht in eine benachbarte Lichtleiterplatte übertreten, sondern wird innerhalb der Lichtleiterplatte gehalten und weitergeleitet.

Jede Lichtleiterplatte weist ferner Strukturen auf, die geeignet sind, einen Lichtstrahl im Inneren der Lichtleiterplatte entlang eines vorgegebenen, in der Regel aus mehreren geradlinigen Abschnitten zusammengesetzten, Strahlengangs zu führen. Zur Umlenkung des Lichtstrahls von einem Abschnitt in den nächsten sind diese Strukturen als reflektierende Umlenkflächen ausgeführt. Bevorzugt sind Ausnehmungen in Form von dreiseitigen oder quaderförmigen Prismen, die so angeordnet sind, dass der Lichtstrahl an einer ebenen Seitenfläche der Ausnehmung totalreflektiert wird.

Der Strahlengang ist so ausgeführt, dass der Lichtstrahl auf die Auflagefläche geführt wird, an welcher unterschiedlich große Anteile des Lichtstrahls durchgelassen werden (also den Sensorkörper verlassen) oder in den Sensorkörper zurückreflektiert oder diffus in den Sensorkörper zurückgestreut werden. Bis zum Auftreffen auf die Auflagefläche wird der Lichtstrahl als Eingangsstrahl bezeichnet, die von der Auflagefläche ausgehenden Anteile des Lichtstrahls werden als transmittierter, reflektierter und gestreuter Ausgangsstrahl bezeichnet.

Zumindest einer der beiden letztgenannten Anteile, d. h. der reflektierte und/oder der gestreute Ausgangsstrahl, wird an einem Auskoppelbereich aus dem Sensorkörper ausgekoppelt und über eine Abbildungsoptik einem bildgebenden Detektor zugeführt und an eine elektronische Verarbeitungseinheit weitergeleitet. In einer vorteilhaften Ausgestaltung der Erfindung werden beide Anteile über eine Optik einem bildgebenden Detektor zugeführt und an eine elektronische Verarbeitungseinheit weitergeleitet. Dadurch ist es möglich, zwei getrennte Signale mit komplementärem Informationsgehalt separat auszuwerten. Messfehler bei der Signalerfassung, die zu widersprüchlichen Bildinformationen führen, können so zuverlässig erkannt werden.

Bei der Ein- und Auskopplung werden der Eingangsstrahl und der reflektierte bzw. gestreute Ausgangsstrahl vorzugsweise senkrecht auf den Einkoppel- bzw. Auskoppelbereich gelenkt.

Der optische Fingerabdrucksensor nutzt die unterschiedlichen Brechungsindizes des Sensorkörpers, des Mediums im Außenraum des Sensorkörpers und des menschlichen Gewebes sowie die Lichtstreuung im menschlichen Gewebe aus. Das Medium im zum Sensorkörper benachbarten Außenraum ist in der Regel Luft mit einem Brechungsindex $n_L = 1$, während der Brechungsindex des menschlichen Gewebes, im vorliegenden Fall einer Papille, $n_F \approx 1,4$ beträgt. Für den Sensorkörper wird ein Material gewählt, dessen Brechungsindex ns größer als $n_F$ ist. Das Snellius'sche Brechungsgesetz lautet in diesem Fall $1/n_S = \sin$ as$/\sin \alpha_L$ (für den Übergang an der Grenzfläche zwischen Sensorkörper und Außenraum (Luft)) bzw. $n_F/n_S = \sin$ as$/\sin \alpha_F$ (für den Übergang an der Grenzfläche zwischen Sensorkörper und einer aufliegenden Papille). Dabei sind $\alpha_L$, $\alpha_F$ und $\alpha_S$ die Winkel zwischen dem Strahl im jeweiligen Medium und dem Lot auf die Grenzfläche. Der Grenzwinkel der Totalreflexion beträgt beim Übergang Sensorkörper-Luft ($\alpha_L = 90°$) somit $\alpha_{SL} = \arcsin (1/n_S)$, beim Übergang Sensorkörper-Papille eines Fingerabdrucks ($\alpha_F = 90°$) hingegen $\alpha_{SF} = \arcsin (n_F/n_S)$, wobei $\alpha_{SL} < \alpha_{SF}$ ist. Wird der kollimierte Eingangsstrahl im Sensorkörper unter einem Einfallswinkel $\alpha_E$, der zwischen $\alpha_{SL}$ und $\alpha_{SF}$ liegt ($\alpha_{SL} < \alpha_E < \alpha_{SF}$), auf die Auflagefläche geleitet, so erfolgt in den Bereichen mit Luftkontakt (d. h. den Tälern zwischen den Papillen) Totalreflexion, während in den Bereichen mit Kontakt zu einer Papille eine Streuung infolge gestörter Totalreflexion erfolgt, wobei die Papillen als Streulinien wirken, die durch den modularen Aufbau des Sensorkörpers, d. h. den Aufbau aus einzelnen Lichtleiterplatten, in (nahezu) punktförmige Streuzentren zerlegt werden. Sowohl der totalreflektierte als auch der diffus gestreute Ausgangsstrahl bewegen sich, ausgehend von der Auflagefläche, anteilig in den einzelnen Lichtleiterplatten und schreiten innerhalb derselben fort. Die Strahlanteile können die Lichtleiterplatten nicht über eine Basisfläche verlassen, da dort aufgrund ihres flachen Einfallswinkels Totalreflexion erfolgt. Ihre Auskopplung erfolgt über eine Seitenfläche der Lichtleiterplatten.

Der von der Gesamtheit der (nahezu) punktförmigen Streuzentren ausgehende gestreute Ausgangsstrahl wird aus dem Sensorkörper ausgekoppelt und mittels einer ersten Abbildungsoptik auf einen ersten bildgebenden Detektor geleitet. Dieser registriert ein Bild des Fingerabdrucks, in welchem die Papillen als helle Linien vor dunklem Hintergrund erscheinen. Es entsteht somit eine Dunkelfeldabbildung.

Da ein kollimierter Eingangsstrahl verwendet wird, ist auch der totalreflektierte Ausgangsstrahl kollimiert und zur Gewinnung eines Bildes des Fingerabdrucks geeignet. Dazu wird er aus dem Sensorkörper ausgekoppelt und mittels einer zweiten Abbildungsoptik auf einen zweiten bildgebenden Detektor geleitet. In dem so erhaltenen Bild erscheinen die Bereiche zwischen den Papillen, d. h. die Täler, mit maximaler Helligkeit, da dort Totalreflexion erfolgt. Die Papillen erscheinen dunkler, da in ihren Bereichen gestörte Totalreflexion vorliegt und die Intensität um die in den gestreuten Ausgangsstrahl übertragene Intensität vermindert ist. Die Papillen erscheinen somit als dunkle Linien vor hellem Hintergrund. Es entsteht somit eine Hellfeldabbildung.

Der Fingerabdrucksensor kann als Flächensensor ausgeführt sein. Ein solcher Flächensensor weist einen Sensorkörper mit einer Auflagefläche auf, die die Größe des abzubildenden Objekts oder zumindest eines für die Detektion ausreichenden Teils derselben hat. Im vorliegenden Fall eines Fingerabdrucksensors sollte die Auflagefläche als Quadrat mit der Seitenlänge 25 mm ausgeführt sein, entsprechend der Größe einer Fingerbeere. Auch eine kleinere Auflagefläche, die zur Detektion des zentralen Bereichs einer Fingerbeere ausreicht, kann verwendet werden, wenn eine geringfügig erhöhte Fehlerrate akzeptiert wird. Jedoch sollten die Abmessungen dieser Auflagefläche 12,5 mm nicht unterschreiten. Neben Fingerabdrucksensoren können auch Handflächensensoren mit dem oben beschriebenen modularen Sensorkörper ausgestattet werden, wobei die Auflagefläche die Fläche einer ganzen Hand oder sogar von zwei Händen haben kann.

Die Auflagefläche kann ergonomisch geformt sein. Der Querschnitt des kollimierten Eingangsstrahls wird so gewählt, dass die gesamte Auflagefläche bestrahlt wird und somit als sensorisch aktiver Bereich wirkt. In der oben beschriebenen Weise werden ein an den Papillen gestreuter Ausgangsstrahl (ein Dunkelfeldsignal) über eine erste Abbildungsoptik einem ersten flächenhaften Detektor und ein im Bereich der Täler zwischen den Papillen totalreflektierter Ausgangsstrahl (ein Hellfeldsignal) einem zweiten flächenhaften Detektor zugeführt. Somit wird zu einem gegebenen Zeitpunkt das Bild einer gesamten Fingerbeere aufgenommen, es erfolgt also eine parallele Bilderfassung. Dabei werden eine Dunkelfeld- und eine Hellfeldabbildung kombiniert. Als Flächendetektoren sind z. B. CCD-Detektoren (CCD = charge-coupled device) verwendbar. Ein solcher Fingerabdrucksensor ist für alle Anwendungen geeignet, bei denen die Abmessungen des Sensors keine Rolle spielen, also beliebig große Sensoren zulässig sind, z. B. bei ortsfesten Tresoren.

Viele Anwendungen, insbesondere in der Consumer-Elektronik, erfordern jedoch kompakte Fingerabdrucksensoren, bei denen eine Abmessung der Auflagefläche minimiert ist, d. h. den Übergang von einem Flächensensor zu einem Zeilensensor. Vorzugsweise entspricht die Breite der Auflagefläche eines Zeilensensors weiterhin der Breite des abzubildenden Objekts, im vorliegenden Fall also einer Fingerbeere, während die Höhe der Auflagefläche reduziert wird. Beispielsweise kann der Fingerabdrucksensor an einer Kante eines Mobilgeräts positioniert werden, wobei diese Kante mit einer ergonomisch geformten, muldenartigen Auflagefläche versehen werden kann, deren Höhe in der Mitte der Mulde wenige Millimeter beträgt und an den Rändern der Mulde auf wenige Vielfache der gewünschten Ortsauflösung reduziert wird.

Bevorzugt wird eine Zweierpotenz gewählt, sodass die Höhe z. B. dem 8-, 4-, 2-fachen der Ortsauflösung oder genau der Ortsauflösung entspricht. Der Strahlengang im Sensorkörper wird dabei so ausgeführt, dass nicht die gesamte Auflagefläche, sondern lediglich ein ebener zeilenförmiger Bereich mit der bevorzugten Breite einer Fingerbeere und der gewählten Höhe (d. h. der Ortsauflösung oder eines Mehrfachen davon) bestrahlt wird. Der bestrahlte Bereich wird als sensorisch aktiver Bereich bezeichnet. Zu einem gegebenen Zeitpunkt erfasst ein solcher Zeilensensor daher nur einen schmalen streifenförmigen Abschnitt eines Fingerabdrucks. Um den kompletten Fingerabdruck zu erfassen, wird der Zeilensensor mit schnellen, zeitauflösenden Detektoren und einer schnellen Auswerteelektronik ausgestattet, die es erlauben, das Bild des gesamten Fingerabdrucks aus einzelnen, nacheinander aufgenommenen Bildern streifenförmiger Abschnitte des Fingerabdrucks zusammenzusetzen, es erfolgt also eine serielle Bilderfassung. Die Detektoren sind als Zeilendetektoren ausgeführt, wobei die Anzahl ihrer Zeilen dem gewählten Vielfachen der Ortsauflösung im sensorisch aktiven Bereich der Auflagefläche entspricht. Besonders vorteilhaft ist ein Fingerabdrucksensor mit einem schmalen linearen Messbereich in der Auflagefläche, dessen Signale auf zwei Zeilendetektoren mit jeweils mindestens einer Zeile übertragen werden, wobei der erste Zeilendetektor den gestreuten Ausgangsstrahl (ein Dunkelfeldsignal), der zweite Zeilendetektor den totalreflektierten Ausgangsstrahl (ein Hellfeldsignal) registriert. Es werden also wiederum eine Dunkelfeld- und eine Hellfeldabbildung kombiniert. Die Fingerbeere selbst wird während der Messung berührend über die Kante mit dem Zeilensensor hinweggeführt. Aufgrund dieser Bewegung werden solche Fingerabdrucksensoren als swipe-Sensoren bezeichnet.

Da ein kollimierter Eingangsstrahl auf einen ebenen sensorisch aktiven Bereich geführt wird, werden im Falle von Totalreflexion die Strahleigenschaften des Eingangsstrahls auf den Ausgangsstrahl übertragen. Der totalreflektierte Ausgangsstrahl trifft also als kollimierter Strahl auf den zweiten Zeilendetektor, wobei die Ortsauflösung durch die Pixelgröße des zweiten Zeilendetektors bestimmt wird. Detektoren mit Pixelgrößen von 10 $\mu$m sind Stand der Technik und kostengünstig verfügbar. Die Ortsauflösung ist somit nicht durch die Dicke der Lichtleiterplatten beschränkt, sondern kann diese unterschreiten.

Bei Fingerabdrucksensoren ist das angloamerikanische Maßsystem üblich. Gefordert wird eine Breite der Auflagefläche von 1 inch (2,54 cm), die somit etwas größer ist als die Breite eines Fingers eines Erwachsenen). Für Anwendungen in weniger sensiblen Bereichen genügen auch Breiten von 0,5 inch (1,27 cm), also Auflageflächen zur Aufnahme lediglich eines Streifens im mittleren Bereich eines Fingerabdrucks. Bei Anwendung des SI-Systems werden diese Angaben praktischerweise auf 2,5 cm bzw. 1,25 cm gerundet. Die erforderliche laterale Ortsauflösung resultiert aus den charakteristischen Fingerabdruckstrukturen. Aus H. Cummings, C. Midlo: "Finger prints, palms and soles" (1943) ist bekannt, dass die typische Papillenbreite (Abstand von Tal zu Tal) bei jungen erwachsenen Männern ca. 480 $\mu$m, bei jungen erwachsenen Frauen ca. 430 $\mu$m beträgt. Weniger als 1 % der Bevölkerung haben Papillenbreiten < 360 $\mu$m. Daraus ergibt sich, dass eine Ortsauflösung von 50 $\mu$m, also etwa eine Größenordnung kleiner als die Papillenbreite, für einen Fingerabdrucksensor ausreicht. Zur Detektion der Fingerabdruckstrukturen entlang einer Linie quer über eine aufgelegte Fingerbeere sind somit auf der Auflagefläche Messflecken der Abmessung 50 $\mu$m x 50 $\mu$m erforderlich, die unmittelbar benachbart zueinander entlang einer Linie angeordnet sind und eine Messzeile bilden. Bei einer 2,5 cm breiten Auflagefläche weist eine Messzeile somit 500 Messflecken auf. Von dieser Messzeile werden, analog wie oben für Flächendetektoren beschrieben, ein gestreutes Signal auf mindestens eine Detektorzeile eines ersten Zeilendetektors und ein totalreflektiertes Signal auf mindestens eine Detektorzeile eines zweiten Zeilendetektors geführt. Anstelle einer geradlinigen Messzeile ist auch ein kreislinienförmiger Messbereich möglich. Ferner können eine geradlinige Messzeile und ein kreislinienförmiger Messbereich kombiniert werden.

Sollen zur Verbesserung der Zuverlässigkeit des Fingerabdrucksensors auch Poren, die kleiner als die Papillenbreite sind, erfasst werden, so muss die Ortsauflösung auf 25 $\mu$m, bevorzugt auf 10 $\mu$m, verbessert werden. Dazu ist die Dicke der Lichtleiterplatten entsprechend auf 25 $\mu$m bzw. 10 $\mu$m zu verringern. Auch bei Fingerabdrucksensoren für Kinder sollte die Ortsauflösung zumindest auf 25 $\mu$m verbessert werden, da ihr Fingerabdruck eine geringere Papillenbreite aufweist als bei Erwachsenen. Die so verbesserte Ortsauflösung erhöht die Zuverlässigkeit der Erkennung des Fingerabdrucks.

Ein Zeilendetektor mit genau einer Detektorzeile ist, wenn er mit einer hinreichend schnellen Ausleseelektronik verbunden ist, bereits in der Lage, das Bild einer über die Messzeile hinweggeführten Fingerbeere zu registrieren. Er kann jedoch die Bewegungsrichtung und -geschwindigkeit und insbesondere Änderungen der Bewegungsgeschwindigkeit der Fingerbeere nicht hinreichend genau erfassen. Somit ist das von einem solchen einzeiligen Sensor registrierte Bild eines Fingerabdrucks mit hoher Wahrscheinlichkeit durch Geschwindigkeitsänderungen verzerrt.

Um die Geschwindigkeit einer über die Auflagefläche bewegten Fingerbeere zu bestimmen und somit ein verzerrungsfreies Bild des Fingerabdrucks zu gewinnen, sind Zeilendetektoren mit mindestens zwei Detektorzeilen erforderlich, die die Signale von einem sensorisch aktiven Bereich mit mindestens zwei Messzeilen registrieren. Mit steigender Anzahl der Detektor- und Messzeilen kann die Häufigkeit von Messfehlern verringert werden, jedoch erhöhen sich die Kosten des Sensors. Zeilendetektoren mit 4 oder 8 Detektorzeilen bilden hier einen geeigneten Kompromiss, denn sie ermöglichen die Gewinnung eines hinreichend fehlerfreien Bildes eines Fingerabdrucks zu vertretbaren Kosten. Geeignete Zeilendetektoren sind CIS-Detektoren (CIS = Contact Image Sensor), TFT-Detektoren (TFT = Thin-Film Transistor), CCD-Detektoren und CMOS-Photodiodenarrays. Diese Aufzählung ist nicht abschließend. Die Pixelgröße der Detektoren ist entsprechend der Auflösung zu wählen, wobei ggf. der Projektionswinkel zu berücksichtigen ist. Erfolgt z. B. die Totalreflexion an der Auflagefläche unter einem Winkel von 45° und wird der totalreflektierte Strahl auf einen zu ihm senkrecht stehenden Zeilendetektor geführt, so ist eine um den Faktor $1 / \sqrt{2} \approx 0{,}7$ verringerte Pixelhöhe von $\approx$ 35 $\mu$m erforderlich, während die Pixelbreite 50 $\mu$m unverändert bleibt.

Eine Kombination von Flächensensor und Zeilensensor in einem Fingerabdrucksensor ist möglich. Dazu wird beispielsweise die Auflagefläche so groß ausgeführt wie beim Flächensensor. Die Auflagefläche kann somit die Größe einer Fingerbeere oder eines Teils der Fingerbeere haben. Es wird jedoch, wie beim Zeilensensor, nur ein schmaler streifenförmiger Abschnitt der Auflagefläche mit einem Eingangsstrahl beleuchtet. Die von diesem Abschnitt ausgehenden Signale (gestreuter und totalreflektierter Ausgangsstrahl) werden zwei Zeilendetektoren zugeführt. Als Zeilendetektoren sind z. B. CCD-Zeilendetektoren geeignet.

Bei allen Ausführungsformen kann der Sensorkörper kompakt ausgeführt sein. Bevorzugt wird er jedoch modular ausgeführt, also aus einzelnen Lichtleiterplatten in der oben beschriebenen Weise.

Es ist selbstverständlich möglich, auf einen der Flächen- bzw. Zeilendetektoren zu verzichten und somit nur eines der beiden Signale (den gestreuten oder den totalreflektierten Ausgangsstrahl) zu registrieren und auszuwerten.

Ferner wird die Aufgabe der Erfindung gelöst durch die Angabe eines Verfahrens zur Herstellung des Sensorkörpers. Das Verfahren umfasst insbesondere folgende Schritte: a) Bereitstellung einzelner Lichtleiterplatten in der erforderlichen Anzahl, b) Herstellung der äußeren Kontur jeder einzelnen Lichtleiterplatte durch Laserschneiden oder mechanisches Stanzen, c) Herstellung der reflektierenden Flächen im Inneren der Lichtleiterplatte durch Laserschneiden oder mechanisches Ausstanzen der erforderlichen prismenförmigen Ausnehmungen.

Das Verfahren zeichnet sich durch eine besondere Freiheit der Formgestaltung des Sensorkörpers aus. Die geeigneten Materialien für das Verfahren und das Verfahren selbst werden im folgenden Abschnitt beschrieben.

## Detaillierte Beschreibung der zur Lösung der Aufgabe benötigten Komponenten

Nachfolgend werden die Komponenten des erfindungsgemäßen Fingerabdrucksensors, ihre Funktionsweise und ihr Zusammenwirken detailliert beschrieben.

## Sensorkörper

Es ist vorgesehen, den Fingerabdrucksensor in den als geeignet bekannten Wellenlängenbereichen zu betreiben. Das sind die Bereiche des sichtbaren und des infraroten Lichts, insbesondere das nahe Infrarot (NIR). Als Lichtquelle geeignet sind handelsübliche leistungsarme SMD-LEDs, bei Einsatz derselben eine Blendung im Falle der Verwendung von sichtbarem Licht leicht vermieden werden kann. Das Licht kann auch gepulst sein, wodurch eine geringere Bewegungsunschärfe realisiert wird. Ferner ist vorgesehen, den Sensorkörper wahlweise kompakt oder modular auszuführen, wobei der modulare Aufbau durch eine Stapelung von dünnen Platten bzw. Folien (Lichtleiterplatten) realisiert wird. Das Material für den Sensorkörper muss somit in den genannten Wellenlängenbereichen transparent sein und in kompakter Form oder in Platten- bzw. Folienform verfügbar sein. Die Dicke der Platten bzw. Folien muss der gewünschten Ortsauflösung des Sensors entsprechen oder darunter liegen. Es wird die bei bekannten Sensoren als ausreichend betrachtete Auflösung von 500 ppi (pixels per inch) angestrebt, woraus eine Obergrenze der Platten-/Foliendicke von 50 $\mu$m resultiert.

Unter Berücksichtigung dieser Anforderungen sind folgende Materialien zur Fertigung des Sensorkörpers geeignet:

Für einen kompakten Sensorkörper:

(1) Mineralisches Glas und organisches Glas als Vollmaterial. Beide Materialien sind kostengünstig und in hoher optischer Qualität (hohe Transparenz) verfügbar. Bevorzugt sind silicatisches Glas und Acrylglas (Plexiglas, PMMA) sowie der glasklare Kunststoff Polycarbonat.

(2) 3D-Druck-fähige Kunststoffe mit hoher Transparenz. Abhängig vom Druckverfahren sind thermoplastische oder flüssige Materialien einsetzbar. Folgende Druckverfahren sind geeignet: a) additiver Auftrag thermoplastischen Materials oder b) Aushärtung eines flüssigen Basismaterials durch Belichtung mit einem Laser.

Für einen modular (aus Lichtleiterplatten) aufzubauenden Sensorkörper:

(3) Glasfolien hoher optischer Qualität. Solche Folien (Dünnglas, ultra-thin glass, UTG) wurden von der SCHOTT AG, Mainz, auf den Markt gebracht. Sie sind in Dicken von 25 $\mu$m bis 210 $\mu$m verfügbar. Für die modulare Ausführung des Sensorkörpers sind Folien der Dicke 50 $\mu$m zu bevorzugen. Sie erlauben die Herstellung eines kostengünstigen Fingerabdrucksensors. Für höchstauflösende Sensoren (laterale Auflösung 25 $\mu$m, entsprechend 1000 ppi), die auch Hautporen im Fingerabdruckmuster abbilden können, sind Folien der minimalen Dicke, zurzeit 25 $\mu$m, erforderlich.

(4) Kunststofffolien hoher optischer Qualität. Alle Materialien mit hoher Transparenz sind geeignet. Besonders geeignet sind Polycarbonatfolien, z. B. Makrofol®, und Plexiglasfolien. Die EVONIK PERFORMANCE MATERIALS GMBH, Acrylic Products, Weiterstadt, stellt für Lichtleitung geeignete Plexiglasfolien bereit. Diese Folien sind mit einer minimalen Dicke von 50 $\mu$m und glänzender Oberfläche verfügbar.

Es ist vorteilhaft, die als Lichtleiterplatten dienenden Glasfolien und Kunststofffolien mit einem Material zu beschichten, dessen Brechungsindex niedriger ist als der Brechungsindex der jeweiligen Folie. Eine solche Schicht kann alternativ zu den bereits genannten Lösungen als Grenzschicht zwischen den Modulen fungieren. Geeignet ist eine Beschichtung aus Polyvinylidenfluorid (PVDF, Brechungsindex n=1,42) auf Plexiglas-Folien (PMMA, Brechungsindex n=1,49). Bei dieser Kombination ergibt sich ein Grenzwinkel der Totalreflexion: arcsin (1,42/1,49) = 72°. Wird ein Lichtstrahl über eine Seitenkante einer Plexiglas-Folie in diese eingekoppelt, so lässt sich sein Einfallswinkel $\alpha_1$ auf eine Basisfläche der Folie problemlos auf einen Wert 72° < $\alpha_1$ < 90° einstellen, sodass die Bedingung für Totalreflexion erfüllt ist und die Folie als (flächenhafter) Lichtleiter für diesen Lichtstrahl wirkt. Solche Folien werden unter dem Markennamen EUROPLEX® von der Evonik Röhm GmbH, Darmstadt, angeboten (https://www.plexiglas-shop.com/pdfs/de/Folien.pdf, abgerufen am 16.01.2018). Die Dicke der PVDF-Schicht ist, wie bereits erläutert, auf wenige Wellenlängen $\lambda$ des eingekoppelten Lichts, bevorzugt auf 2 $\lambda$ bis 5 $\lambda$, einzustellen.

Eine weitere Möglichkeit, die Grenzschicht zwischen den Modulen auszuführen, ist das Aufbringen eines niedrigbrechenden optischen Klebers auf die Lichtleiterplatten, der nach Aushärtung als Grenzschicht dient. Geeignet sind z. B. Kleber der Firma Polytec PT, Karlsbad, insbesondere Kleber aus der Serie MY-130 (mit Brechungsindizes n = 1,32...1,39) sowie Kleber aus der Serie MY-140 (mit Brechungsindizes n = 1,40...1,47), siehe: http://www.polytec-pt.com/de/produkte/klebstoffe-mit-extrem-niedrigem-brechungsindex-bis-n132/, abgerufen am 16.01.2018. Es ist bekannt, dass solche Kleber bei der Aushärtung einen typischen Schrumpf von 5 % aufweisen (https://www.izm.fraunhofer.de/de/abteilungen/system_integrationinterconnectiontechnologi es/leistungsangebot/technologieberatungmachbarkeitsstudien/klebstoffschrumpf.html, abgerufen am 16.01.2018). Der Kleber ist daher mit einer um 5 % erhöhten Schichtdicke aufzubringen, um nach dem Aushärten die o. g. gewünschte Schichtdicke exakt zu erhalten. In den meisten Anwendungsfällen kann der Schrumpf vernachlässigt werden. Werden Plexiglasfolien als Lichtleiterplatten verwendet, so kann Licht des Wellenlängenbereichs 380 nm bis 400 nm, in welchem die Transmission von Plexiglas abrupt ansteigt, zur Aushärtung des Klebers genutzt werden. Wird UTG verwendet, so kann wegen seines zu kürzeren Wellenlängen ausgedehnten Transparenzbereichs UV-Licht des Wellenlängenbereichs 300 nm bis 400 nm zur Aushärtung des Klebers genutzt werden.

**Lichtquelle und Kollimator**

Die Lichtquelle mit nachfolgendem Kollimator muss gewährleisten, dass der aus passgenau übereinanderliegenden Lichtleiterplatten bestehende Sensorkörper der bevorzugten Breite 25,4 mm (1 inch) mit einem kollimierten Lichtstrahl, dem Eingangsstrahl, der einen rechteckigen, senkrecht zur Ebene der Lichtleiterplatten verlaufenden Querschnitt aufweist, beaufschlagt wird, wobei auf der Auflagefläche des Sensors ein ca. 0,2 mm breiter Bereich, geeignet für einen 4-Zeilen-Detektor, zu bestrahlen ist. Bei einem Einfallswinkel von 45° wird ein Strahl der Höhe 0,2 mm/V2 ≈ 0,14 mm für die Bestrahlung dieses Bereichs benötigt. Somit ergibt sich ein bevorzugter linienförmiger Strahlquerschnitt der Abmessung 25,4 mm x 0,14 mm. Anwendungsspezifische Anpassungen dieser Größen sind für den Fachmann leicht möglich.

Um einen Lichtstrahl mit linienförmigem Strahlquerschnitt und den gewünschten Parametern zu erzeugen, werden folgende Lösungen vorgeschlagen:

*Leuchtdiode (light emitting device, LED) mit Zylinderlinse*

Eine erste Lösung wird von der Firma DoroTEK, Strausberg, bereitgestellt (http://www.dorotek.de/cms/upload/pdf/optik/deutsch/2-LINSEN.pdf, Punkt 2.2, abgerufen am 16.01.2018): Das von der Leuchtdiode emittierte Lichtbündel wird auf eine als Kollimator dienende plankonvexe Zylinderlinse fokussiert, die das Lichtbündel linienförmig auf den Sensorkörper abbildet.

Eine weitere Lösung der Firma Coherent (Dieburg, Göttingen), beschrieben unter http://www.coherent.de/fileadmin/redakteur/Presse/Publikationen/PHO 022014 Coherent.pdf, basiert auf refraktiven asphärischen Liniengeneratoren, welche ein homogenes zylindrisches Profil erzeugen, indem die optische Funktion einer asphärischen Zylinderlinse und eines giebelförmigen Prismas vereint wird.

Es können zwei oder mehrere derartige Baugruppen, bestehend aus einer LED und einer Zylinderlinse, zu einer Diodenzeile kombiniert werden, indem sie nebeneinander angeordnet werden. Dadurch kann die Fokuslinie auf die jeweils erforderliche Länge verlängert werden.

In einer vorteilhaften Weiterbildung der Erfindung werden die Konturen der Zylinderlinsen in den Sensorkörper geschnitten, die Zylinderlinsen somit in den Sensorkörper integriert.

Die Kollimierung des Eingangsstrahls kann auch durch eine trichterförmige Verengung des Lichtleiters bewirkt werden, in diesem Fall ist keine Linse erforderlich.

*Gedruckte OLED-Zeile (OLED = organic LED)*

Erst seit kurzer Zeit (weniger als 5 Jahre) sind druckfähige OLED-Materialien auf dem Markt verfügbar, die eine besonders elegante Lösung für die linienförmige Beleuchtung des Sensorkörpers ermöglichen.

Es wird mittels aus dem Stand der Technik bekannter Drucktechnik eine OLED-Zeile gefertigt, die den Abmessungen der erforderlichen Fokuslinie entspricht. Beim Druck des OLED-Materials ist eine Genauigkeit ≤ 1 μm erreichbar. Da die so gedruckte OLED-Zeile unmittelbar die gewünschte Fokuslinie emittiert, ist es möglich, auf eine nachgeschaltete Zylinderlinse zu verzichten. Optional kann die Zylinderlinse jedoch eingesetzt werden, um die von der OLED-Zeile emittierte Fokuslinie zu optimieren.

In einer vorteilhaften Weiterbildung der Erfindung wird die OLED-Zeile direkt auf den Sensorkörper gedruckt.

Alternativ kann eine Flächen-OLED zum Einsatz kommen, wenn als Sensor ein Dioden-Array verwendet wird. Eine Aufteilung in Zeilen und/oder einzelne OLED-Punkte kann aus Energiespargründen sinnvoll sein. Beispielsweise kann eine Aufweckfunktion (Aktivierung des Sensors aus einem Ruhezustand) an einen einzelnen OLED-Punkt gebunden werden. Nur dieser eine OLED-Punkt muss im Ruhezustand mit Energie versorgt werden.

Die zur Durchführung des Druckverfahrens notwendigen Informationen sind dem Fachmann bekannt. Sie sind z. B. den Abschlussberichten zum Forschungsprojekt "Neue Materialien für OLEDs aus Lösung" (NEMO), veröffentlicht am 17.10.2012, zu entnehmen, abzurufen unter: https://www.tib.eu/de/suchen/id/TIBKAT%3A777400308/Abschlussbericht-des-BMBF-Verbundprojektes-NEMO/, dort insb. der Schlussbericht für das Teilvorhaben "Optoelektronische Kenngrößen und Degradationsprozesse", S. 8-9.

Geeignete Flächen-OLEDs (Mikrodisplays, basierend auf der OLED-auf-Silizium-Technologie) wurden außerdem im Jahr 2017 vom Fraunhofer-Institut FEP vorgestellt: https://www.fep.fraunhofer.de/de/press media/09 2017.html.

Besonders geeignet zur Beleuchtung der Lichtleiterplatten des Fingerabdrucksensors mittels einer gedruckten OLED-Zeile ist die Produktlinie livilux® der Firma Merck KGaA, Darmstadt. Andere Produktlinien sind ebenfalls einsetzbar.

Selbstverständlich können auch OLED-Zeilen verwendet werden, die durch Aufdampfen gefertigt wurden. Gedruckte OLED-Zeilen sind aber bevorzugt, da sie neben dem bereits genannten hochgenauen Druck weitere Vorteile aufweisen: Der Druck erfolgt bei Raumtemperatur und unter Normaldruck, woraus geringere Herstellkosten und eine höhere Materialeffizienz resultieren. Zudem wird bei diesem Verfahren Material nur dort abgeschieden, wo auch tatsächlich Dioden entstehen - es ist also ressourcenschonend und erlaubt eine passgenaue Fertigung. Die OLED-Zeile kann in einem Arbeitsgang gefertigt werden.

Für die Fertigung aller beschriebenen Komponenten, insbesondere der Lichtleiterplatten, werden nur kleine Reinräume benötigt.

### Detektoren und Auswerteelektronik

Beide Ausführungen des Fingerabdrucksensors (Ausführung mit mindestens einem Flächendetektor für die parallele Aufnahme einer statisch auf die Auflagefläche aufgelegten Fingerbeere sowie Ausführung mit mindestens einem Zeilendetektor für die serielle Aufnahme einer berührend über einen linienartigen sensorisch aktiven Bereich hinweggeführten Fingerbeere) müssen eine Echtzeit-Aufnahme und -Auswertung des Fingerabdrucks gewährleisten.

Im Fall des Flächendetektors kann davon ausgegangen werden, dass die Fingerbeere einige Zehntelsekunden auf der Messfläche aufliegt. In diesem Zeitraum trifft das von der Auflagefläche ausgehende mindestens eine Signal auf den mindestens einen Flächendetektor. Die aus dem Stand der Technik bekannten Flächendetektoren weisen eine wesentlich kürzere Bildaufnahme- und -verarbeitungszeit auf, sodass deren Auswahl unkritisch ist.

Zur Auswahl eines geeigneten Zeilendetektors (Zeilenkamera) ist die erforderliche Zeilenwiederholfrequenz vorab zu bestimmen. Das wird nachfolgend an einem Beispiel mit typischen Parametern erläutert.

Gegeben seien die Objektbreite $B_F$ = 25 mm (entsprechend der Breite eines Fingers), die Objektgeschwindigkeit $v_F$ = 0,03 m/s und die geforderte Auflösung (Pixelabmessung) $D_x$ = 0,05 mm / Pixel. Die Objektgeschwindigkeit $v_F$, d. h. die Geschwindigkeit, mit der ein Anwender seinen Finger berührend über die Messzeile führt, wurde aus Tests bestimmt.

Die für eine Auflösung von 50 $\mu$m benötigte Anzahl $N_P$ der Pixel in einer Detektorzeile beträgt somit

$$N_P = B_F / D_x = 500$$

In der Praxis üblich sind aber bereits Modelle mit 2048 Pixeln je Zeile (2k-Zeilen). Wird die Objektbreite $B_F$ = 25 mm auf die 2k-Zeile abgebildet, so erfasst ein Pixel 12,5 $\mu$m im Objekt, entsprechend der horizontalen Auflösung. Sollen horizontale Auflösung $D_x$ (Pixelabmessung in $x$-Richtung) und vertikale Auflösung $D_y$ (Pixelabmessung in $y$-Richtung) gleich sein (Ratio 1:1), so ergeben sich die Zeit $T_Z$ für die Erfassung einer Zeile und die benötigte Zeilenwiederholfrequenz $f_Z$ = 1/$T_Z$ bei Nennbetrieb wie folgt:

$$T_Z = D_y / v_F \text{ und } f_Z = v_F / D_y$$

Mit der gewählten Auflösung $D_x = D_y$ = 12,5 $\mu$m ergibt sich somit:

$$f_Z = 0{,}033 \text{ m} \cdot \text{s}^{-1} / 12{,}5 \cdot 10^{-6} \text{ m} = 2640 \text{ s}^{-1} = 2640 \text{ Hz}$$

Die Zeilenkamera ist somit für eine Zeilenwiederholfrequenz von mindestens 2,64 kHz auszulegen.

Wird die ermittelte Mindestauflösung von 50 $\mu$m gewählt, die durch eine 0,5k-Zeile mit 512 Pixeln zu gewährleisten ist, so genügt eine Zeilenwiederholfrequenz $f_Z$ = 660 Hz.

Die Anzahl der Zeilen beträgt, wie oben erläutert, vorzugsweise 4 oder 8. Sie werden parallel ausgelesen und parallel elektronisch verarbeitet.

### Kurze Beschreibung der Zeichnungen

Fig. 1 - Sensorkörper in Form eines dreiseitigen Prismas

Fig. 2 - Einzelne Module (Lichtleiterplatten), die zu einem Sensorkörper verbindbar sind

Fig. 3 - Modul (Lichtleiterplatte) mit reflektierender Beschichtung

Fig. 4 - Modul (Lichtleiterplatte) mit flächiger Aussparung

Fig. 5a - Modul (Lichtleiterplatte) mit verkleinerter flächiger Aussparung

Fig. 5b - Modul (Lichtleiterplatte) mit eng beabstandeten kanalförmigen Aussparungen

Fig. 5c - Sensorkörper, bestehend aus Modulen gemäß Fig. 5b

Fig. 6a - Strahlführung für einen Flächendetektor

Fig. 6b - Strahlführung für einen Zeilendetektor

Fig. 7 - Strahlführung in einem Rechteckprisma (Ein- und Auskopplung über Seitenflächen)

Fig. 8 - Strahlführung in einem Rechteckprisma (Ein- und Auskopplung über die Unterseite)

Fig. 9 - Schematische Darstellung einer Lichtleiterplatte und des in ihr realisierten Strahlengangs mit mehrfacher Strahlumlenkung durch prismenförmige Ausnehmungen

Fig. 10a - Äußere Form eines Sensorkörpers eines Fingerabdrucksensors mit einer ergonomisch günstigen muldenförmigen Auflagefläche

Fig. 10b - Draufsicht auf einen modular aufgebauten Fingerabdrucksensor mit einem geradlinigen und einem kreisringförmigen Messbereich

Fig. 11 - Schnitt durch einen ergonomisch geformten Fingerabdrucksensor und Strahlengang in zwei unterschiedlich positionierten Lichtleiterplatten

Fig. 12 - Veranschaulichung der Entstehung eines Dunkelfeldsignals

Fig. 13 - Ausführungsform einer Lichtleiterplatte zur Gewinnung eines Dunkelfeldsignals

Fig. 14 - Alternative Ausführungsform einer Lichtleiterplatte zur Gewinnung eines Dunkelfeldsignals

Fig. 15 - Strahlengang in einem Kombinations-Fingerabdrucksensor zur simultanen Aufnahme einer Hellfeld- und einer Dunkelfeldabbildung eines Fingerabdrucks, überlagert in einem Ausgangsstrahl

Fig. 16 - Modifizierter Strahlengang in einem Kombinations-Fingerabdrucksensor zur simultanen Aufnahme einer Hellfeld- und einer Dunkelfeldabbildung eines Fingerabdrucks, überlagert in einem Ausgangsstrahl

Fig. 17 - Strahlengang in einem Kombinations-Fingerabdrucksensor zur simultanen Aufnahme einer Hellfeld- und einer Dunkelfeldabbildung eines Fingerabdrucks in getrennten Ausgangsstrahlen (drei Varianten a-c)

Fig. 18 - Schematische Darstellung eines Mobilgeräts mit ergonomisch geformtem Fingerabdrucksensor und beispielhaft hervorgehobener Lichtleiterplatte

Fig. 19 - Schematische Darstellung individuell ausgeführter Lichtleiterplatten mit quadratischer Grundform (a-f) und ihre Positionierung in einem ergonomisch geformten Fingerabdrucksensor (g)

Fig. 20 - Schematische Darstellung einer Lichtleiterplatte mit konkavem Anschnitt zur optimalen Nachbildung der Form der Fingerbeere eines Nutzers

Fig. 21 - Schematische Darstellung individuell ausgeführter Lichtleiterplatten mit rechteckiger Grundform (a-f)

Fig. 22 - Schematische Darstellung einer Lichtleiterplatte, die ein zusätzliches Schalterelement zur Aktivierung des Fingerabdrucksensors aufweist

## Ausführungsbeispiele

Der erfindungsgemäße optische Fingerabdrucksensors zeichnet sich aus durch einen Sensorkörper mit einem neuartigen modularen Aufbau, eine neuartige Strahlführung im Sensorkörper mit mindestens einem kollimierten Eingangsstrahl, einem totalreflektierten Ausgangsstrahl und einem gestreuten Ausgangsstrahl, wodurch eine Kombination einer Dunkelfeld- und einer Hellfeldabbildung eines Fingerabdrucks ermöglicht wird und ein Verfahren zur Herstellung des Sensorkörpers mit dem modularen Aufbau und der neuartigen Strahlführung. Diese Merkmale werden nachfolgend in Ausführungsbeispielen erläutert.

**Ausführungsbeispiel 1 - Sensorkörper mit modularem Aufbau**

Es wird im Folgenden die Ausführung eines modular aufgebauten Sensorkörpers 10 beschrieben, der die Form eines dreiseitigen Prismas $10_D$ mit rechtwinklig-gleichschenkligem Querschnitt (Innenwinkel 45°, 45°, 90°) hat. So geformte Sensorkörper, gefertigt aus einem massiven Werkstück, sind bekannt und werden in Fingerabdrucksensoren eingesetzt. Damit unter einem Austrittswinkel von 45° und dem Nachbarmedium Luft Totalreflexion erzielt wird, muss gemäß dem Brechungsgesetz ein Material mit einem Brechungsindex $n_S$ > V2 gewählt werden.

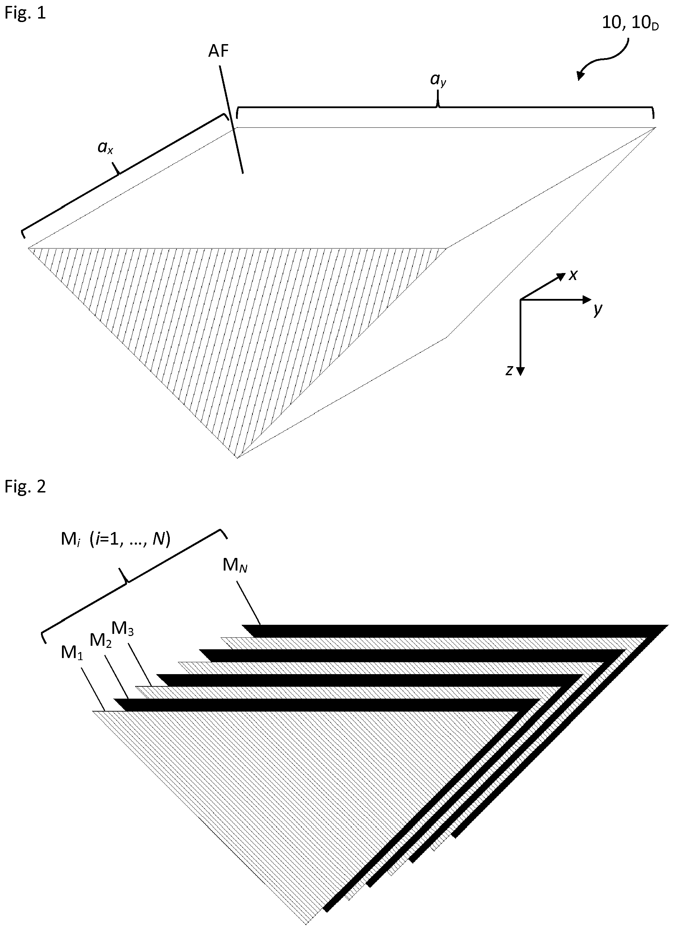

Ein solcher Sensorkörper $10_D$ ist in Fig. 1 dargestellt. Ihm ist ein geeignet positioniertes orthogonales Koordinatensystem mit den Achsen *x, y, z* zugeordnet. Er hat eine Auflagefläche AF, die mit der Größe einer aufzulegenden Fingerbeere vergleichbar ist. Gewählt wird eine quadratische Auflagefläche AF mit der Seitenlänge $a_x = a_y$ = 25 mm. Die *y*-Achse ist dabei parallel zur Fingerachse, die *x*-Achse quer zur Fingerachse gerichtet. Die *z*-Achse ist senkrecht zur Auflagefläche gerichtet. Diese Achsenrichtungen werden auch in den unten folgenden Ausführungsbeispielen beibehalten. Die Höhe *h* des Prismas beträgt $h = a_y$ / 2 = 12,5 mm.

*a) Bemessung eines modular aufgebauten Sensorkörpers und Fertigung desselben aus einzelnen Modulen*

Fig. 2 zeigt in schematischer Darstellung mehrere Module $M_i$ (*i* = 1, ..., *N*), ausgeführt als rechtwinklig-gleichschenklige Dreiecksscheiben, die zu einem erfindungsgemäßen modular aufgebauten Sensorkörper mit denselben Abmessungen wie bei dem massiven Sensorkörper $10_D$ der Fig. 1 zusammengefügt werden können. Die Abmessungen $a_y$ und h der Dreiecksscheiben $M_i$ entsprechen denen des Sensorkörpers 10, die Dicke $d_M$ der Dreiecksscheiben $M_i$ entspricht der gewünschten Auflösung in x-Richtung. Es wird $d_M$ = 50 μm gewählt. Um einen Sensorkörper mit der gewählten Abmessung $a_x$ = 25 mm zu fertigen, müssen somit *N* = 500 Dreiecksscheiben passgenau zusammengefügt werden.

Die Module ermöglichen es, einen kollimierten Lichtstrahl an einer ihrer Schmalseiten einzukoppeln und innerhalb des Moduls zu halten und zu führen, indem er an den Basisflächen des Moduls, d. h. an dessen Vorderseite und Rückseite, reflektiert wird. Das entspricht dem Funktionsprinzip bekannter Lichtleiterfasern, das hier auf ein flächiges Bauteil übertragen wird. Gemäß ihrer Funktion können die Module somit treffend als Lichtleiterplatten charakterisiert werden. Die Begriffe Modul und Lichtleiterplatte werden nachfolgend synonym verwendet.

Damit die gewünschte Reflexion an den Basisflächen erfolgen kann, müssen beim Zusammenfügen der Module Grenzschichten zwischen den Modulen erhalten bleiben. Diese Grenzschichten zwischen den Basisflächen zweier Module weisen vorzugsweise über die gesamte Basisfläche eine konstante Dicke $d_G$ auf. Die Dicke $d_G$ wird vorzugsweise aus dem Bereich 2 λ bis 5 λ gewählt, wobei λ die Wellenlänge des einzukoppelnden Lichts ist. Die Wellenlänge λ wird aus dem Bereich ca. 350 nm bis 2,5 μm (UV-A bis nahes Infrarot) gewählt. Bevorzugt ist der Bereich 750 nm bis 1,4 μm (IR-A). Die Dicke $d_G$ der Grenzschicht ist somit sehr viel kleiner als die Moduldicke $d_M$ und kann daher bei der Dimensionierung des Sensorkörpers in der Regel vernachlässigt werden.

Um eine gerichtete Reflexion gemäß dem Reflexionsgesetz zu gewährleisten, muss die Oberflächenrauigkeit $R_{rms}$ (root-mean-squared roughness) aller Begrenzungsflächen der Module $M_i$, d. h. ihrer Basisflächen und ihrer Seitenflächen, klein gegenüber der Wellenlänge λ des eingekoppelten Lichts sein. Bei den Seitenflächen genügt es, wenn diese niedrige Oberflächenrauigkeit in den Bereichen vorliegt, in denen Lichtstrahlen eingekoppelt, ausgekoppelt oder totalreflektiert werden.

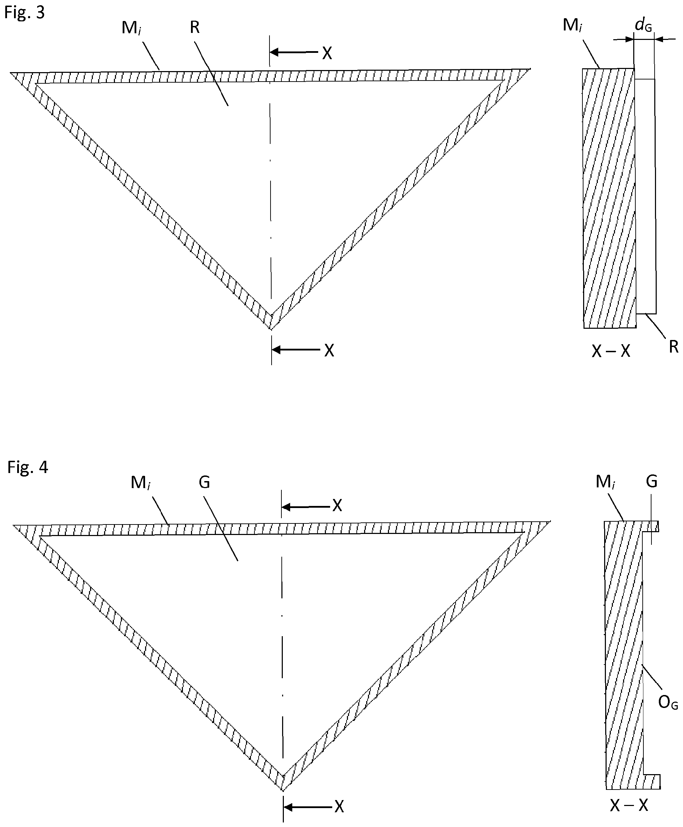

Die Ausführung der Grenzschichten zwischen den Modulen kann in unterschiedlicher Weise erfolgen. Einige Möglichkeiten dazu werden in Fig. 3 bis Fig. 5b schematisch dargestellt. Die darin gezeigten Module sind mit $M_i$ bezeichnet, um auszudrücken, dass es sich um ein beliebiges der *N* Module handelt, mit folgender Ausnahme: Da ein Sensorkörper mit N Modulen *N*-1 Grenzschichten aufweist, benötigt eines der beiden äußeren Module keine Grenzschicht.

Fig. 3 zeigt in Seitenansicht und in Schnittdarstellung entlang X - X ein Modul $M_i$, auf das als Grenzschicht eine reflektierende Schicht R aufgebracht wurde. Bei dieser reflektierenden Schicht R, die zur besseren Visualisierung in der Schnittdarstellung mit übertriebener Dicke $d_G$ dargestellt ist, kann es sich z. B. um eine Metallfolie oder um eine helllackierte Oberfläche, also eine Lackschicht, handeln. Die reflektierende Schicht R kann deckungsgleich mit der Basisfläche des Moduls sein oder aber, wie in Fig. 3 gezeigt, mit etwas kleineren lateralen Abmessungen ausgeführt sein.

Bevorzugt wird die Lichtleitung mittels Totalreflexion realisiert, indem jeweils eine Luftschicht oder eine Schicht eines anderen geeigneten Gases zwischen benachbarten Modulen (Lichtleiterplatten) eingebracht wird. Andere geeignete Gase sind z. B. Stickstoff, Sauerstoff oder Argon. Dazu kann beispielsweise ein Rahmen als Abstandshalter zwischen zwei benachbarten Lichtleiterplatten platziert werden, der den Raum für die Luftschicht freihält. Der Rahmen kann aus transparentem oder nichttransparentem Material bestehen.

Ebenso kann, wie in Fig. 4 entsprechend dargestellt, die Lichtleiterplatte $M_i$ selbst an mindestens einer Seite eine flächenhafte Aussparung G erhalten, die den Raum für eine Luftschicht definiert. Der Materialabtrag zur Herstellung dieser Aussparung G kann durch unterschiedliche Verfahren erfolgen, insbesondere mechanisch (z. B. durch Abfräsen), chemisch (z. B. durch Ätzung) oder optisch (durch Laserabtragung, z. B. durch Laserablation mit einem Excimer-Pulslaser). Diese Verfahren gewährleisten einen gleichmäßigen Materialabtrag, sodass die Aussparung G eine glatte Oberfläche $O_G$ mit der erforderlichen Oberflächenrauigkeit $R_{rms}$ (klein gegenüber der Wellenlänge des eingekoppelten Lichts) erhält.

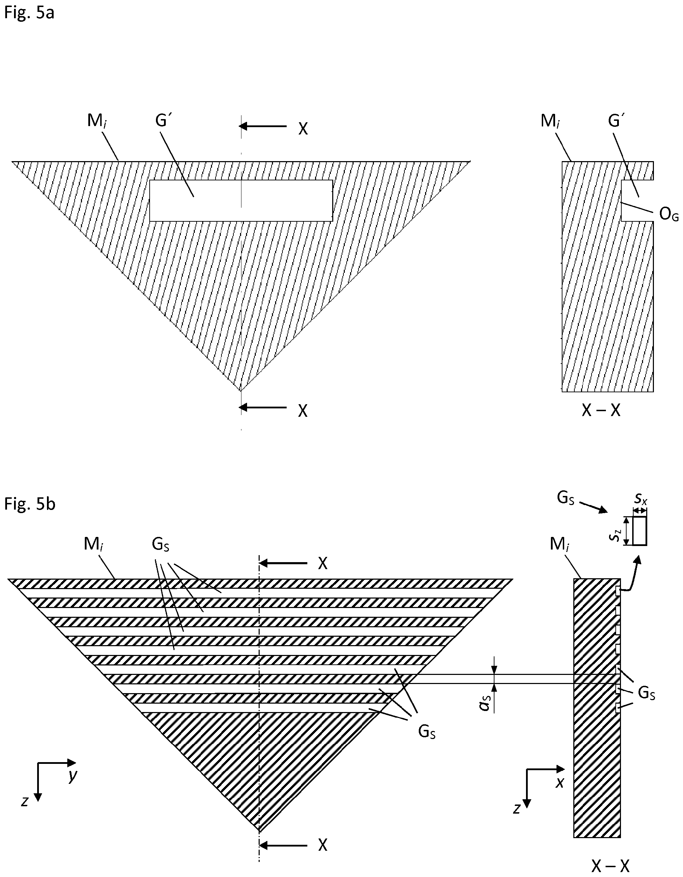

Die Aussparung muss sich nicht über die gesamte Basisfläche eines Moduls $M_i$ erstrecken. Es genügt vielmehr, die Aussparung gezielt im Bereich einer lichtleitenden Zone zu realisieren. Der Begriff "Bereich einer lichtleitenden Zone" bezeichnet einen Bereich, durch den mindestens ein Abschnitt des Strahlwegs des eingekoppelten und an der Auflagefläche reflektierten und gestreuten Lichts verläuft. Ein Modul $M_i$ mit einer solchen Aussparung G' wird beispielhaft in Fig. 5a gezeigt.

Da sich die Aussparung G' in Fig. 5a über eine kleinere Fläche erstreckt als die Aussparung G in Fig. 4, wird nach Zusammenfügen mehrerer der in Fig. 5a dargestellten Module $M_i$ ein Sensorkörper mit größerer mechanischer Stabilität und Robustheit erhalten.

Überraschend wurde festgestellt, dass es sogar genügt, anstelle einer flächigen Aussparung hinreichend eng angeordnete Streifen auszusparen. Fig. 5b zeigt ein Modul mit derartigen streifenförmigen Aussparungen $G_S$, die in einer Ebene liegen und eine Grenzschicht bilden. Eine hinreichend enge Anordnung dieser streifenförmigen Aussparungen ist gegeben, wenn der Abstand $a_s$ zweier benachbarter streifenförmiger Aussparungen, gemessen von der Unterkante der oberen streifenförmigen Aussparung bis zur Oberkante der unteren streifenförmigen Aussparung, etwa der halben Wellenlänge des verwendeten Lichts entspricht. Wird rotes Licht der Wellenlänge $\lambda$ = 700 nm verwendet, so darf der Abstand $a_s$ etwa 350 nm betragen, wird NIR-Licht der Wellenlänge $\lambda$ = 1 $\mu$m verwendet, so darf der Abstand $a_s$ etwa 500 nm betragen.

Die Abmessungen der Streifenquerschnitte müssen hingegen wesentlich größer sein als die Wellenlänge des verwendeten Lichts, um den unerwünschten optischen Tunneleffekt (siehe: https://de.wikipedia.org/wiki/Totalreflexion#Abgeschw.C3.A4chte und verhinderte Totalreflexion, letzter Satz) zu vermeiden. Dazu müssen die Abmessungen zumindest etwa der doppelten Wellenlänge $\lambda$, bevorzugt der 5-fachen Wellenlänge $\lambda$, des verwendeten Lichts entsprechen. Andererseits muss wenigstens die Tiefe der streifenförmigen Aussparungen (nachfolgend kurz: Streifentiefe) wesentlich kleiner sein als die Dicke der Module, um deren Funktionalität als Lichtleiterplatten und deren mechanische Stabilität nicht zu beeinträchtigen. Die Streifentiefe $s_x$ soll daher vorzugsweise ein Zehntel der Moduldicke $d_M$ nicht übersteigen. Die Form der Streifenquerschnitte ist frei wählbar, geeignet sind insbesondere quadratische, rechteckige, kreisförmige, halbkreisförmige, ovale und halbovale Querschnitte. Unter Berücksichtigung dieser Randbedingungen kann der Fachmann problemlos eine geeignete Kombination von Wellenlänge $\lambda$, Moduldicke $d_M$ und Streifentiefe $s_x$ ermitteln.

Wird bei einer Moduldicke $d_M$ = 50 $\mu$m eine Wellenlänge $\lambda$ = 1 $\mu$m gewählt, so erfüllt eine Streifentiefe $s_x$ = 5 $\mu$m die obigen Bedingungen. Ist der Streifenquerschnitt quadratisch, so wird auch die zu $s_x$ senkrechte Abmessung $s_z$ gleich groß gewählt, also $s_z$ = 5 $\mu$m. Die Abmessung $s_z$ kann verlängert werden, um einen rechteckigen Querschnitt zu erhalten. Diese Verlängerung sollte vorzugsweise eine Verdopplung des Ausgangswerts, hier also 10 $\mu$m, nicht überschreiten.

Einfach zu realisieren ist ferner ein halbkreisförmiger Streifenquerschnitt. Dabei entspricht die Streifentiefe $s_x$ dem Radius, die dazu senkrechte Abmessung $s_z$ dem Durchmesser des Halbkreises. Unter den Randbedingungen des vorangehenden Absatzes sind somit die Abmessungen $s_x$ = 5 $\mu$m und $s_z$ = 10 $\mu$m geeignet. Die streifenförmigen Ausnehmungen können, neben den o. g. Verfahren (Abfräsen, Ätzen, Laserablation), auch durch Prägen in die Lichtleiterplatten eingebracht werden. Die Lichtleiterplatten sind für diesen Arbeitsschritt, abhängig vom Material, geeignet zu temperieren. Im Falle der Verwendung von Dünnglas ist dieses bis kurz unter den Erweichungspunkt zu erwärmen, um den Aufbau von Spannungen im Glas beim Prägen zu vermeiden.

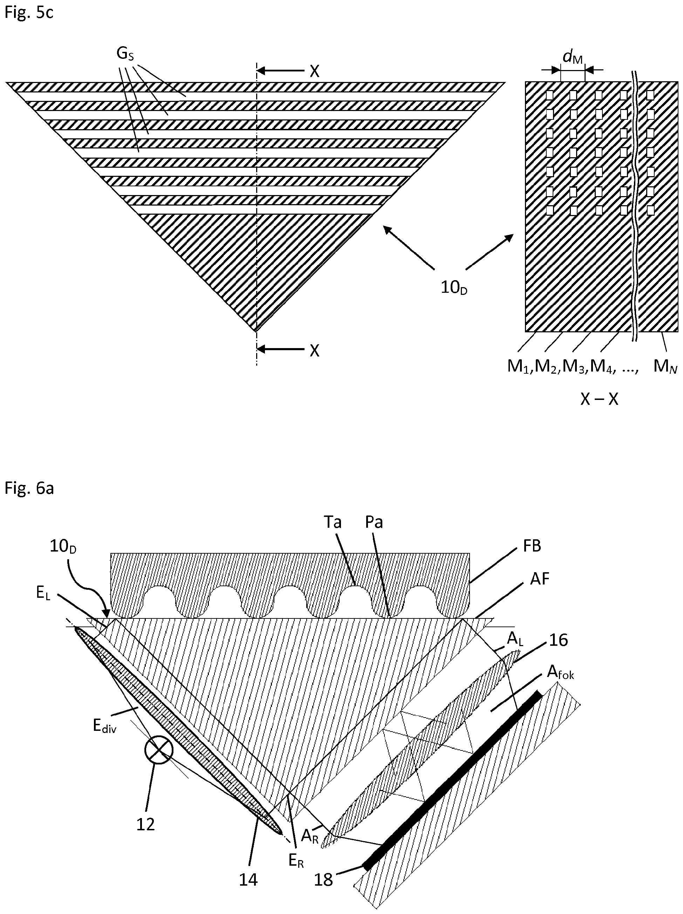

Beim Zusammenfügen der Module $M_i$ zu einem modular aufgebauten Sensorkörper werden die streifenförmigen Ausnehmungen durch eine Basisfläche des benachbarten Moduls verschlossen, sodass ein Sensorkörper mit rasterartig angeordneten Kanälen entsteht, die den Sensorkörper in y-Richtung durchlaufen und dabei in x-Richtung um die Moduldicke $d_M$ (gemessen von Mitte zu Mitte der Module, d. h. der benachbarten Lichtleiterplatten) und in z-Richtung, wie oben beschrieben, um etwa die halbe Wellenlänge versetzt sind. Fig. 5c zeigt in Seitenansicht und in Schnittdarstellung einen solchen modular aufgebauten Sensorkörper $10_D$. Die Gesamtheit der rasterartig angeordneten Kanäle bildet die Grenzschichten zwischen den Modulen des Sensorkörpers.

Diese Kanäle erhalten beim Zusammenfügen den gleichen Querschnitt wie die streifenförmigen Ausnehmungen der einzelnen Module, in den vorab beschriebenen Fällen also einen quadratischen Querschnitt mit 5 $\mu$m Seitenlänge

bzw. einen halbkreisförmigen Querschnitt mit 5 $\mu$m Radius.

Aus Symmetriegründen ist es vorteilhaft, den Kanälen statt eines halbkreisförmigen Querschnitts einen kreisförmigen Querschnitt zu geben. Das ist realisierbar, indem die Module $M_i$ (mit Ausnahme von $M_1$ und $M_N$) beidseitig mit Streifen mit halbkreisförmigem Querschnitt versehen werden. Durch passgenaues Zusammenfügen der Module entsteht ein Sensorkörper mit rasterartig angeordneten kreisförmigen Kanälen. Zu beachten ist dabei, dass sich durch die beidseitige Ausführung der Streifen die Abmessung in x-Richtung verdoppelt, im o. g. Beispiel von 5 $\mu$m auf 10 $\mu$m. Um diese Verdopplung zu kompensieren, muss der Radius des Streifenquerschnitts auf 2,5 $\mu$m reduziert werden.

Die flächigen oder streifenförmigen Aussparungen G, G', Gs können mit einem reflektierenden Material, z. B. mit einem Metall oder einer reflektierenden Flüssigkeit, gefüllt sein.

### b) Fertigung eines modular aufgebauten Sensorkörpers, ausgehend von einem massiven transparenten Körper

Aktuelle Fortschritte in der Mikrobearbeitung ermöglichen es, einen modular aufgebauten Sensorkörper statt aus einzelnen Modulen aus einem massiven Werkstück mit den gewünschten äußeren Abmessungen, die der Einleitung von Ausführungsbeispiel 1 und Unterabschnitt a) zu entnehmen sind, zu fertigen. Die Strukturierung dieses Sensorkörpers, d. h. seine Aufteilung in einzelne Lichtleiterplatten ohne Beeinträchtigung der Stabilität der Sensorkörpers, erfolgt, indem die unter a) beschriebenen rasterartig angeordneten Kanäle durch geeignete Verfahren in das massive Werkstück eingebracht werden.

Geeignete Verfahren zum Einbringen solcher Kanäle sind das Laserbohren und das chemische Ätzen. Beim Laserbohren ist ein Pulslaser mit kurzer Pulsdauer, vorzugsweise ein Femtosekundenlaser, einzusetzen.

Die Kanäle können mit einem reflektierenden Material, z. B. mit einem Metall oder einer reflektierenden Flüssigkeit, gefüllt sein.

Die Ausführung der unter a) und b) beschriebenen modular aufgebauten Sensorkörper ist in keiner Weise auf dreiseitige Prismen mit rechtwinklig-gleichschenkligem Querschnitt beschränkt. Vielmehr erlaubt das vorab beschriebene Herstellungsverfahren eine große Gestaltungs- und Formfreiheit. Der Sensorkörper kann stets die für den jeweiligen Anwendungsfall benötigte Gestalt erhalten. Insbesondere kann der Sensorkörper als quaderförmiges Prisma ausgeführt sein. Weiter kann der Sensorkörper ergonomische Auflageflächen und spezielle Anschnitte aufweisen.

### c) Additiver Aufbau des modular strukturierten Sensorkörpers

Der modular strukturierte Sensorkörper kann auch additiv aufgebaut werden, wofür geeignete 3D-Druckverfahren zur Verfügung stehen. Die Grenzschichten zwischen den Modulen, z. B. ausgeführt als Anordnung von streifenförmigen Ausnehmungen $G_S$, können dabei direkt während des Druckverfahrens in den Sensorkörper, der schichtweise aufgebaut wird, eingebracht werden.

### Ausführungsbeispiel 2 - Übergang von einem Flächensensor zu einem Zeilensensor

Der in Ausführungsbeispiel 1 beschriebene Sensorkörper $10_D$ ist sowohl für einen Flächensensor als auch für einen Zeilensensor geeignet. Ein Flächensensor stellt hohe Anforderungen an die mit ihm verbundene Lichtquelle und deren Optik. Um den an der Auflagefläche totalreflektierten Strahl auswerten zu können, ist eine punktförmige Lichtquelle erforderlich, deren divergenter Strahl durch die als Kollimator fungierende Optik parallelisiert (kollimiert) wird. Der kollimierte Strahl muss einen an die Größe der Auflagefläche des Flächensensors angepassten Querschnitt haben, um die Auflagefläche gleichmäßig zu beleuchten. In x-Richtung wird somit eine Strahlabmessung von 25 mm, in y-Richtung (aufgrund der Projektion unter dem Winkel von 45°) eine Abmessung von 25 mm / $\sqrt{2} \approx$ 18 mm benötigt. Über diesen großen Querschnitt hinweg wird eine annähernd konstante und ausreichend hohe Lichtintensität benötigt.

Die Erfüllung dieser Anforderungen ist technisch sehr aufwendig, da ein hochwertiger und teurer Kollimator benötigt wird. Zudem lassen sich die Abmessungen des Sensorkörpers nicht minimieren. Auch der Kollimator und der Detektor benötigen Abmessungen, die mit denen des Sensorkörpers vergleichbar sind, also in der Größenordnung von 2 cm liegen. Ein solcher Flächensensor ist daher für viele Anwendungen, z. B. Mobiltelefone, zu groß und zu sperrig, denn auch seine Gestalt (rechtwinklig-gleichschenkliges dreiseitiges Prisma) ist nicht änderbar.

Diese Anforderungen sind wesentlich einfacher zu erfüllen, wenn die Abmessungen der optisch aktiven Elemente verringert werden. Das ist möglich, indem der Fingerabdrucksensor als Zeilensensor ausgeführt wird, welcher als swipe-Sensor arbeitet, über dessen Auflagefläche eine Fingerbeere berührend hinweggeführt wird.

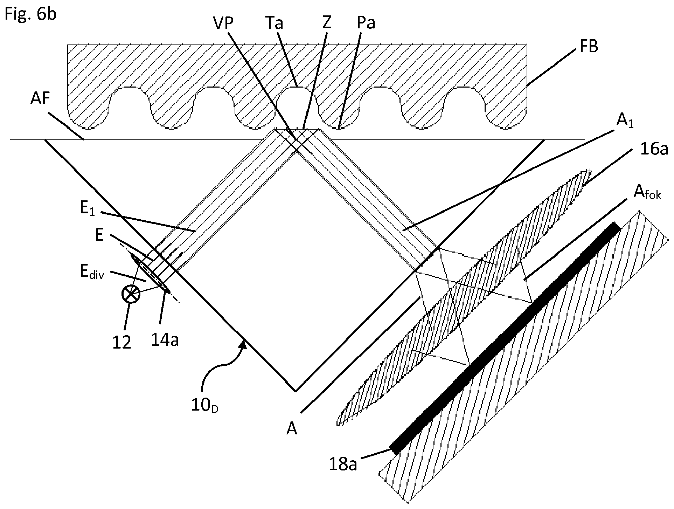

In diesem Ausführungsbeispiel wird dargestellt, wie der in Ausführungsbeispiel 1 beschriebene Sensorkörper $10_D$ in Verbindung mit geeigneten Optiken als Flächensensor (Fig. 6a) und als Zeilensensor (Fig. 6b) einzusetzen und hinsichtlich seiner Abmessungen und seiner Form zu optimieren ist. Fig. 6a und 6b sind Schnittdarstellungen senkrecht zur x-Achse.

Der Übergang von einem Flächensensor zu einem Zeilensensor erfolgt durch eine Anpassung der Optiken auf der Seite der Lichtquelle (Strahlführung von der Lichtquelle bis zur Auflagefläche) und der Seite des Detektors (Strahlführung von der Auflagefläche zum Detektor).

Bei einem Flächendetektor (Fig. 6a) trifft der von einer punktförmigen Lichtquelle 12 ausgehende divergente Lichtstrahl $E_{div}$ auf einen Kollimator 14 mit einem Achsdurchmesser in der Zeichenebene von ca. 18 mm und wird dann als kollimierter Eingangsstrahl, gekennzeichnet durch seine Begrenzungslinien $E_L$ und $E_R$, in den als rechtwinklig-gleichschenkliges dreiseitiges Prisma $10_D$ ausgeführten Sensorkörper eingekoppelt und auf die Auflagefläche AF mit einer Abmessung von 25 mm in y-Richtung geführt. In den Bereichen der Täler Ta der aufliegenden Fingerbeere FB wird durch Totalreflexion ein Ausgangsstrahl, gekennzeichnet durch seine Begrenzungslinien $A_L$ und $A_R$, erzeugt. Dabei geht von jedem Bereich eines Tals Ta ein Teilstrahl aus, der aus dem Prisma $10_D$ ausgekoppelt und über eine optionale Abbildungsoptik 16 auf einen Flächendetektor 18, dessen Abmessung der Abbildungsoptik 16 entspricht, geführt wird. Durch die optionale Abbildungsoptik 16 kann die Breite des auf den Flächendetektor 18 fokussierten Ausgangssignals $A_{fok}$, das aus der Gesamtheit der Teilstrahlen gebildet wird, verändert, vorzugsweise verringert werden. Dadurch wird es möglich, auch die Breite des Flächendetektors 18 zu ändern, vorzugsweise zu verringern. Die Papillenstruktur der Fingerbeere FB (mit Tälern Ta und Papillen Pa) ist zum Zwecke der Visualisierung stark vergrößert dargestellt. Es ist erkennbar, dass nahezu der gesamte Sensorkörper $10_D$ für die Strahlführung genutzt wird. In den Bereichen der Papillen Pa der Fingerbeere erfolgt gestörte Totalreflexion. Der Flächendetektor 18 registriert somit ortsaufgelöst hohe Lichtintensitäten aufgrund gerichteter Totalreflexion in den Bereichen von Tälern Ta und geringe Lichtintensitäten aufgrund ungerichteter Streuung an Papillen Pa. Er bildet somit die Papillen dunkel vor hellem Hintergrund ab. Die von den Bereichen der Papillen Pa ausgehende divergente Streustrahlung ist hier nicht dargestellt, wird aber in den Ausführungsbeispielen 5 und 6 ausführlich behandelt.

In Fig. 6b wird der gleiche Sensorkörper $10_D$ wie vorher verwendet. Jedoch wird der von einer in der y-z-Ebene punktförmigen Lichtquelle 12 ausgehende divergente Lichtstrahl $E_{div}$ durch eine (nicht dargestellte) Aperturblende und einen Kollimator 14a auf einen Achsdurchmesser in der Zeichenebene von ca. 280 $\mu$m eingeschränkt und dann als kollimierter Eingangsstrahl E in den Sensorkörper $10_D$ eingekoppelt und im Strahlabschnitt $E_1$ auf die Auflagefläche AF geführt. Es wird somit (aufgrund des schrägen Lichteinfalls unter einem Einfallswinkel von 45°) in y-Richtung lediglich ein 400 $\mu$m breiter Bereich des 25 mm langen Sensorkörpers beleuchtet. Dieser Bereich ist hinreichend breit, um zumindest ein Tal Ta, wo Totalreflexion erfolgt, und eine benachbarte Papille Pa, wo gestörte Totalreflexion erfolgt, zu erfassen. Das totalreflektierte Signal, das ebenfalls auf einen Achsdurchmesser in der Zeichenebene von ca. 280 $\mu$m eingeschränkt ist, verläuft über den Strahlabschnitt $A_1$ zu einem als Auskoppelfläche dienenden Bereich der Oberfläche des Sensorkörpers $10_D$, wird dort aus dem Sensorkörper $10_D$ ausgekoppelt und als Ausgangssignal A auf einen Zeilendetektor 18a mit 8 Zeilen geführt, deren Pixel in der y-z-Ebene eine Ausdehnung von 35 $\mu$m haben, um die Projektion des unter dem Reflexionswinkel von 45° reflektierten Lichtes auf den Zeilendetektor 18a zu berücksichtigen. Durch eine optionale Abbildungsoptik 16a kann die Abmessung des Zeilendetektors 18a verändert werden. Wiederum ist die Papillenstruktur der Fingerbeere (mit zwei durch ein Tal getrennten Papillen) zum Zwecke der Visualisierung stark vergrößert dargestellt, ebenso auch die Strahlengänge. Es wird jedoch deutlich, dass nur noch ein schmaler Abschnitt des Sensorkörpers $10_D$ für die Strahlführung benötigt wird. Die Überlagerung von einfallendem Strahl $E_1$ und totalreflektiertem Strahl $A_1$ definiert ein "virtuelles" Prisma VP, an dessen Außenseite Z, d. h. dem 400 $\mu$m breiten beleuchteten Abschnitt der Auflagefläche AF, die eigentliche Detektion der Fingerabdruckstrukturen erfolgt. Die Außenseite des "virtuellen" Prismas bildet somit den sensorisch aktiven Bereich Z des Sensors. Die gestörte Totalreflexion in den Bereichen der Papillen Pa der Fingerbeere wird in Ausführungsbeispiel 5 behandelt.

Die Dimensionen der Strahlengänge werden jedoch nur in der y-z-Ebene verkleinert. Erhalten bleiben die an die Breite eines Fingers angepassten Abmessungen von 25 mm in x-Richtung. Beibehalten wird dabei auch die modulare Struktur des Sensorkörpers $10_D$ mit N = 500 in y-z-Richtung ausgedehnten Lichtleiterplatten der Dicke 50 $\mu$m, die in x-Richtung übereinander liegen. Der bestrahlte Bereich des "virtuellen" Prismas VP hat somit eine Ausdehnung von 400 $\mu$m in y-Richtung und 25 mm in x-Richtung. Um seine Bestrahlung zu gewährleisten, muss die in der y-z-Ebene punktförmige Lichtquelle in x-Richtung eine Ausdehnung von 25 mm haben. In der einfachsten Art kann es sich dabei um einen Strichfokus handeln, der mit einer Zylinderlinse erzeugt wird. Die so erzeugten Strichfokusse weisen ein gaußförmiges Intensitätsprofil auf. Sie sind nur bedingt geeignet, da sich die Intensität über den Strahlquerschnitt hinweg stark ändert. Vorteilhaft sind Lichtquellen, die einen Strichfokus mit einem (zumindest annähernd) rechteckigen Intensitätsprofil liefern. Geeignete Quellen hierfür sind Linien-Mikrofokus-Laser, z. B. aus der Produktlinie Lasiris™ TMFL der Firma Coherent, Inc., Portland, USA.

Ebenso geeignet sind Arrays von in x-Richtung linear angeordneten, punktförmigen Emittern. Bevorzugt wird dabei jeder Lichtleiterplatte ein Emitter, z. B. ein Mikrofokus-Laser, zugeordnet.

Ein besonderer Vorteil des erfindungsgemäßen Sensorkörpers besteht darin, dass seine Größe weitgehend frei gewählt werden kann. Im Falle des in Fig. 6b dargestellten Sensorkörpers können dessen Abmessungen bis auf die Größe des "virtuellen" Prismas VP verringert werden und auch die Bauelemente auf der Detektorseite können entsprechend verkleinert werden. Die optischen Elemente können dann unmittelbar benachbart zum "virtuellen" Prisma angeordnet werden. Die Geometrie des Sensorkörpers und die Abmessungen der Optiken und Detektoren können somit an jeden beliebigen Anwendungsfall angepasst werden.

**Ausführungsbeispiel 3 - Zeilensensor mit einem Sensorkörper beliebiger Form (hier beispielhaft: flaches Rechteckprisma)**

Da für die Funktion eines als Zeilensensor ausgeführten Fingerabdrucksensors lediglich ein sehr kleines "virtuelles" Prisma, definiert durch den einfallenden und den totalreflektierten Strahl genügt, ist es bei einem Zeilensensor nicht mehr erforderlich, dem Sensorkörper 10 eine dem "virtuellen" Prisma ähnliche Form zu geben. Vielmehr kann die Form des Sensorkörpers bei einem Zeilensensor weitgehend frei gewählt werden. Besonders vorteilhaft sind quaderförmige Prismen (nachfolgend kurz als Rechteckprismen $10_R$ bezeichnet), da sie einfach zu fertigen sind.

Da an der Auflagefläche bei Kontakt mit Luft, d. h. an Tälern Ta, Totalreflexion gefordert ist, ist es wegen der Symmetrie des Strahlengangs nicht möglich, einen Laserstrahl über die Unterseite des Rechteckprismas $10_R$ einzukoppeln und ohne weitere Umlenkung direkt zur Auflagefläche an dessen Oberseite zu führen. Sein Einfallswinkel müsste dazu größer als 90° sein, damit der in das einen Brechungsindex $n_S > \sqrt{2}$ aufweisende Rechteckprisma $10_R$ hineingebrochene Strahl unter einem Winkel von 45° auf die Auflagefläche trifft und somit, zusammen mit dem totalreflektierten Strahl, ein rechtwinklig-gleichschenkliges "virtuelles" Prisma definiert. Zweckmäßig ist eine Einkopplung über eine der Seitenflächen des Rechteckprismas $10_R$ und eine Strahlumlenkung innerhalb des Rechteckprismas $10_R$.

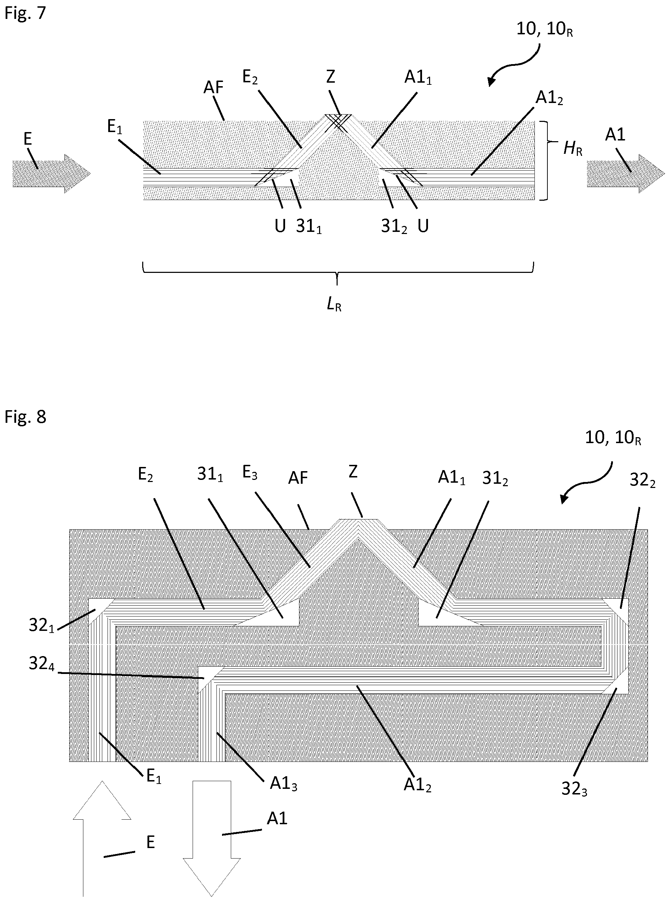

Fig. 7 zeigt in schematischer Darstellung eine einfache Möglichkeit, den erforderlichen Strahlengang zu realisieren. Das flache Rechteckprisma $10_R$ hat eine Länge $L_R$ (in $y$-Richtung), die der Abmessung einer Fingerbeere entspricht oder darunter liegt. Es ist möglich, die Länge $L_R$ auf wenige Millimeter zu reduzieren, da der Zeilensensor die Fingerabdruckstrukturen einer über den Sensor berührend hinweggeführten Fingerbeere seriell aufnimmt. Es genügt eine Länge $L_R$ von ca. 4 mm bis 5 mm, um eine ausreichende haptische Wahrnehmung des Sensors durch den Nutzer und eine sichere Führung seiner Fingerbeere zu gewährleisten. Die Höhe $H_R$ des Rechteckprismas $10_R$ (in z-Richtung) kann bis auf 0,5 mm bis 1 mm reduziert werden.

Erfindungsgemäß verfügt das Rechteckprisma $10_R$ über innenliegende reflektierende Umlenkflächen, hier ausgeführt als totalreflektierende Umlenkflächen U, an denen ein Eingangsstrahl E, der über eine Seitenfläche in den Strahlabschnitt $E_1$ eingekoppelt wird, so umlenkbar ist, dass er im Strahlabschnitt $E_2$ unter einem Winkel von 45° auf den sensorisch aktiven Bereich Z der Außenseite des Rechteckprismas $10_R$ trifft, die eine Auflagefläche AF für eine (in Fig. 7 nicht dargestellte) Fingerbeere bildet. Dort wird er in den Bereichen mit Luftkontakt, d. h. in Bereichen von Tälern, totalreflektiert und über den Strahlabschnitt $A1_1$ und nach einer Umlenkung in den Strahlabschnitt $A1_2$ über eine Seitenfläche des Rechteckprismas als Ausgangsstrahl A1 ausgekoppelt und einer (nicht dargestellten) Optik zugeführt. Besonders vorteilhaft ist es, wenn die Strahlumlenkung nur mit den ausgezeichneten Umlenkwinkeln 45° und 90° erfolgt. Dazu muss der eingekoppelte Eingangsstrahl unter einem Winkel von 22,5° (entspricht einem vom Lot aus gemessenen Einfallswinkel 67,5°) bzw. 45° auf die (total-)reflektierende Umlenkfläche treffen. In einfacher Weise werden die Umlenkflächen U erzeugt, indem prismenförmige Ausnehmungen 31, 32 mit rechtwinklig-dreieckigem Querschnitt in das Rechteckprisma P eingebracht werden, wobei die rechtwinklig-dreieckigen Querschnitte die Innenwinkel 22,5°, 67,5°, 90° (Ausnehmung 31) bzw. 45°, 45°, 90° (Ausnehmung 32, diese wird erst im folgenden Ausführungsbeispiel und Fig. 8 verwendet) aufweisen und die Katheten der Querschnitte parallel zu den Seitenkanten des Rechteckprismas $10_R$ liegen. Die Umlenkflächen U werden durch die Hypotenusen der Querschnitte der Ausnehmungen 31, 32 definiert. Die prismenförmigen Ausnehmungen 31, 32 sind durch Laserschneiden oder mechanisches Stanzen herstellbar. Sie sind mit Luft oder mit einem anderen geeigneten Gas, z. B. Stickstoff, Edelgas, gefüllt. Sie können auch mit einer Flüssigkeit mit geeignetem Brechungsindex gefüllt sein. Der Brechungsindex der Flüssigkeit muss hinreichend niedrig sein, um eine Totalreflexion eines auf die Ausnehmung treffenden Lichtstrahls zu gewährleisten.

Das in Fig. 7 dargestellte Rechteckprisma $10_R$ weist zwei symmetrisch angeordnete prismenförmige Ausnehmungen $31_1$, $31_2$, jeweils mit den Innenwinkeln 22,5°, 67,5°, 90°, auf. Ein über die linke Seitenfläche senkrecht eingekoppelter Eingangsstrahl E mit einer Höhe von 280 $\mu$m wird im Strahlabschnitt $E_1$ bei Auftreffen auf die um 22,5° gegenüber der Oberseite des Rechteckprismas $10_R$ geneigte Umlenkfläche U der Ausnehmung $31_1$ totalreflektiert und unter einem Winkel von 45° zur Oberseite des Rechteckprismas $10_R$ geführt, wo er einen Bereich Z der Breite 400 $\mu$m bestrahlt, der das sensorisch aktive Gebiet des Zeilensensors (Oberseite des "virtuellen" Prismas) bildet. Der totalreflektierte Strahl $A1_1$, der seriell das Bild des Fingerabdrucks einer berührend über das sensorisch aktive Gebiet Z des Zeilensensors bewegten (nicht dargestellten) Fingerbeere aufnimmt (hohe Intensität infolge Totalreflexion in Bereichen mit Luftkontakt, verringerte Intensität infolge gestörter Totalreflexion (FTIR) in Bereichen mit Papillenkontakt) wird über die Umlenkfläche U der symmetrisch liegenden zweiten prismenförmigen Ausnehmung $31_2$ in seine ursprüngliche Ausbreitungsrichtung (Strahlabschnitt $A1_2$) zurückreflektiert und über die rechte Seitenfläche als Ausgangsstrahl A1 senkrecht aus dem Rechteckprisma ausgekoppelt. Bevorzugt sind die Einkoppel- und Auskoppelbereiche auf den Seitenflächen mit Antireflexionsschichten versehen.

Die Umlenkflächen U können statt als totalreflektierende Oberflächen von Ausnehmungen 31, 32 auch als reflektierende metallische Spiegelflächen ausgeführt werden. In beiden Fällen müssen die Umlenkflächen U die erfor-

derliche niedrige Oberflächenrauigkeit $R_{rms}$ (klein gegenüber der Wellenlänge des verwendeten Lichts) aufweisen.

Bevorzugt weist das Rechteckprisma $10_R$ einen modularen Aufbau analog zu dem in Ausführungsbeispiel 1 beschriebenen auf (Stapelung von Lichtleiterplatten in x-Richtung). Ebenso werden die außerhalb des Rechtprismas befindlichen Quellen, Optiken und Empfänger analog zu den in Ausführungsbeispiel 2 und Fig. 6b dargestellten ausgeführt. Diese Merkmale werden daher hier und in den folgenden Ausführungsbeispielen nicht erneut dargestellt.

**Ausführungsbeispiel 4 - Ein- und Auskopplung eines Eingangsstrahls über die Unterseite eines Rechteckprismas**

Die konkrete technische Anwendung kann es erforderlich machen, dass die Ein- und Auskopplung eines Eingangsstrahls nicht über die Seitenflächen des Sensorkörpers erfolgt. Insbesondere kann die Ein- und Auskopplung über die Unterseite, d. h. die vom Außenraum abgewandte Seite des Sensorkörpers gewünscht sein.

Fig. 8 zeigt den Querschnitt eines dafür ausgelegten Sensorkörpers 10, der wieder die Form eines Rechteckprismas $10_R$ hat. Der Sensorkörper wird analog zu dem in Ausführungsbeispiel 3 beschriebenen ausgeführt, erhält aber vier weitere Ausnehmungen $32_1$, $32_2$, $32_3$, $32_4$ mit rechtwinklig-gleichschenkligem Querschnitt, die so angeordnet sind, dass der einzukoppelnde Strahl E im Strahlabschnitt $E_1$ und der auszukoppelnde Strahl A1 im Strahlabschnitt $A1_2$ unter einem Winkel von 45° auf die in der Hypotenuse dieses Querschnitts liegende Umlenkfläche der Ausnehmung treffen und dort durch Totalreflexion um jeweils 90° umgelenkt werden. Die Bedingung für Totalreflexion lautet: $90° > \alpha_P > \arcsin(1/n_S)$, wobei $\alpha_P$ der Einfallswinkel auf die Umlenkfläche ist. Um (bei luft- bzw. gasgefüllten Ausnehmungen) die Totalreflexion unter 45° zu gewährleisten, wird das Rechteckprisma $10_R$ aus einem Material mit ausreichend hohem Brechungsindex gefertigt ($n_S > \sqrt{2}$, wie in Ausführungsbeispiel 1 erläutert).

Die Ausnehmungen $32_3$ und $32_4$ sind so angeordnet, dass der Ausgangsstrahl A1 in Richtung des Eingangsstrahls E zurückgelenkt und benachbart zu diesem parallel ausgekoppelt wird.

Einkoppel- und Auskoppelbereich weisen in diesem Fall einen geringen Abstand auf. Es ist problemlos möglich, auch einen großen Abstand zwischen Einkoppel- und Auskoppelbereich zu realisieren, indem auf die Ausnehmungen $32_3$ und $32_4$ verzichtet wird. Der Ausgangsstrahl wird in diesem Fall nach der Umlenkung an der Umlenkfläche der Ausnehmung $32_2$ auf direktem Weg zur Unterseite des Sensorkörpers geführt und aus diesem ausgekoppelt.

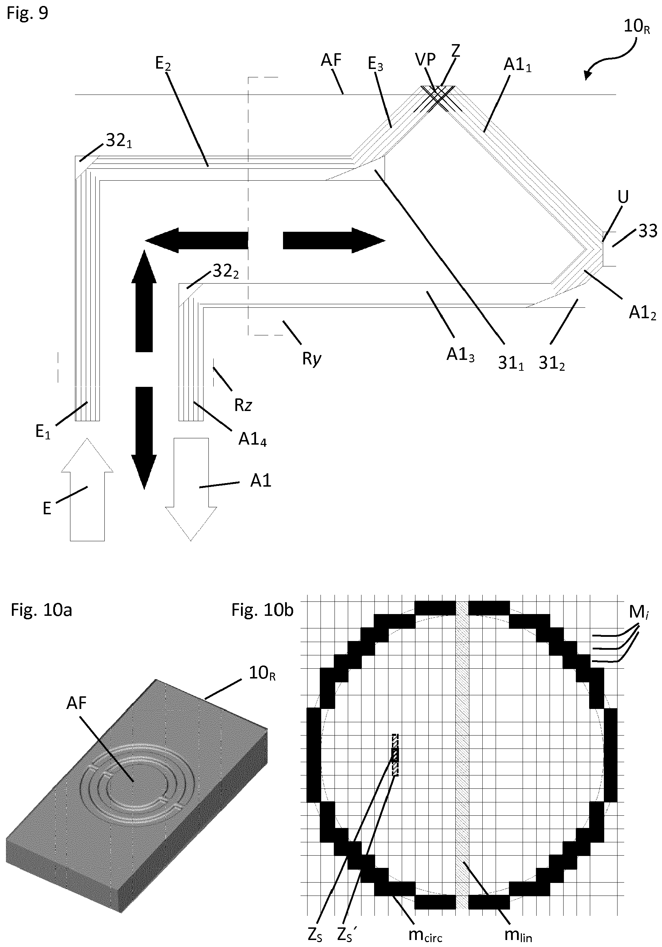

Fig. 9 zeigt eine weitere Ausführungsform mit einer modifizierten Strahlführung des Ausgangsstrahls. Der Ausgangsstrahl A1 wird zunächst an der Umlenkfläche U einer in Form eines Rechteckprismas ausgeführten Ausnehmung 33 um 90° umgelenkt vom Strahlabschnitt $A1_1$ in den Strahlabschnitt $A1_2$ und dann durch Umlenkung um weitere 45° an der Umlenkfläche einer Ausnehmung $31_2$ in Richtung des Einkoppelbereichs zurückgelenkt (Strahlabschnitt $A1_3$). Benachbart zum Strahlengang des Eingangsstrahls befindet sich eine rechtwinklig-gleichschenklige Ausnehmung $32_2$, an deren Umlenkfläche der Ausgangsstrahl A1 um -90° in Richtung der Unterseite des Rechteckprismas $10_R$ umgelenkt (Strahlabschnitt $A1_4$) und dort über einen benachbart zum Einkoppelbereich liegenden Auskoppelbereich ausgekoppelt wird.

Weitere ähnliche Varianten, z. B. erhältlich durch die Vertauschung von Ein- und Auskoppelbereich, sind für den Fachmann leicht realisierbar.

Bevorzugt wird das Rechteckprisma $10_R$ auch hier modular, d. h. durch gestapelte rechteckige Lichtleiterplatten, aufgebaut. Die Fertigung erfolgt analog zu der in Ausführungsbeispiel 1 a) beschriebenen Fertigung eines modular aufgebauten dreiseitigen Prismas $10_D$. Der modulare Aufbau erlaubt es, jede einzelne Lichtleiterplatte separat zu bemessen, wodurch die Fertigung von Fingerabdrucksensoren mit weitreichender Formfreiheit, insbesondere von solchen mit ergonomisch geformten Auflageflächen, ermöglicht wird.

Insbesondere können dabei die lateralen Abmessungen jeder Lichtleiterplatte in y-Richtung (d. h. ihre Länge) und in z-Richtung (d. h. ihre Höhe) separat gewählt werden. Ebenso können die Positionen der Ausnehmungen 31, 32, 33 in jeder Lichtleiterplatte individuell gewählt werden. Dadurch ist es möglich, die Position des "virtuellen" Prismas relativ zur Unterseite des aus einer Vielzahl von gestapelten Lichtleiterplatten (Modulen $M_i$) gebildeten Sensorkörpers sowohl horizontal (in y-Richtung) als auch vertikal (in z-Richtung) definiert einzustellen und einen Sensorkörper mit beliebig geformter Oberfläche, insb. einen solchen mit einer ergonomisch geformten Auflagefläche für eine Fingerbeere, zu fertigen. Diese erfindungsgemäße Lösung wird ebenfalls in Fig. 9 visualisiert, mithilfe der mit Pfeilen versehenen Rechtecke Ry und Rz. Die Rechtecke Ry und Rz symbolisieren die frei wählbaren Abmessungen jedes Moduls $M_i$ in y- und z-Richtung.

Das senkrecht stehende gestrichelte Rechteck Ry veranschaulicht, dass durch Änderung der Länge der horizontalen Strahlwege die horizontale Position des "virtuellen" Prismas VP verschoben werden kann. Dabei werden alle in der Abbildung rechts vom Rechteck Ry positionierten optischen Elemente, d. h. das "virtuelle" Prisma VP, die beiden Ausnehmungen $31_1$, $31_2$ in Form von dreiseitigen Prismen sowie die Ausnehmung 33 in Form eines Rechteckprismas um dieselbe Streckenlänge horizontal verschoben. Anstelle der Ausnehmung in Form eines Rechteckprismas 33 kann natürlich auch, wie oben beschrieben, eine Ausnehmung in Form eines dreiseitigen Prismas 32 verwendet werden, wobei deren reflektierende Fläche in die Senkrechte zu drehen ist. Die Ausnehmung in Form eines Rechteckprismas 33 wird hier bevorzugt, da sie fertigungstechnisch einfacher zu realisieren ist, denn sämtliche ihrer Kanten liegen parallel zu den Kanten der Lichtleiterplatte.

Das waagerecht liegende gestrichelte Rechteck Rz veranschaulicht, dass durch Änderung der Länge der vertikalen Strahlwege auch die vertikale Position des "virtuellen" Prismas VP verschoben werden kann. Somit können die Abmessungen des Sensorkörpers in Form eines Rechteckprismas $10_R$ anwendungsspezifisch eingestellt werden.

Fig. 10a zeigt in schematischer Darstellung einen Sensorkörper $10_R$ eines Fingerabdrucksensors mit einer ergonomisch günstigen muldenförmigen Auflagefläche AF, der unter Verwendung der vorab beschriebenen individuell gestalteten Lichtleiterplatten herstellbar ist. Zur besseren Visualisierung sind die einzelnen Sensorbereiche vergrößert und in verringerter Anzahl dargestellt. Diese Sensorbereiche weisen linear oder näherungsweise kreisförmig angeordnete "virtuelle" Prismen auf, sodass ein üblicher Zeilensensor mit geradlinigem Messbereich oder ein Zeilensensor mit kreisringförmigem Messbereich oder ein Zeilensensor mit einer Kombination aus beidem realisierbar ist. Fig. 10b zeigt in schematischer Darstellung die Draufsicht auf einen modular aufgebauten Fingerabdrucksensor mit einem in x-Richtung geradlinigen Messbereich $m_{lin}$ (schraffierte Quadrate) und einem kreisringförmigen Messbereich $m_{circ}$ (schwarze Quadrate). Im kreisringförmigen Messbereich $m_{circ}$ befinden sich die Oberflächen aller "virtuellen" Prismen auf gleicher Höhe $z_{OF}$, d. h. auf der Höhe des Muldenrandes. Es ist erkennbar, dass der kreisringförmige Messbereich $m_{circ}$ durch ein Raster aus Quadraten angenähert wird. Die schraffierten und schwarzen Quadrate entsprechen den Oberflächen "virtueller" Prismen. Ihre Abmessungen geben die Ortsauflösung des Sensors an. Auch Fig. 10b ist, um einzelne Module (Lichtleiterplatten) $M_i$ visualisieren zu können, nicht maßstabgerecht. Es handelt sich vielmehr um eine vergröberte Darstellung, bei der die senkrecht zur Zeichenebene und senkrecht zur Linie der schraffierten Quadrate ausgerichteten Lichtleiterplatten vergrößert und in verringerter Anzahl mit vergrößerter Dicke dargestellt sind. Der Übersichtlichkeit halber ist nur ein willkürlich ausgewählter Bereich mit drei Modulen $M_i$ beschriftet. Die Dicke der Module $M_i$ bestimmt die Seitenlänge eines Quadrats und somit die Ortsauflösung in x-Richtung. Die Ortsauflösung in y-Richtung wird zweckmäßigerweise, wie in Ausführungsbeispiel 2 erläutert, über den Achsdurchmesser des Eingangsstrahls auf denselben Wert eingestellt. Es wäre aber auch möglich, einen größeren oder kleineren Wert für die Ortsauflösung in y-Richtung zu wählen. Die Oberflächen der "virtuellen" Prismen würden dann eine rechteckige Form erhalten.

In Fig. 10b ist außerdem ein Schaltbereich eingezeichnet, umfassend zumindest einen Teil der Oberfläche eines "virtuellen" Prismas (Bereich $Z_S$) in einem Modul oder mehrerer, hier beispielhaft dreier, "virtueller" Prismen (Bereich $Z_S'$), die sich in verschiedenen Modulen befinden. Diese Oberfläche bildet den sensorisch aktiven Bereich eines Schalterelements, das in Ausführungsbeispiel 8 detailliert erläutert wird.

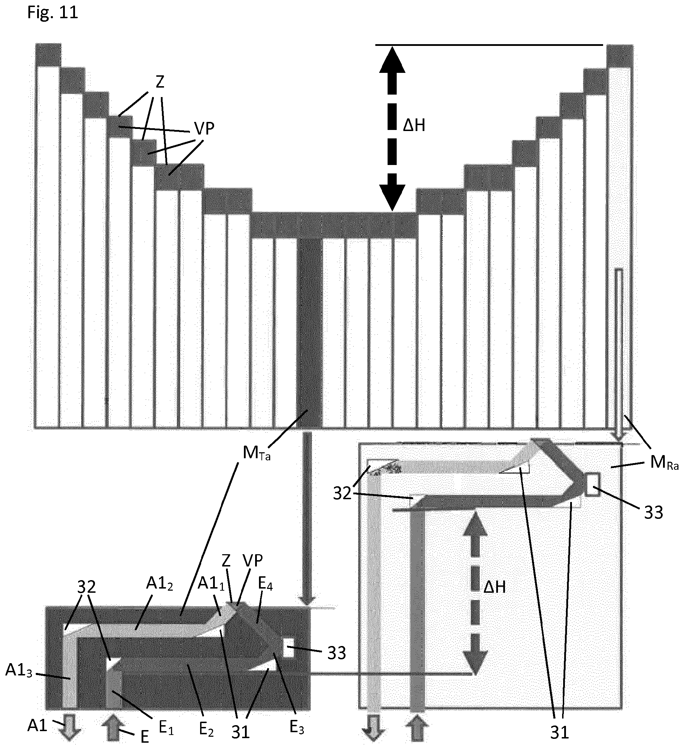

Im geradlinig in *x*-Richtung verlaufenden Messbereich $m_{lin}$ folgen die Oberflächen aller "virtuellen" Prismen der ergonomisch geformten Mulde, befinden sich also auf unterschiedlichen Höhen $z_i$. Die Realisierung dieser wirtschaftlich besonders vielversprechenden Variante eines Zeilensensors ist in Fig. 11 veranschaulicht. Fig. 11 zeigt im oberen Teil, wiederum in vergröberter Darstellung, einen Schnitt in *x*-Richtung durch einen muldenförmigen Fingerabdrucksensor. Die Lichtleiterplatten, d. h. die Module $M_i$, stehen senkrecht zur Zeichenebene (der *x-z*-Ebene) und sind in der Schnittdarstellung als senkrecht stehende schmale Rechtecke unterschiedlicher Länge erkennbar, an deren oberen Enden sich jeweils ein "virtuelles" Prisma VP befindet. Dabei bilden die Oberseiten der Lichtleiterplatten die gewünschte Form, hier eine ergonomisch geformte Mulde, nach, sind also auf einer individuellen Höhe $z_i$ positioniert, während die Unterseiten der Lichtleiterplatten auf gleicher Höhe, also in einer Ebene, liegen. Es entsteht somit ein für einen Zeilensensor geeigneter Sensorkörper mit ebener Unterseite und muldenförmiger Oberseite, wobei sich auf der Oberseite der durch die Oberseiten Z benachbarter "virtueller" Prismen VP gebildete sensorisch aktive Bereich befindet, der als gekrümmte Linie durch die Mulde verläuft. Die Linienbreite, d. h. die Breite des sensorisch aktiven Bereichs, wird, wie in Ausführungsbeispiel 2 erläutert, durch die Lichtquelle mit nachfolgender Optik, die einen kollimierten Eingangsstrahl mit definiertem Querschnitt erzeugt, und die Bemessung des Strahlengangs in den Lichtleiterplatten eingestellt. Hier wird eine Linienbreite von 400 $\mu$m gewählt. Um die Bemessung des Strahlengangs in den Lichtleiterplatten zu erläutern, sind im unteren Teil von Fig. 11 zwei ausgewählte Lichtleiterplatten in der *y-z*-Ebene, in der sie sich flächig erstrecken, dargestellt, links eine Lichtleiterplatte $M_{Ta}$ aus dem Tal der ergonomisch geformten Mulde, rechts eine Lichtleiterplatte $M_{Ra}$ vom Rand der ergonomisch geformten Mulde. Es wird deutlich, dass die reflektierenden Prismen 31, 32, 33 in beiden Lichtleiterplatten und, für den Fachmann offensichtlich, auch in allen weiteren Lichtleiterplatten, bezogen auf die Oberseite der Lichtleiterplatte identisch angeordnet werden können, d. h. auch die Lage der reflektierenden Prismen 31, 32, 33 relativ zueinander kann in allen Lichtleiterplatten identisch gewählt werden. Lediglich die Höhe der Lichtleiterplatten, d. h. ihre Abmessung in *z*-Richtung, muss individuell gewählt werden. Fig. 11 zeigt im unteren Teil, dass sich die Höhe der beiden ausgewählten Lichtleiterplatten um die in der rechts dargestellten Lichtleiterplatte durch einen gestrichelten Doppelpfeil angegebene Höhendifferenz $\Delta H$ unterscheidet, welche ihrerseits der Höhendifferenz zwischen dem Muldenrand und dem Muldental im oberen Teil von Fig. 11 entspricht, die ebenfalls mit $\Delta H$ bezeichnet ist. Die in allen Lichtleiterplatten identische Anordnung aller reflektierenden Prismen 31, 32, 33 relativ zueinander und zur Oberseite der jeweiligen Lichtleiterplatte ermöglicht eine besonders effiziente Fertigung der Lichtleiterplatten. Dazu geeignete, dem Fachmann bekannte, Verfahren sind das Laserschneiden und das mechanische Stanzen, siehe z. B. die am 26.04.2018 abgerufenen Angebotsbeschreibungen von eurolaser GmbH, Lüneburg (https://www.eurolaser.com/de/lasersysteme/bearbeitungsverfahren-imvergleich/bearbeitung-von-kunststofffolien/) und Coloprint tech-films GmbH, Frankenthal (https://www.tech-films.de/produkte/polycarbonatfolien-pc/).

Der Sensorkörper wird dann gefertigt, indem die einzelnen Lichtleiterplatten passgenau übereinandergestapelt und verbunden werden. Diese Verbindung kann durch ein Nietverfahren erfolgen, das in Ausführungsbeispiel 7 erläutert wird. Andere Verfahren, z. B. Schrauben oder Kleben, sind ebenfalls anwendbar.

**Ausführungsbeispiel 5 - Sensor zur kombinierten Hellfeld- und Dunkelfeldabbildung eines Fingerabdrucks mit gemeinsamem Ausgangskanal für Hellfeld- und Dunkelfeldsignal**

Der erfinderische Gedanke, anstelle der bekannten diffusen Beleuchtung einer sensorisch aktiven Auflagefläche AF eine Bestrahlung der Auflagefläche mit einem kollimierten Eingangsstrahl E mit definiertem Querschnitt zu realisieren, erlaubt die Gewinnung einer Hellfeld- und einer Dunkelfeldabbildung eines Fingerabdrucks und die Kombination der in beiden Abbildungen enthaltenen unterschiedlichen Informationen, wodurch die Zuverlässigkeit der Fingerabdruckerkennung im Vergleich zu bekannten Fingerabdrucksensoren wesentlich erhöht wird.

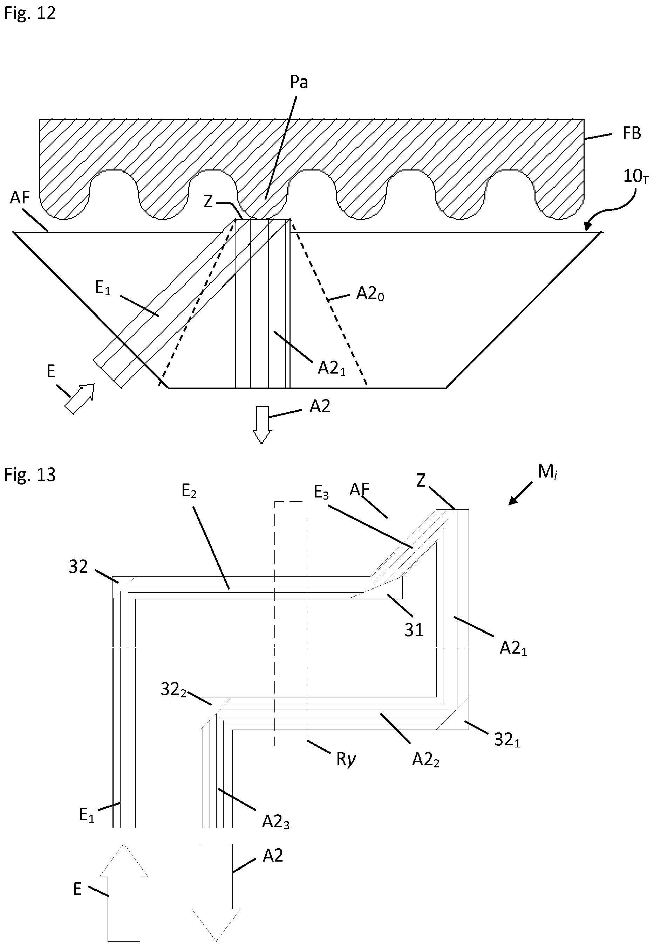

Da in den vorangehenden Ausführungsbeispielen und den Zeichnungen nur Hellfeldsignale, die durch Totalreflexion erhalten werden, dargestellt wurden, wird in Fig. 12 zunächst schematisch die Entstehung eines Dunkelfeldsignals durch gestörte Totalreflexion (FTIR) gezeigt.

In Fig. 12 wird ein kollimierter Eingangsstrahl E mit geringem Durchmesser, hier 280 $\mu$m, unter einem Einfallswinkel von 45° auf die Auflagefläche AF eines Sensorkörpers $10_T$ gelenkt, wo er einen zeilenförmigen, sensorisch aktiven Bereich Z der Breite 400 $\mu$m bestrahlt. Liegt in diesem schmalen Bereich keine Fingerabdruckpapille Pa auf (d. h. Luftkontakt), so erfolgt Totalreflexion unter einem Ausfallswinkel von 45°, wie z. B. in Fig. 7 dargestellt. Dieses durch Totalreflexion erzeugte Hellfeldsignal ist in Fig. 12 nicht dargestellt. Dargestellt ist vielmehr nur das im Falle des Aufliegens einer Fingerabdruckpapille Pa entstehende Dunkelfeldsignal, das aus FTIR resultiert. Die FTIR bedingt eine diffuse Streuung in einen großen Raumwinkelbereich. Die Streuung in x-Richtung (senkrecht zur Zeichenebene) wird durch den modularen Aufbau des Sensorkörpers $10_T$ beschränkt, der gewährleistet, dass das gestreute Signal innerhalb einer Lichtleiterplatte geführt wird und nicht in benachbarte Lichtleiterplatten übertritt. Somit wird das gestreute Signal $A2_0$ auf einen großen Winkelbereich in der Zeichenebene, der *y-z*-Ebene, beschränkt, der durch gestrichelte Linien angedeutet ist. Dieser große Winkelbereich erstreckt sich über die gesamte Lichtleiterplatte, also über einen Winkelbereich von 180°. Er ist zur besseren Visualisierung in Fig. 12 verkleinert dargestellt. Bei Verwendung einer leistungsstarken Lichtquelle zur Erzeugung des kollimierten Eingangsstrahls E genügt es nun, die Streustrahlung $A2_1$ aus einem kleinen Ausschnitt dieses großen Winkelbereichs auszuwählen, aus dem Sensorkörper $10_T$ auszukoppeln und als Ausgangsstrahl A2 einer (in Fig. 12 nicht dargestellten) Optik mit nachgeschaltetem Detektor zuzuführen. In Fig. 12 wird hierfür ein senkrecht zur Auflagefläche AF stehender Ausschnitt genutzt. Der Querschnitt dieses auf FTIR basierenden Ausgangssignals A2 wird durch die Abmessungen der Optik, die ggf. mit einer Blende versehen ist, definiert. Hier wird, angepasst an die Größe des vom Eingangsstrahl E bestrahlten Bereichs, ein Querschnitt mit einem Durchmesser von 400 $\mu$m gewählt. Der Sensorkörper $10_T$ ist als Trapezprisma ausgeführt, d. h. er hat einen trapezförmigen Querschnitt und kombiniert somit Merkmale eines dreiseitigen Prismas $10_D$ und eines Rechteckprismas $10_R$. Er ermöglicht es, Eingangsstrahl E und Ausgangsstrahl A2 so ein- bzw. auszukoppeln, dass auf Umlenkflächen innerhalb des Sensorkörpers verzichtet werden kann. Selbstverständlich können auch andere Sensorkörper verwendet werden, die aber geeignete Umlenkflächen in ihrem Inneren erfordern. Wie in Verbindung mit Fig. 6b erläutert, ist es auch hier möglich, den trapezförmigen Querschnitt des Sensorkörpers $10_T$ soweit zu verkleinern, dass der gewünschte Strahlengang gerade noch zu realisieren ist. Der in Fig. 12 dargestellte Querschnitt des Sensorkörpers $10_T$ könnte soweit verkleinert werden, dass seine Unterseite die Abmessung des sensorisch aktiven Bereichs Z erhält, während seine Oberseite die doppelte Abmessung des sensorisch aktiven Bereichs Z erhält. Die schrägen Seiten des trapezförmigen Querschnitts werden dabei parallel in Richtung des sensorisch aktiven Bereichs Z verschoben.

Fig. 13 zeigt nun eine zur Gewinnung eines Dunkelfeldsignals ausgelegte Ausführungsform einer Lichtleiterplatte $M_i$, bei der ein eingekoppelter Eingangsstrahl E über die Strahlabschnitte $E_1$, $E_2$, $E_3$ in bekannter Weise (wie in Ausführungsbeispiel 4 und Fig. 9) unter einem Winkel von 45°, der bei Luftkontakt größer ist als der Grenzwinkel der Totalreflexion, zum sensorisch aktiven Bereich Z der Auflagefläche AF geleitet wird. Liegt dort ein Tal Ta auf, so erfolgt Totalreflexion, was nicht dargestellt ist. Liegt im Bereich Z eine Fingerabdruckpapille Pa auf, tritt gestörte Totalreflexion (FTIR) ein, wobei Streustrahlung in einen großen Winkelbereich (in Fig. 13 nicht dargestellt, vgl. dazu Fig. 12) gestreut wird. Aus diesem Winkelbereich wird durch die prismenförmige Ausnehmung $32_1$ ein scharf begrenzter Ausgangsstrahl (Strahlabschnitt $A2_1$) ausgewählt, um 90° zu einer zweiten prismenförmigen Ausnehmung $32_2$ umgelenkt (Strahlabschnitt $A2_2$) und von dieser durch eine entgegengesetzte Umlenkung um -90° (Strahlabschnitt $A2_3$) aus dem Modul ausgekoppelt (Ausgangsstrahl A2) und über eine Optik einem Detektor zugeführt (beides nicht dargestellt). Eine Begrenzung der Abmessungen der Optik, z. B. durch eine Blende, ist hier nicht erforderlich. Die Länge des waagerechten Strahlengangs kann für jede Lichtleiterplatte $M_i$ individuell eingestellt werden, wie durch das senkrecht stehende gestrichelte Rechteck R*y* angedeutet ist. Die Anzahl der umlenkenden prismenförmigen Ausnehmungen 31, 32 und ihre Positionen können weitgehend frei gewählt werden, sodass die Positionen des Einkoppel- und Auskoppelbereichs unabhängig voneinander verschoben werden können. Ebenso können der Ein- und/oder der Auskoppelbereich auch auf eine Seitenfläche der Lichtleiterplatte verlegt werden.

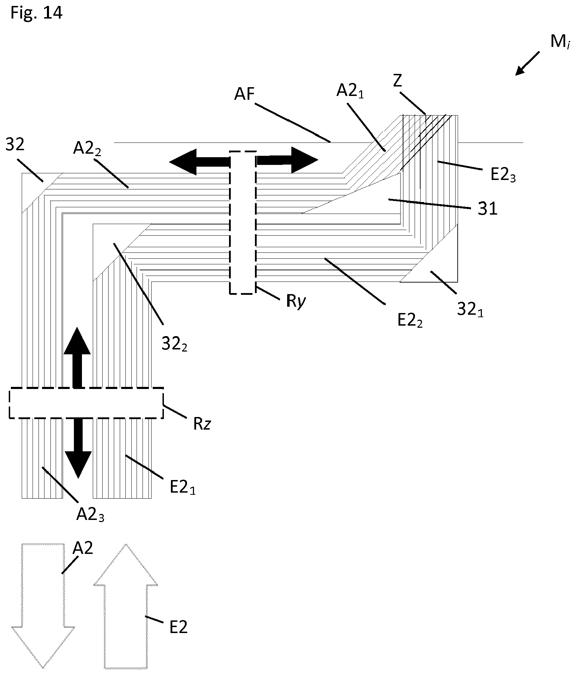

Die in Fig. 13 dargestellte Anordnung kann noch kompakter gestaltet werden, indem, wie in Fig. 14 gezeigt ist, die Strahlwege von Eingangsstrahl E2 und Ausgangsstrahl A2 unmittelbar benachbart geführt werden. Sowohl die Länge des waagerecht als auch die Länge des senkrecht verlaufenden Strahlwegs können, wie durch die gestrichelten Rechtecke $Rx$, $Ry$ symbolisiert ist, unabhängig voneinander eingestellt werden.

Die Anordnungen in Fig. 13 und 14 unterscheiden sich außerdem durch die Umkehrung der Strahlrichtung, wodurch sich auch die Funktionsweise grundsätzlich ändert. In Fig. 14 wird der Eingangsstrahl E2 an den Ausnehmungen $32_2$ und $32_1$ zunächst um 90° umgelenkt (Strahlabschnitte $E2_1$, $E2_2$), dann um -90° in die ursprüngliche Richtung zurückgelenkt und trifft als Eingangsstrahl $E2_3$ senkrecht auf den sensorisch aktiven Bereich Z. Wegen des senkrechten Einfalls tritt dort keine Totalreflexion auf. Jedoch erfolgt, wenn ein Finger auf der Auflagefläche aufliegt, dennoch eine Streuung an den Papillen. Vorteilhaft ist es hierbei, den Sensor mit NIR-Licht (nahes Infrarot) zu betreiben. NIR-Licht dringt in die Haut ein und wird dort gestreut. Die gestreute Strahlung nimmt somit Informationen über das Gewebe der Papillen auf, deren Auswertung die Zuverlässigkeit bei der Identifizierung eines Nutzers erhöhen kann. Ein Teil dieser diffus gestreuten Strahlung (Strahlabschnitt $A2_1$), die nicht auf FTIR beruht, erreicht nach Umlenkungen an den prismenförmigen Ausnehmungen 31 (in den Strahlabschnitt $A2_2$) und 32 (in den Strahlabschnitt $A2_3$) als Ausgangsstrahl A2 einen außerhalb des Sensorkörpers befindlichen, nicht dargestellten Detektor, der ein Dunkelfeldbild der Fingerabdruckpapillen registriert. Die Länge der Strahlwege in $y$- und $z$-Richtung kann auch hier durch den Anwender frei gewählt werden, was durch die gestrichelten Rechtecke $Ry$, $Rz$ und die Doppelpfeile symbolisiert wird.

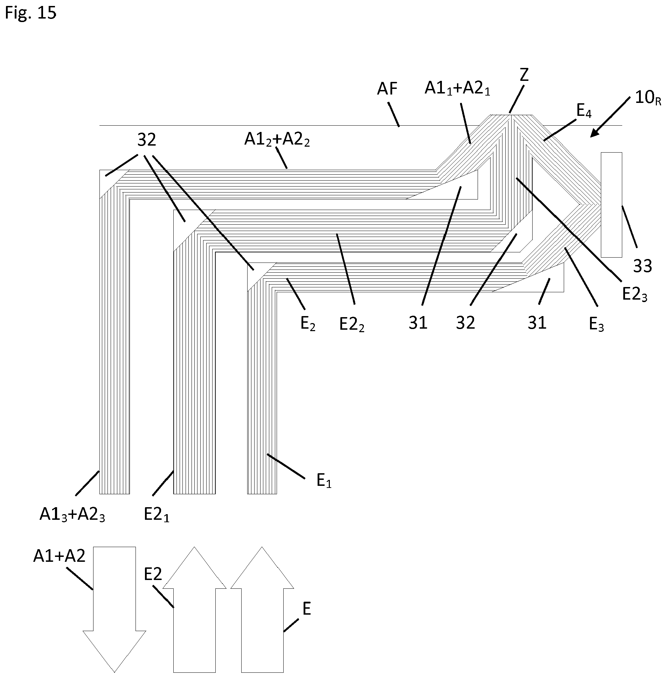

Fig. 15 zeigt nun in schematischer Darstellung einen erfindungsgemäßen Kombinations-Fingerabdrucksensor, der es ermöglicht, eine Hellfeld- und eine Dunkelfeldabbildung eines Fingerabdrucks simultan aufzunehmen. Dazu werden über zwei getrennte Strahlwege zwei Eingangsstrahlen E und E2, die an zumindest einem Merkmal unterscheidbar sind, in den Sensorkörper in Form eines Rechteckprismas $10_R$ eingekoppelt und über reflektierende Umlenkflächen zum sensorisch aktiven Bereich Z der Auflagefläche AF geleitet. Die reflektierenden Umlenkflächen werden wie in den vorangehenden Beispielen durch jeweils eine totalreflektierende Seitenfläche von prismenförmigen Ausnehmungen 31, 32, 33 gebildet. Die getrennten Strahlwege der zwei Eingangsstrahlen E und E2 weisen in Fig. 15 einen geringen Abstand auf. Dieser Abstand, der vom Anwender frei gewählt werden kann, ist durch die Position der prismenförmigen Ausnehmungen im Sensorkörper $10_R$ einstellbar.

Der Eingangsstrahl E wird, wie (mit umgekehrt gerichteter Strahlführung) in Ausführungsbeispiel 4 und Fig. 9 dargestellt, über die Strahlabschnitte $E_1$, $E_2$, $E_3$, $E_4$ geführt. Der Strahlabschnitt E4 trifft unter einem Winkel von 45° auf den sensorisch aktiven Bereich Z der Auflagefläche AF, wo er bei einer aufliegenden, ggf. bewegten, Fingerbeere im Bereich der Täler einer Totalreflexion (TIR), im Bereich der Papillen hingegen einer gestörten Totalreflexion (FTIR) unterliegt. Am sensorisch aktiven Bereich Z der Auflagefläche AF wird der Strahlabschnitt $E_4$ des Eingangsstrahls E unter einem Winkel von -45° in den Strahlabschnitt $A1_1$ des Ausgangsstrahls reflektiert und über zwei totalreflektierende Flächen zuerst um +45° (Strahlabschnitt $A1_2$) und dann um -90° umgelenkt (Strahlabschnitt $A1_3$) und als Ausgangsstrahl $A_1$ aus dem Sensorkörper ausgekoppelt. Wegen der FTIR im Bereich der Papillen ist die Lichtintensität im Bereich der Papillen geringer als im Bereich der Täler, sodass der ausgekoppelte Ausgangsstrahl A1 ein Bild des Fingerabdrucks mit dunklen Papillen vor hellem Hintergrund, also eine Hellfeldabbildung des Fingerabdrucks, enthält, welche von einem (nicht dargestellten) Zeilensensor in Echtzeit registriert wird.

Der Eingangsstrahl E2 wird wie oben anhand von Fig. 14 erläutert geführt. Er trifft nach zwei Umlenkungen mit seinem Strahlabschnitt $E2_3$ senkrecht auf den sensorisch aktiven Bereich Z der Auflagefläche AF, wo er nicht totalreflektiert, aber an (nicht dargestellten) Papillen diffus gestreut wird. Der Anteil dieses diffus gestreuten Ausgangsstrahls, der in den Strahlweg für den Ausgangsstrahl A1 fällt, wird auf demselben Strahlweg geführt (sodass sich die Strahlabschnitte $A1_1$ und $A2_1$, $A1_2$ und A22 sowie $A1_3$ und $A2_3$ überlagern, veranschaulicht durch ein Pluszeichen) und als Ausgangsstrahl A2 (überlagert mit dem Ausgangsstrahl A1) aus dem Sensorkörper $10_R$ ausgekoppelt. Die Papillen erscheinen somit hell vor dunklem Hintergrund. Somit enthält der ausgekoppelte Ausgangsstrahl A2 eine Dunkelfeldabbildung des Fingerabdrucks, welche von demselben (nicht dargestellten) Zeilensensor in Echtzeit registriert wird.

Es wird ein Zeilensensor gewählt, der für das die Eingangsstrahlen E und E2 und somit auch die Ausgangsstrahlen A1 und A2 unterscheidende Merkmal sensitiv ist und somit in der Lage ist, die überlagerten Ausgangsstrahlen A1 und A2 zu separieren und das Hellfeldsignal des Ausgangsstrahls A1 von dem Dunkelfeldsignal des Ausgangsstrahls A2 zu trennen.

Es wird somit eine Hellfeld- und Dunkelfeldsensorik in ein und demselben Fingerabdrucksensor realisiert.

Bei dem unterscheidenden Merkmal kann es sich um die Wellenlänge des Lichts handeln. Die Wellenlängen der Eingangsstrahlen E und E2 werden dazu in unterschiedlichen Spektralbereichen gewählt, z. B. unterschiedliche Farben sichtbaren Lichts. Strahlen mit unterschiedlichen Infrarot-Wellenlängen sind ebenfalls verwendbar. Alternativ können die Strahlen E und E2 als unterscheidendes Merkmal einen unterschiedlichen Polarisationszustand aufweisen. Weiter ist es möglich, eine zeitliche Intermittierung (Zeitmultiplex) zu realisieren, wobei die Lichtquellen zur Erzeugung der Strahlen E und E2 wechselweise ein- und ausgeschaltet werden.

Wenn zwei verschiedene Farben genutzt werden, kann eine Unterscheidung zwischen Luft und Papille über den Farbwechsel durchgeführt werden. Ein vorteilhafter Effekt dabei ist, dass sich bei teilweiser Abdeckung des Messbereichs eine Mischfarbe ergibt. Dies kann zur Kantenerkennung ausgenutzt werden. Auch bei der Bildverarbeitung ergeben sich Vorteile. Schmutz auf der Oberfläche kann so erkannt werden.

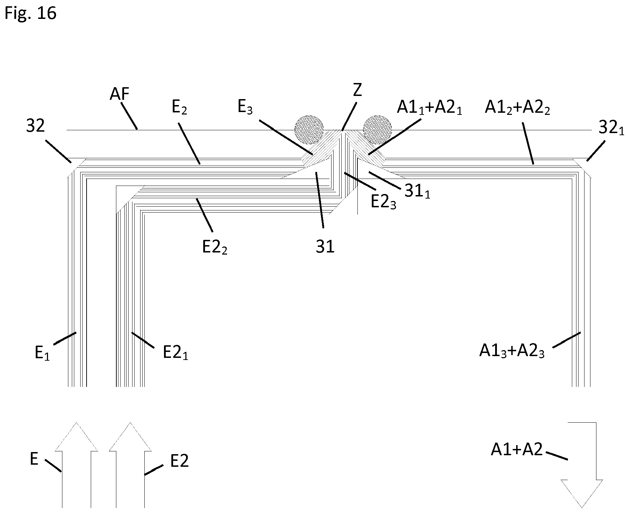

Der in Fig. 15 schematisch dargestellte Strahlengang in einem Kombinations-Fingerabdrucksensor kann in einfacher Weise modifiziert werden, ohne die Funktionsweise des Sensors zu verändern. Fig. 16 zeigt einen so modifizierten Kombinations-Fingerabdrucksensor. In dieser Anordnung wird der Eingangsstrahl E nach einer ersten 90°-Umlenkung an der reflektierenden Fläche der Ausnehmung 32 durch die reflektierende Fläche der Ausnehmung 31 unter einem Winkel von 45° direkt zum sensorisch aktiven Bereich Z der Auflagefläche (Bereich markiert durch zwei Kreise) reflektiert (Strahlabschnitt $E_3$). Der im sensorisch aktiven Bereich Z totalreflektierte Strahl (Strahlabschnitt $A1_1$) wird an einer zweiten Ausnehmung $31_1$ um 45° umgelenkt (Strahlabschnitt $A1_2$) und dann an einer zweiten Ausnehmung $32_1$ um 90° in den Strahlabschnitt $A1_3$ umgelenkt. Dadurch erhält der Strahlweg für den Ausgangsstrahl A1 einen großen Abstand von den Strahlwegen für die Eingangsstrahlen E und E2. Wie in Fig. 15 überlagert sich auch hier der Ausgangsstrahl A1, der eine Hellfeldabbildung eines Fingerabdrucks registriert, mit dem Ausgangsstrahl A2, der eine Dunkelfeldabbildung eines Fingerabdrucks registriert.

**Ausführungsbeispiel 6 - Sensor zur kombinierten Hellfeld- und Dunkelfeldabbildung eines Fingerabdrucks mit getrennten Ausgangskanälen für Hellfeld- und Dunkelfeldsignal**

In Ausführungsbeispiel 5 wurde ein Kombinations-Fingerabdrucksensor beschrieben, bei dem zwei Eingangsstrahlen E, E2 in zwei sich auf demselben Strahlweg überlagernde Ausgangsstrahlen A1 (Hellfeldsignal) und A2 (Dunkelfeldsignal) überführt werden.

Nachfolgend wird nun ein Kombinations-Fingerabdrucksensor beschrieben, bei dem diese Strahlführung umgekehrt wird, was zu einer überraschenden Erweiterung der Funktionalität des Sensors führt.

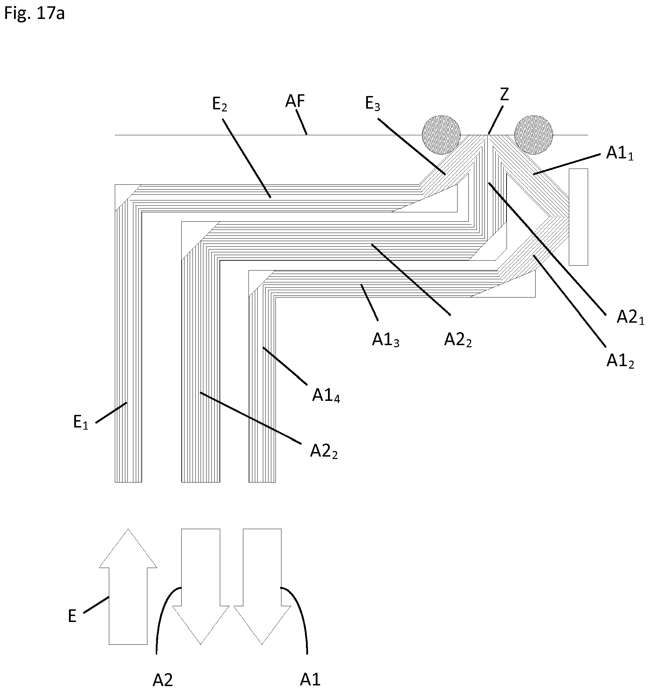

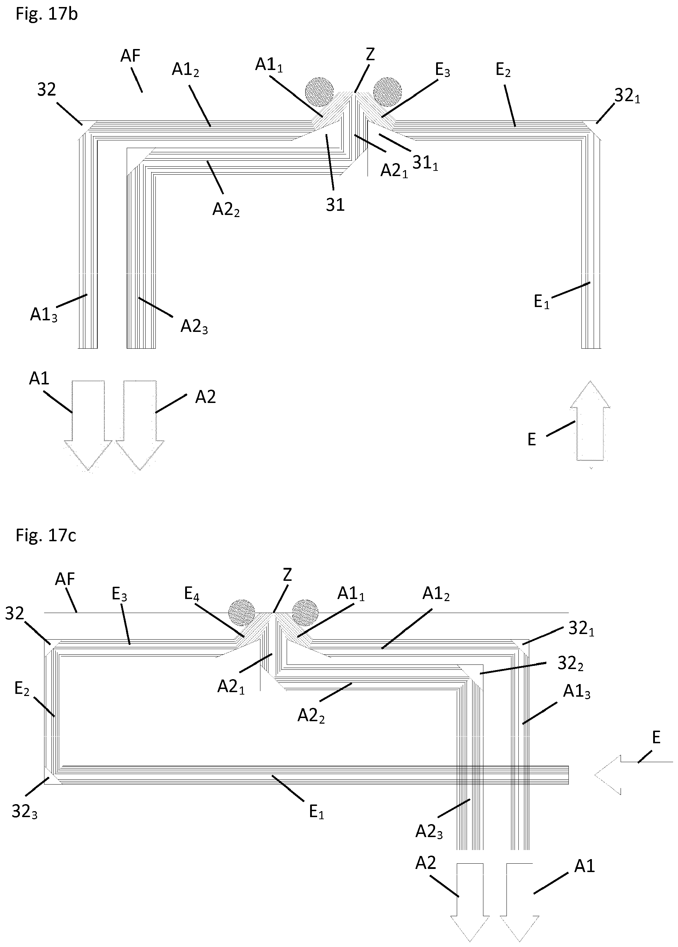

Fig. 17a-c zeigt in schematischer Darstellung drei Varianten eines solchen Sensors, der einen Strahlkanal für einen Eingangsstrahl E aufweist, welcher in den Sensorkörper eingekoppelt und darin durch Umlenkung an reflektierenden Flächen von Ausnehmungen über die Strahlabschnitte $E_1$, $E_2$, $E_3$, $E_4$ zum sensorisch aktiven Bereich Z der Auflagefläche AF gelenkt wird und dort unter einem Winkel von 45° auftrifft. Ist in diesem Bereich eine, ggf. bewegte, Fingerbeere berührend aufgelegt, so erfolgt im Bereich von Tälern Totalreflexion (TIR) in einen ersten Strahlweg, durch den der totalreflektierte Ausgangsstrahl über die Strahlabschnitte $A1_1$, $A1_2$, $A1_3$ zu einem ersten Auskoppelbereich verläuft, wo er als Ausgangsstrahl A1 aus dem Sensorkörper ausgekoppelt und einem (nicht dargestellten) Zeilendetektor zugeführt wird. Im Bereich von Papillen erfolgt hingegen gestörte Totalreflexion (FTIR) in einen großen Winkelbereich. Ein Teil dieser durch FTIR bedingten Streustrahlung gelangt in einen zweiten Strahlweg und verläuft über die Strahlabschnitte $A2_1$, $A2_2$, $A2_3$ zu einem zweiten Auskoppelbereich und wird dort als Ausgangsstrahl A2 einem weiteren (nicht dargestellten) Zeilendetektor zugeführt. Der Verlauf und der Querschnitt der Strahlwege wird in bereits beschriebener Weise durch reflektierende Flächen von Ausnehmungen im Inneren des Sensorkörpers festgelegt. Dabei können, wie in Fig. 17a, der eingekoppelte Strahl E und die ausgekoppelten Strahlen A1 und A2 benachbart, vorzugsweise parallel, geführt werden, sodass Ein- und Auskoppelbereiche nur geringe Abstände aufweisen, die bis auf null reduziert werden können, jedoch ohne sich zu überlagern. Ebenso können, wie in Fig. 17b gezeigt, der Einkoppelbereich und die Auskoppelbereiche einen großen Abstand, der lediglich durch die Abmessung des Sensorkörpers in y-Richtung beschränkt wird, erhalten. Weiter ist es möglich, wie in Fig. 17c gezeigt, auch eine Einkopplung des Eingangsstrahls E über eine Seitenfläche des Sensorkörpers vorzunehmen, während die Auskopplung der Ausgangsstrahlen A1 und A2 weiterhin über die Unterseite des Sensorkörpers erfolgt. Auch weitere Möglichkeiten zur Modifikation des Aufbaus, die für den Fachmann offensichtlich sind, fallen unter den Schutzbereich der Erfindung. Beispielsweise kann im Aufbau gemäß Fig. 17c durch das Entfernen der Prismen $32_1$ und $32_2$ erreicht werden, dass Ein- und Auskopplung über eine Seitenfläche des Sensorkörpers erfolgen. Wird zusätzlich noch das Prisma $32_3$ entfernt, so kann die Einkopplung des Eingangsstrahls E über die Unterseite des Sensorkörpers erfolgen, während die Auskopplung der Ausgangsstrahlen A1 und A2 über eine Seitenfläche des Sensorkörpers erfolgt.

Alle Varianten des vorab beschriebenen und in Fig. 17 visualisierten Kombinations-Fingerabdrucksensors können mit monochromatischem oder bichromatischem oder polychromatischem oder "weißem" Licht betrieben werden. Unter polychromatischem Licht ist Licht mit mindestens drei diskreten Wellenlängen (Spektralfarben) zu verstehen, die im sichtbaren oder im infraroten Bereich liegen. Unter "weißem" Licht ist Licht zu verstehen, welches einen kontinuierlichen Wellenlängenbereich beinhaltet, z. B. den Bereich des sichtbaren Lichts von ca. 380 nm bis ca. 780 nm. Ebenso kann "weißes" Infrarotlicht verwendet werden, bevorzugt ist dabei der Wellenlängenbereich 780 nm bis 3000 nm des nahen Infrarots (NIR). Auch Kombinationen dieser Wellenlängenbereiche sind möglich.

Ein mit monochromatischem Licht betriebener Kombinations-Fingerabdrucksensor ist in der Lage, eine Hellfeld- und eine Dunkelfeldabbildung desselben Fingerabdrucks zu liefern. Die beiden Abbildungen sind durch lichtempfindliche Detektoren registrierbar und durch eine nachgeschaltete Auswerteelektronik zu einem extrem kontraststarken Bild kombinierbar.

Wird der Kombinations-Fingerabdrucksensor mit "weißem" Licht betrieben, so erhält er zusätzlich zu der vorab beschriebenen Funktionalität, aus Hellfeld- und Dunkelfeldabbildung ein extrem kontraststarkes Bild eines Fingerabdrucks zu generieren, eine zusätzliche, nachfolgend beschriebene, Funktionalität, die es erlaubt, die Identifizierung eines Anwenders mit noch höherer Zuverlässigkeit zu gewährleisten:

Die mit "weißem" Licht erzeugte Hellfeldabbildung und auch die lichtschwächere Dunkelfeldabbildung liefern nämlich auch eine farbgetreue Abbildung des Fingerabdrucks, basierend auf der für jedes menschliche Individuum spezifischen Remission seiner Haut. Diese Unterschiede sind im Bereich des sichtbaren Lichts besonders groß. Bei Verwendung von sichtbarem weißem Licht können somit Personen mit geringfügig verschiedener Hautfarbe unterschieden werden. Im nahen infraroten Bereich ist die Remission aller menschlichen Hauttypen dagegen fast identisch, jedoch lassen sich große Unterschiede zwischen menschlicher Haut und häufig verwendeten Materialien zur Imitation eines Fingerabdrucks (zwecks Täuschung des Sensors) feststellen. Solche Materialien sind z. B. mit einem Fingerabdruckbild bedrucktes Papier oder Kunststofffolien mit einer 3D-Fingerabdrucknachbildung. Ein mit "weißem" NIR-Licht betriebener Sensor kann somit einen menschlichen Fingerabdruck zuverlässig von Fingerabdruck-Nachbildungen unterscheiden.

Durch Nutzung unterschiedlicher Farben können bei einem farbempfindlichen Sensor das Hellfeld und das Dunkelfeld leicht unterschieden werden und/oder der Übergang zwischen ihnen leicht erkannt werden. Außerdem ist die Eindringtiefe der Haut abhängig von der Farbe, Frequenz. Durch die räumliche Verschiebung aufgrund des Auftreffwinkels kann eventuell eine Falsifikaterkennung ermöglicht werden.

Eine ergonomisch geformte Auflagefläche kann auch bei einem quaderförmigen Sensorkörper und Ein- und Auskopplung durch dessen Seitenflächen (wie in Fig. 7 gezeigt) realisiert werden.

**Ausführungsbeispiel 7** - **Ergonomisch geformter Fingerabdrucksensor zur Positionierung an einer Kante**

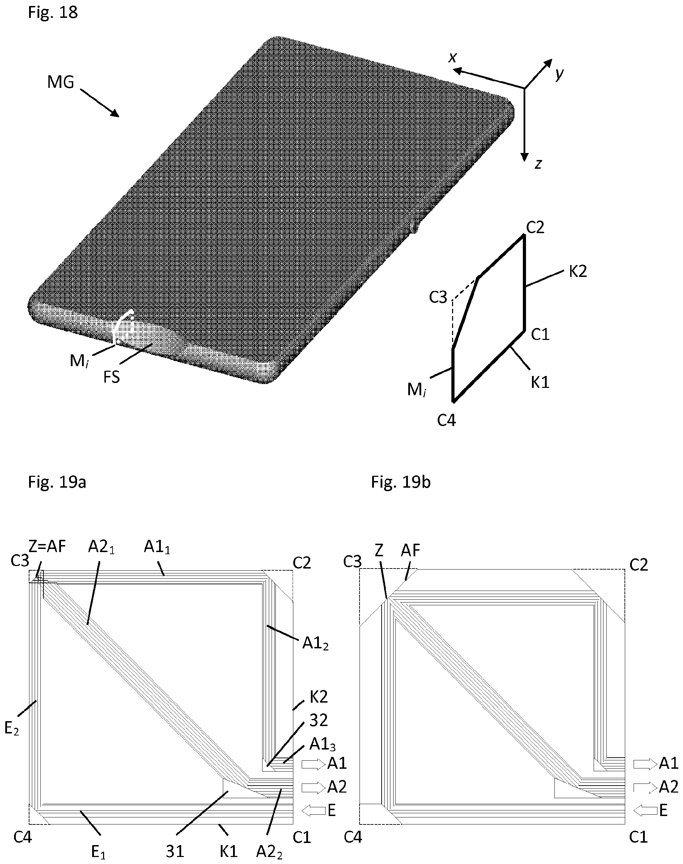

Eine für praktische Anwendungen relevante Aufgabe ist die Positionierung eines intuitiv leicht auffindbaren Fingerabdrucksensors an einem Mobilgerät. Fig. 18 zeigt eine schematische Darstellung eines so ausgestatteten Mobilgeräts MG, welches einen ergonomisch geformten Fingerabdrucksensor FS an einer seiner Kanten aufweist. Nachfolgend werden Aufbau und Funktionsweise eines solchen Sensors sowie ein Verfahren zu seiner Fertigung beschrieben.

Wie alle bisher beschriebenen Sensoren, weist der Fingerabdrucksensor einen modularen Aufbau auf, wobei jedes Modul $M_i$ in Form einer Lichtleiterplatte ausgeführt ist, die sich flächenhaft in der $y$-$z$-Ebene ausdehnt, jedoch in x-Richtung nur eine geringe Ausdehnung, vorzugsweise 50 $\mu$m, aufweist. Für hohe Anforderungen, z. B. die Abbildung von Poren, kann diese Ausdehnung, also die Dicke der Lichtleiterplatte, auf 25 $\mu$m verringert werden. In den kommenden Jahren ist die Verfügbarkeit von Lichtleiterplatten noch geringerer Dicke bis hinunter zu 10 $\mu$m zu erwarten. Bevorzugt werden die Lichtleiterplatten separat hergestellt und in einem nachfolgenden Schritt passgenau übereinander gestapelt, wodurch ein Sensorkörper mit der gewünschten Abmessung in x-Richtung entsteht. Die Abmessung in x-Richtung entspricht der Breite eines berührend auflegbaren Fingers, typischerweise 25 mm. Sie kann individuell auf den Nutzer des Mobilgeräts angepasst werden. In Fig. 18 ist die vereinfachte Kontur einer willkürlich ausgewählten Lichtleiterplatte $M_i$ im Bereich des Sensors FS eingezeichnet und rechts vergrößert dargestellt.

Die Lichtleiterplatten $M_i$ weisen bevorzugt eine quadratische oder rechteckige Grundform in der $y$-$z$-Ebene auf, wobei zwei benachbarte, in einer Ecke C1 zusammentreffende, Kanten K1 und K2 bei allen Lichtleiterplatten zumindest im Bereich der Ecke C1 identisch ausgeführt sind. Dieser bei allen Lichtleiterplatten identische Bereich an der Ecke C1 wird zum passgenauen Stapeln der Lichtleiterplatten genutzt.

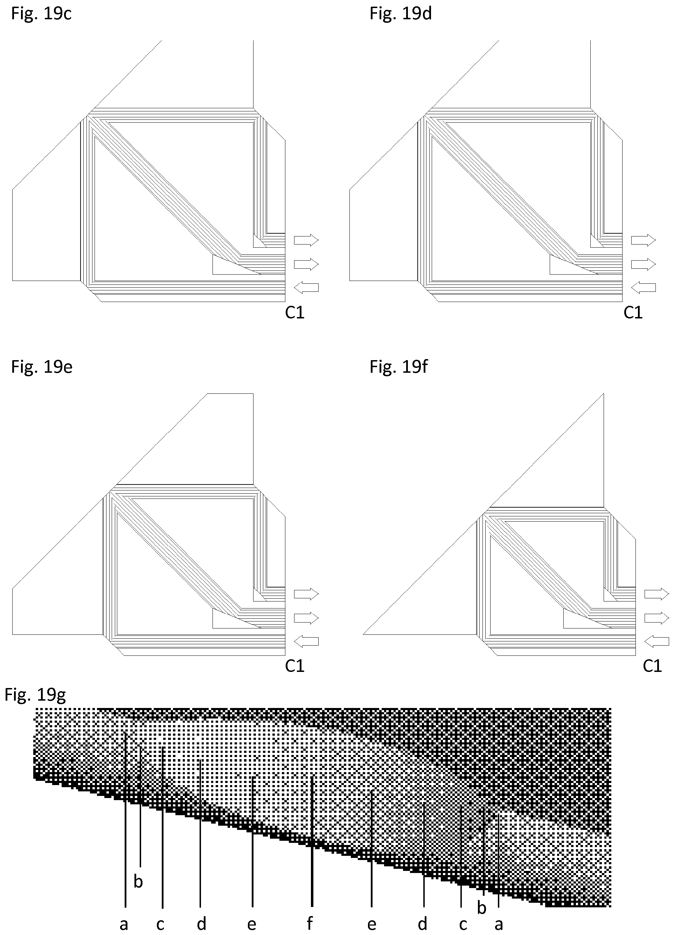

An der gegenüberliegenden Ecke C3 weisen die Lichtleiterplatten einen individuellen Anschnitt auf, der vorzugsweise unter einem Winkel von 45° verläuft. Indem die Tiefe des Anschnittes über die Folge der Lichtleiterplatten, d. h. entlang der x-Achse, hinweg sukzessive geändert wird, von einem Anschnitt minimaler Breite und Tiefe an den beiden Rändern des Sensors hin zu einem Anschnitt maximaler Breite und Tiefe in der Mitte des Sensors wird die gewünschte ergonomisch geformte Auflagefläche des Sensors realisiert. Die Ecken C2 und C4 jeder Lichtleiterplatte weisen ebenfalls individuell geformte 45°-Anschnitte auf (erst in Fig. 19 dargestellt), die zur Umlenkung eines in den Sensorkörper eingekoppelten, kollimierten Lichtstrahls durch Totalreflexion geeignet sind. Außerdem sind in jeder Lichtleiterplatte prismenförmige Ausnehmungen enthalten (ebenfalls erst in Fig. 19 dargestellt), die geeignet sind, einen an der Auflagefläche totalreflektierten Strahlanteil und einen an der Auflagefläche durch gestörte Totalreflexion diffus gestreuten Strahlanteil in jeweils einen Ausgangskanal umzulenken. Für jeden der beiden Strahlanteile reicht eine einmalige Umlenkung im Inneren der Lichtleiterplatte aus, es werden also nur zwei prismenförmige Ausnehmungen 31 und 32 (je eine für jeden Strahlanteil) benötigt. Bezogen auf den zur passgenauen Positionierung der Lichtleiterplatten genutzten Bereich K1-C1-K2 (Kante K1 - Ecke C1 - Kante K2) weisen die beiden prismenförmigen Ausnehmungen 31, 32 in allen Lichtleiterplatten identische Positionen auf. Somit ist nur eine einmalige Einrichtung eines Werkzeugs zur Herstellung dieser prismenförmigen Ausnehmungen erforderlich, wodurch eine kostengünstige Fertigung der Lichtleiterplatten gewährleistet wird. Als Fertigungsverfahren können Stanzen oder Schneiden, bevorzugt Laserschneiden, eingesetzt werden.

Fig. 19a-f zeigt in schematischer Darstellung die Ausführung der Lichtleiterplatten an ausgewählten Positionen des Sensors in $x$-Richtung. Alle Lichtleiterplatten weisen eine identische quadratische Grundform auf (hilfsweise durch gestrichelte Linien in Fig. 19a, b eingezeichnet), sie unterscheiden sich lediglich durch die Größe der Anschnitte an den drei Ecken C2, C3, C4.

Wie in Ausführungsbeispiel 2 beschrieben, sollen $N$ = 500 Lichtleiterplatten $M_i$ der Dicke 50 $\mu$m zu einem Sensorkörper der Dicke 25 mm gestapelt werden. Somit kann die Position der Lichtleiterplatten durch ihre Nummer $i$ ($i$ = 1, ..., 500) angegeben werden. Da ein Finger zumindest annähernd spiegelsymmetrisch ist, wird auch der Sensor spiegelsymmetrisch gestaltet, indem die Lichtleiterplatten $i$ = 1, 500; $i$ = 2, 499; ...; $i$ = 249, 250 paarweise identisch ausgeführt werden.

Fig. 19a zeigt die Lichtleiterplatten $i$ = 1 und i= 500, die den Sensor beidseitig begrenzen. Sie weisen eine quadratische Grundform auf, die an drei Ecken C2, C3, C4 unterschiedlich angeschnitten ist. Die Seitenlänge des Quadrats sollte zwischen 2 mm und 4 mm liegen. Hier wird beispielhaft eine Seitenlänge von 3 mm gewählt. Die Bereiche zur Ein- und Auskopplung der Lichtstrahlen sind zueinander benachbart an der in der Abbildung rechts liegenden Kante K2 der Lichtleiterplatte angeordnet. Der Eingangsstrahl E wird an der Kante K2 in die Lichtleiterplatte eingekoppelt und verläuft über die Strahlabschnitte $E_1$ und $E_2$ zum sensorisch aktiven Bereich Z, der als 45°-Anschnitt an der Ecke C3 ausgebildet und, da es sich um die den Sensor begrenzenden Lichtleiterplatten handelt, mit der Auflagefläche AF identisch ist. Das Sensormaterial wird wieder so gewählt, dass bei Kontakt des sensorisch aktiven Bereichs Z mit Luft die Bedingung für Totalreflexion erfüllt ist. Der 45°-Anschnitt an der Ecke C4 wirkt totalreflektierend und lenkt den Eingangsstrahl vom Strahlabschnitt $E_1$ in den Strahlabschnitt $E_2$ um. Der Querschnitt des eingekoppelten und über den Anschnitt an der Ecke C4 umgelenkten Eingangsstrahls wird so gewählt, dass er den 45°-Anschnitt an der Ecke C3 vollständig bestrahlt. Der eingekoppelte und der am 45°-Anschnitt an der Ecke C3 totalreflektierte Strahl definieren somit ein "virtuelles" Prisma, dessen Grundfläche (die in Fig. 19a als Hypotenuse des rechtwinklig-gleichschenkligen Dreiecks an der angeschnittenen Ecke C3 erscheint) den sensorisch aktiven Bereich Z bildet. Der an diesem Bereich totalreflektierte Ausgangsstrahl (Strahlabschnitt $A1_1$) wird über den Anschnitt an der Ecke C2 in den Strahlabschnitt $A1_2$ überführt, über die prismenförmige Ausnehmung 32 in Richtung des Auskoppelbereichs gelenkt (Strahlabschnitt $A1_3$ umgelenkt und als Ausgangsstrahl $A_1$ aus dem Sensorkörper ausgekoppelt und auf einen (nicht dargestellten) ersten Zeilensensor gelenkt. Ein Teil des im sensorisch aktiven Bereich Z aufgrund gestörter Totalreflexion diffus in einen (nicht dargestellten) großen Winkelbereich gestreuten Signals trifft als Ausgangsstrahl $A2_1$ auf die Umlenkfläche der prismenförmigen Ausnehmung 31, wird dort in Richtung des Auskoppelbereichs umgelenkt (Strahlabschnitt $A2_2$) und als Ausgangsstrahl A2 aus dem Sensorkörper ausgekoppelt und auf einen (nicht dargestellten) zweiten Zeilensensor gelenkt. Mithilfe der Umlenkfläche der prismenförmigen Ausnehmung 31 wird hier, wie bei Fig. 13 erläutert, ein geeigneter Ausschnitt des diffus gestreuten Signals ausgewählt, aus der Lichtleiterplatte ausgekoppelt und einem Detektor zugeführt.

Die Zeilensensoren weisen mindestens zwei, bevorzugt aber vier oder acht Zeilen auf. Im Falle eines Zeilensensors mit vier Zeilen erhält der sensorisch aktive Bereich Z eine bevorzugte Breite von 200 $\mu$m (entsprechend der Länge der Hypotenuse des rechtwinklig-gleichschenkligen Dreiecks an der angeschnittenen Ecke C3). Im Falle eines Zeilensensors mit acht Zeilen erhält der sensorisch aktive Bereich eine bevorzugte Breite von 400 $\mu$m, entsprechend einer Ortsauflösung von 50 $\mu$m. Die Breite des sensorisch aktiven Bereichs kann auf 200 $\mu$m, entsprechend einer Ortsauflösung von 25 $\mu$m, verringert werden. Bei den Lichtleiterplatten i = 1 und i = 500 ist die Auflagefläche AF für den dort entlangzuführenden Rand eines Fingers somit genauso breit wie der sensorisch aktive Bereich Z.

Fig. 19b zeigt die Lichtleiterplatten i = 21 und i = 480 (wobei die Nummerierungen wie auch bei den folgenden Figuren 19c-f genähert sind), die von den Sensorseiten geringfügig (um ca. 1 mm) ins Innere des Sensorkörpers verlagert sind. Gegenüber den Lichtleiterplatten der Fig. 19a sind die 45°-Anschnitte an den Ecken C2, C3 und C4 größer ausgeführt. Dadurch wird die Auflagefläche AF im Bereich der angeschnittenen Ecke C3 vergrößert. Jedoch bleibt der Strahlquerschnitt des Eingangsstrahls E unverändert, sodass die Größe des sensorisch aktiven Bereichs Z der Auflagefläche AF ebenfalls unverändert bleibt. Der Strahlengang wird durch die Vergrößerung der Anschnitte an den Ecken C2 und C4 lediglich parallel soweit ins Innere des Sensorkörpers verschoben, dass der Eingangsstrahl $E_2$ wie bisher einen 400 $\mu$m breiten sensorisch aktiven Bereich Z der nun ca. 1,5 mm breiten Auflagefläche AF bestrahlt. Der Verlauf der Strahlabschnitte $A1_1$, $A1_2$, $A1_3$ des Ausgangsstrahls A1 bleibt bis auf die erwähnte Parallelverschiebung unverändert, ebenso bleibt der Verlauf der Strahlabschnitte $A2_1$, A22 des Ausgangsstrahls A2 unverändert.

Die Figuren 19c-f zeigen schrittweise weiter in Richtung der Sensormitte (der Symmetrieebene des Sensors verschobene Lichtleiterplatten, bei denen die 45°-Anschnitte sukzessive weiter vergrößert werden. Die Nummerierungen der Lichtleiterplatten sind i = 51 und i = 450 für Fig. 19c, i = 101 und i = 400 für Fig. 19d sowie i = 171 und i = 330 für Fig. 19e. In Fig. 19f wird für die benachbart zur Symmetrieebene des Sensors liegenden Lichtleiterplatten i =249 und i = 250 die maximal mögliche Größe des 45°-Anschnitts bei Ecke C3 erreicht, der diagonal durch die quadratische Lichtleiterplatte mit der Seitenlänge 3 mm verläuft. Die Auflagefläche AF erhält somit eine Breite von 3 mm·$\sqrt{2}$ ≈ 4,2 mm, die Tiefe des Anschnitts erreicht den Maximalwert 3 mm·$\sqrt{2}/2$ ≈ 2,1 mm. Wie bei Fig. 19b erläutert, bleiben der Strahlquerschnitt, die Strahlverläufe (bis auf Parallelverschiebung) und die Breite des sensorisch aktiven Bereichs unverändert. Ebenso bleiben, wie die Figuren 19a-f zeigen, bei allen Lichtleiterplatten die Positionen und Abmessungen der prismenförmigen Ausnehmungen 31, 32 und der Ein- und Auskoppelbereiche unverändert. Die Positionen der Lichtleiterplatten aus Fig. 19a-f sind in Fig. 19g, einem vergrößerten Ausschnitt aus Fig. 18, markiert und mit dem jeweiligen Buchstaben gekennzeichnet.

Bei den in Fig. 19b-e gezeigten Lichtleiterplatten, also bei Lichtleiterplatten, die zwischen einer Sensorkante und der Sensormitte zu positionieren sind, ist es zudem möglich, den Anschnitt an der Ecke C3, der die Auflagefläche bildet, abzurunden, sodass ein sanfter Übergang zu den der Auflagefläche benachbarten Kanten erfolgt. Diese Abrundung, durch die eine ergonomisch besonders günstige Form der Lichtleiterplatten erzielt wird, ist in den Abbildungen nicht dargestellt. Der sensorisch aktive Bereich Z bleibt dabei unverändert, seine ebene Ausführung wird beibehalten, sodass der Strahlengang unverändert bleibt.

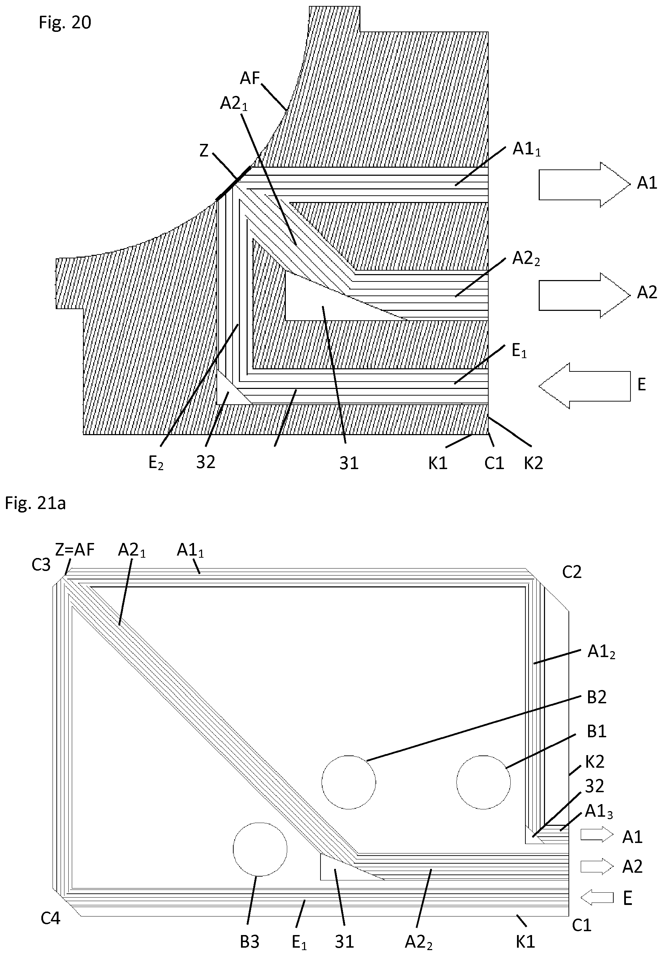

Durch Stapelung der 500 Lichtleiterplatten in der vorgegebenen Reihenfolge wird der gewünschte Sensorkörper mit einer ergonomisch geformten Mulde erhalten. Im hier beschriebenen Beispiel weist die Mulde die Form eines Ausschnitts aus einem Zylindermantel auf. Es ist möglich, die Muldenform für einen Nutzer individuell zu gestalten, indem dessen Fingerform erfasst und durch entsprechend gewählte Anschnitte der Lichtleiterplatten nachgebildet wird. Die Mulde bildet dadurch eine Negativabformung des Fingers. Insbesondere kann die Muldenform weiter optimiert, d. h. der Form einer Fingerbeere noch besser angepasst werden, indem die Anschnitte der Lichtleiterplatten im Bereich der Ecke C3, welche die Auflagefläche für den Finger definieren, nicht eben, sondern konkav, d. h. nach innen gewölbt, ausgeführt werden. Dabei ist es vorteilhaft, den im Vergleich zur Auflagefläche sehr schmalen sensorisch aktiven Bereich Z weiterhin eben auszuführen, um eine Verzerrung der Strahlen A1 und A2 zu vermeiden, und nur die benachbarten Bereiche, die sensorisch nicht aktiv sind, konkav auszuführen. Fig. 20 zeigt in schematischer Darstellung ein Beispiel einer so geformten Lichtleiterplatte.

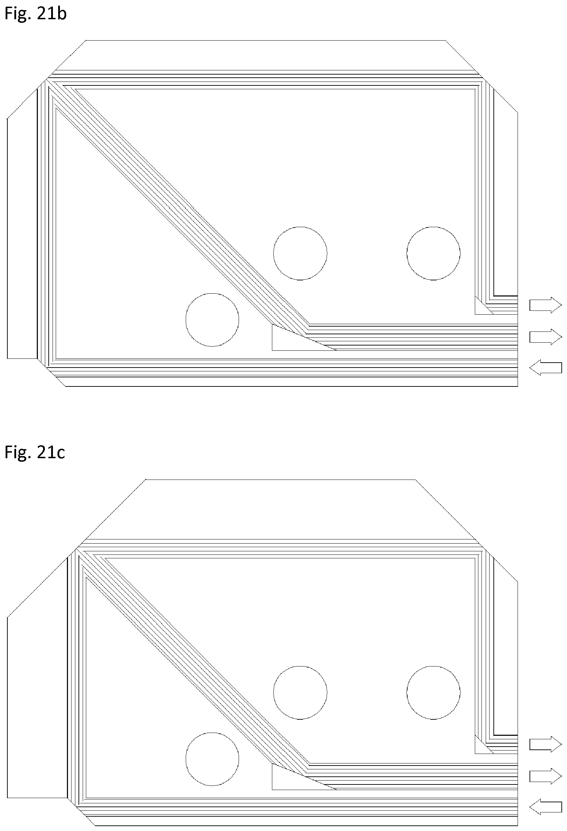

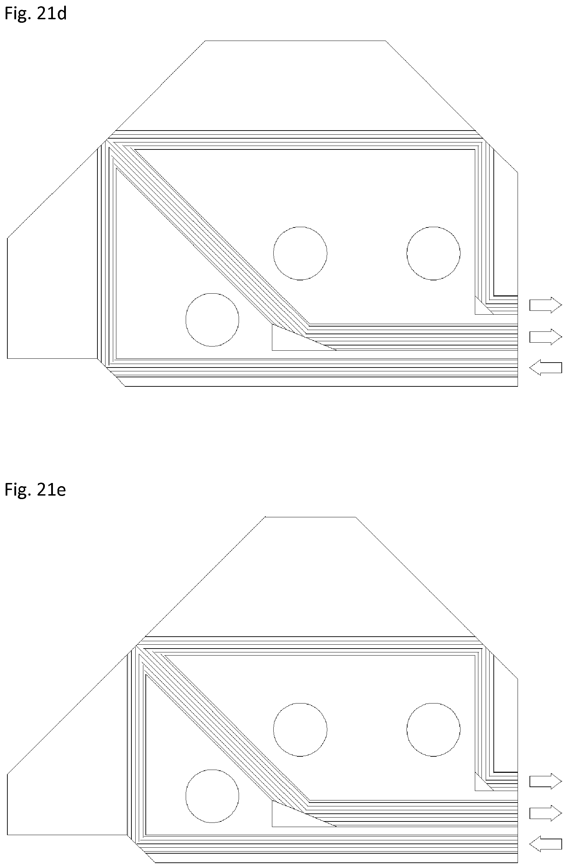

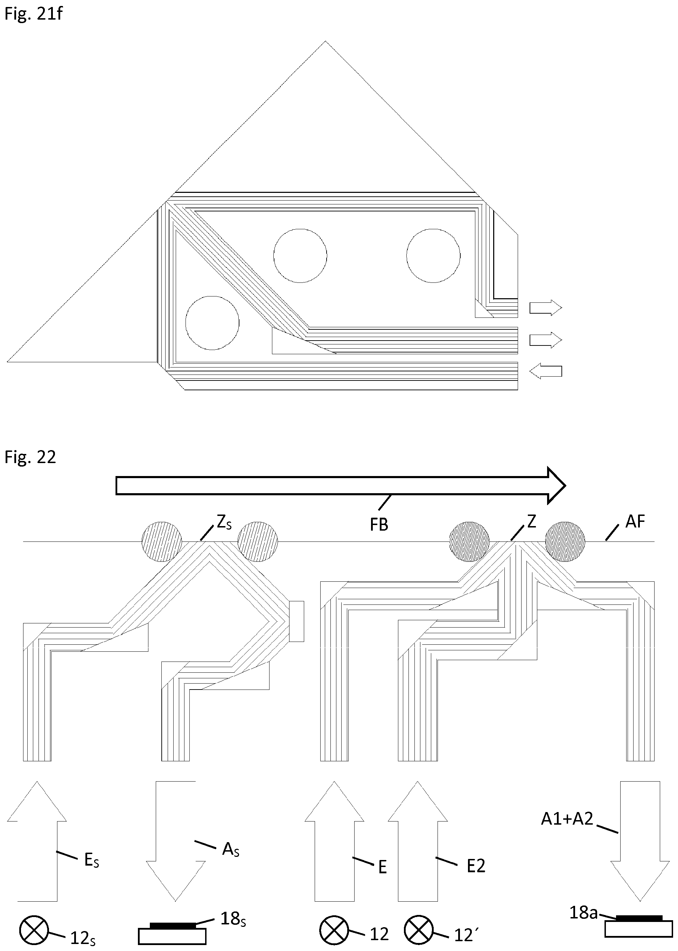

Fig. 21a-f zeigt in schematischer Darstellung eine zweite Ausführungsform von Lichtleiterplatten, die statt einer quadratischen Grundform eine rechteckige Grundform aufweisen. Diese rechteckige Grundform ist wieder bei allen Lichtleiterplatten identisch, die Lichtleiterplatten unterscheiden sich lediglich durch die Größe der Anschnitte an den drei Ecken C2, C3, C4. Sie sind an denselben Positionen der x-Achse des Sensors wie in Fig. 19g zu positionieren. Der Bereich der nichtangeschnittenen Ecke C1, an der die Kanten K1 und K2 zusammentreffen, wird auch hier zum passgenauen Stapeln der Lichtleiterplatten genutzt. Zum Fixieren der gestapelten Lichtleiterplatten sind drei kreisförmige Aussparungen B1, B2, B3 vorgesehen, die in allen Lichtleiterplatten dieselbe Position bezogen auf die Ecke C1 aufweisen und somit zwei durchgehende geradlinige Kanäle bilden, die zum Durchführen von Nieten oder anderen Verbindungselementen geeignet sind. Die Fixierung der Lichtleiterplatten und Herstellung eines kompakten Sensorkörpers erfolgt durch eine Nietverbindung oder durch eine andere mechanische Verbindung, z. B. Schraubverbindung, die mit einer Klebeverbindung kombiniert werden kann. Um eine hinreichende Fixierung zu realisieren, genügt es, beliebige zwei der drei Aussparungen B1, B2, B3 vorzusehen und mit einer Nietverbindung oder anderen mechanischen Verbindung auszustatten. Auf die dritte Aussparung kann verzichtet werden. Jedoch ist die Ausführung mit drei Aussparungen bevorzugt, da sie es erlaubt, den modularen Sensorkörper stabiler aufzubauen.

Ansonsten entsprechen Aufbau und Funktionsweise dieses aus Lichtleiterplatten mit rechteckiger Grundform gefertigten Sensors völlig dem vorab beschriebenen Sensor aus Lichtleiterplatten mit quadratischer Grundform. Sie werden daher an dieser Stelle nicht erneut beschrieben.

Der Sensorkörper ist in allen Beispielen modular aufgebaut. Zur Realisierung des modularen Aufbaus werden zwei wesentlich verschiedene Vorgehensweisen genutzt: a) Es wird von einem massiven Sensorkörper ausgegangen, der durch das Einbringen parallel verlaufender Kanäle innere Grenzschichten in vorgegebenen, bevorzugt äquidistanten, Abständen erhält. Jeweils zwei benachbarte Grenzschichten definieren ein Modul in Form einer Lichtleiterplatte. b) Es wird die benötigte Anzahl von Modulen (Lichtleiterplatten) mit der erforderlichen Geometrie und Oberflächenstrukturierung oder -beschichtung bereitgestellt und zu einem kompakten Sensorkörper zusammengefügt.

Anstelle der zur Lichtstrahlumlenkung verwendeten Ausnehmungen in Form von dreiseitigen Prismen 31, 32 oder quaderförmigen Prismen 33 können auch metallisch verspiegelte Flächen in die Lichtleiterplatten eingebracht werden. Die prismenförmigen Ausnehmungen können auch weitere geeignete Formen aufweisen, beispielsweise einen halbkreisförmigen Querschnitt.

Der Eingangsstrahl kann in allen Ausführungsbeispielen eine zeitlich konstante Intensität oder eine zeitlich variable Intensität, z. B. eine definierte Pulsstruktur, aufweisen.

**Ausführungsbeispiel 8 - Fingerabdrucksensor mit energiesparender Aktivierungseinheit**

Mobilgeräte müssen im ungenutzten Zustand in einen Standby-Betrieb umschalten, in welchem sie nur eine minimale Leistungsaufnahme (minimalen Stromverbrauch) haben dürfen, jedoch müssen sie ohne Zeitverzögerung zuverlässig aus diesem Standby-Betrieb aktivierbar sein.

Die vorab beschriebenen, modular aufgebauten Fingerabdrucksensoren können mit einer einfachen und kostengünstigen Aktivierungseinheit ausgestattet werden, die eine solche Aktivierung gewährleistet. Eine solche Aktivierungseinheit, ausgeführt als Schalterelement, wird nachfolgend anhand der schematischen Darstellung in Fig. 22 beschrieben. Das Schalterelement kann auf eine einzige Lichtleiterplatte eines Sensorkörpers beschränkt sein, vorteilhafterweise erstreckt es sich über mehrere Lichtleiterplatten.

Fig. 22 zeigt eine so ausgestattete Lichtleiterplatte. Sie weist, in der Abbildung rechts gelegen, den aus Fig. 15 bekannten und dort ausführlich beschriebenen Aufbau zur Detektion eines Fingerabdrucks auf. Zusätzlich weist sie, in der Abbildung links gelegen, ein Schalterelement auf, dessen Aufbau und Funktionsweise dem aus Fig. 9 bekannten und dort ausführlich beschriebenen Aufbau zur Detektion eines Fingerabdrucks entspricht. Selbstverständlich können auch andere vorab beschriebene Ausführungen kombiniert werden.

Das Schalterelement wird von einer Lichtquelle 12s mit einem Eingangssignal Es versorgt, das in bekannter Weise unter einem Einfallswinkel von 45° auf einen sensorisch aktiven Bereich $Z_S$ geführt wird, wo es im Falle von Luftkontakt totalreflektiert und in bekannter Weise als Ausgangssignal As zu einem Detektor 18s geführt wird. Solange der Luftkontakt besteht, also keine Fingerbeere berührend über den sensorisch aktiven Bereich $Z_S$ hinweggeführt wird, registriert der Detektor 18s eine konstante Intensität (abhängig von der gewählten, unten erläuterten, Betriebsart ein zeitlich konstantes Signal oder konstante Pulsintensitäten). Bei Kontakt mit einer Fingerbeere tritt in Bereichen von Tälern gestörte Totalreflexion (FTIR) ein, wodurch das vom Detektor 18s registrierte Signal eine Verringerung der Intensität zeigt. Diese Intensitätsverringerung löst den Schaltvorgang aus, bei dem die Lichtquelle 12 zur Erzeugung des Eingangssignals E (und, falls ein zweites Eingangssignal E2 verwendet wird, auch dessen Lichtquelle 12') sowie der Zeilendetektor 18a in Echtzeit aktiviert werden. Der waagerechte Pfeil in Fig. 22 symbolisiert die Bewegung einer Fingerbeere FB über die Auflagefläche. Es wird deutlich, dass die Fingerbeere zuerst den sensorisch aktiven Bereich $Z_S$ überstreicht, wodurch der Fingerabdrucksensor aktiviert wird, und danach den sensorisch aktiven Bereich Z erreicht, wo der Fingerabdruck durch den Zeilendetektor 18a in seiner gesamten Breite detektiert wird.

In Fig. 10b, der Darstellung einer ergonomisch geformten Mulde eines Fingerabdrucksensors mit einem linearen Messbereich $m_{lin}$, ist beispielhaft eine geeignete Position des Schalterelements angegeben. Eine von links nach rechts über die Mulde bewegte Fingerbeere erreicht zuerst das Schalterelement in den Bereichen $S_1$ bzw. $S_3$ und danach den Messbereich $m_{lin}$ des dann bereits aktivierten Sensors. Die Abmessungen des optisch aktiven Bereichs des Schalterelements können bis auf die Dimension einer einzelnen Lichtleiterplatte, die eine Dicke von 50 μm hat, reduziert werden. Es genügt somit ein (in der Abbildung zur besseren Visualisierung vergrößert dargestellter) optisch aktiver Bereich in Form eines Quadrats $Z_S$ mit 50 μm Seitenlänge. Da er wesentlich kleiner ist als die Strukturen in einem Fingerabdruck (Papille-Tal-Abstand > 200 μm), ist ein Helligkeitswechsel aufgrund des Übergangs zwischen Tal (Luftkontakt, Totalreflexion) und Papille (gestörte Totalreflexion) eindeutig nachweisbar. Die Aktivierungseinheit weist in diesem Fall nur ein einziges Schalterelement auf.

Eine solche Aktivierungseinheit erweist sich aber in der Praxis als anfällig für Verschmutzungen. Alternativ wird sie deshalb über mehrere Lichtleiterplatten, welche jeweils ein Schalterelement aufweisen, ausgedehnt, wobei Praxistests gezeigt haben, dass eine Ausdehnung über 100 Lichtleiterplatten, entsprechend einem strichförmigen optisch aktiven Bereich der Länge 5 mm und der Breite 50 μm, ausreichend ist. Kommt es zu einer lokalen Verschmutzung der Auflagefläche, so bleibt in der Regel ein ausreichend großer Teilbereich des optisch aktiven Bereichs frei von der Verschmutzung, sodass weiterhin eine Detektion von Helligkeitsänderungen zur Aktivierung des Fingerabdrucksensors gewährleistet ist. Eine noch größere Ausdehnung ist möglich, bringt jedoch keinen Vorteil. Vielmehr kann in diesem Fall durch die Bildung des Helligkeitsmittelwerts über einen sehr großen Bereich eine Helligkeitsänderung sogar maskiert werden, wodurch die Funktionalität der Aktivierungseinheit eingeschränkt wird.

Die gewünschte extrem niedrige Leistungsaufnahme des Schalterelements wird durch folgende Merkmale erreicht: Der optisch aktive Bereich des Schalterelements ist sehr klein (von einer quadratischen Form mit einer Seitenlänge von 50 μm bis zu einer Strichform mit den Abmessungen 5 mm x 50 μm), sodass eine Lichtquelle geringer Leistung für seine Bestrahlung ausreicht. Im Falle mehrerer Schalterelemente können diese durch eine einzige Lichtquelle bestrahlt werden. Die Lichtquelle muss nicht im Dauerbetrieb arbeiten. Es genügt ein energiesparender Pulsbetrieb, wobei die Pulswiederholfrequenz PWF (Repetitionsrate der Pulse) und das Tastverhältnis der Pulsfolge an die typische Bewegungsgeschwindigkeit $v_F$ einer über die Auflagefläche hinweggeführten Fingerbeere angepasst werden.

Experimentelle Untersuchungen haben gezeigt, dass die typische Bewegungsgeschwindigkeit $v_F$ einer Fingerbeere 300 mm/s beträgt. Dabei wird ein ca. 15 mm langer Bereich einer Fingerbeere über die Auflagefläche hinweggeführt. Dieser Kontakt dauert somit ca. 50 ms. Um einen solchen Kontakt sicher zu registrieren, muss mit einer Pulswiederholdauer PWD gearbeitet werden, die wesentlich kürzer als die Dauer des Kontakts ist. Geeignet ist eine Pulswiederholdauer PWD von 20 ms. Der maximale Abstand zwischen zwei Papillen im Fingerabdruck beträgt, wie bereits erläutert, 500 μm. Es wird eine Zeitdauer $t_B$ von ca. 1,7 ms benötigt, um einen entsprechenden Strukturabschnitt (Papille-Tal-Papille oder Tal-Papille-Tal) dieser Breite über den optisch aktiven Bereich hinwegzuführen. Die Pulsdauer PD des zum Nachweis eines Hell-Dunkel-Wechsels zeitaufgelöst zu analysierenden Pulses muss daher mindestens 1,7 ms betragen. Dabei wird angenommen, dass die Papillen senkrecht zur Bewegungsrichtung des Fingers stehen. Diese Annahme ist für den vorderen Bereich einer Fingerbeere sehr gut erfüllt. Im mittleren Bereich einer Fingerbeere wird jedoch ein zunehmend schräger Verlauf beobachtet, wodurch der Strukturabschnitt (Papille-Tal-Papille oder Tal-Papille-Tal) scheinbar vergrößert wird, wodurch sich die Zeitdauer $t_B$ verlängert. Dieser Effekt kann noch verstärkt werden, wenn die Fingerbeere schräg über die Auflagefläche hinweggeführt wird. Um diesen Effekt zu berücksichtigen, muss die Pulsdauer *PD* vergrößert werden. Geeignet ist eine Pulsdauer *PD* = 4 ms. Der Puls ist zum Nachweis eines Helligkeitswechsels (TIR, FTIR) zeitaufgelöst zu messen, wobei die Zeitauflösung 10 % der Pulsdauer betragen sollte, in diesem Fall also 0,4 ms.

Es bestehen keine besonderen Anforderungen an die spektrale Breite der erzeugten Lichtpulse. Verwendbar ist z. B. eine Weißlichtquelle, die Lichtblitze auf den optisch aktiven Bereich sendet. Es kann weißes Licht aus dem sichtbaren oder aus dem infraroten Bereich verwendet werden. Eine Strahlformung ist bei quadratischer Form des optisch aktiven Bereichs nicht notwendig, bei Strichform des optisch aktiven Bereichs kann eine Zylinderlinse zur Strahlformung direkt in die transparente Kapselung der Lichtquelle integriert sein.

**Schlussbemerkungen**

Für den Fachmann offensichtliche Modifizierungen der in den Ausführungsbeispielen beschriebenen Lösungen fallen ebenfalls unter den Schutzbereich dieser Anmeldung. Z. B. müssen die Lichtleiterplatten nicht exakt senkrecht zur Auflagefläche stehen, sondern können auch geneigt sein, z. B. wenn ein quaderförmiger Sensorkörper zu einem Parallelepiped verformt wird. Eine entsprechende Verformung ist auch bei einem dreiseitigen Prisma möglich. Der Einfallswinkel des Eingangsstrahl E auf die Auflagefläche ist nicht zwingend auf 45° beschränkt. Beliebige Winkel, bei denen Totalreflexion erfolgt, sind möglich. Jedoch ist ein Einfallswinkel von 45° fertigungstechnisch vorteilhaft, insb. für die Kombination mit den um 45° bzw. 22,5° gegenüber der Auflagefläche geneigten Umlenkflächen U.

Da der Sensorkörper in beliebiger Größe und Form gefertigt werden kann, ist seine Anwendung nicht auf Fingerabdrucksensoren beschränkt. Er erlaubt vielmehr die Fertigung beliebiger Sensoren zur Detektion und Prüfung von Oberflächenstrukturen flexibler oder elastischer Körper. Möglich sind z. B., wie oben erwähnt, Handflächensensoren, aber auch Sensoren zur Prüfung von Oberflächenprofilen, z. B. Profilen von Autoreifen. Solche für den Fachmann offensichtlichen Anwendungen fallen ebenfalls unter den Schutzbereich dieser Anmeldung.

**Bezugszeichenliste**

| | |
|---|---|
| 10 | - Sensorkörper (allgemein) |
| $10_D$ | - Sensorkörper, ausgeführt als dreiseitiges Prisma |
| $10_R$ | - Sensorkörper, ausgeführt als quaderförmiges Prisma (kurz: Rechteckprisma) |
| $10_T$ | - Sensorkörper, ausgeführt als Prisma mit trapezförmigem Querschnitt |
| 12, 12' | - Lichtquellen zur Erzeugung der Eingangsstrahlen E und E2 |
| $12_S$ | - Lichtquelle für Schalterelement |
| 14, 14a- | Kollimator |
| 16, 16a- | Abbildungsoptik |
| 18 | - Flächendetektor |
| 18a | - Zeilendetektor |
| $18_S$ | - Detektor für Schalterelement |
| 31, $31_1$,..., 32, $32_1$,... | - Ausnehmungen in Form dreiseitiger Prismen zur Bildung totalreflektierender Umlenkflächen U |
| 33 | - quaderförmige Ausnehmung zur Bildung einer totalreflektierenden Umlenkfläche U |
| A | - Ausgangsstrahl (bei einem Flächensensor) |
| A1 | - totalreflektierter Ausgangsstrahl |
| $A1_1$, $A1_2$,... | - Strahlabschnitte des totalreflektierten Ausgangsstrahls A1 im Sensorkörper (zwischen sensorisch aktivem Bereich Z und Auskoppelbereich) |
| $A2_1$, $A2_2$,... | - Strahlabschnitte des Ausgangsstrahls A2, der auf gestörter Totalreflexion oder diffuser Streuung basiert, im Sensorkörper (zwischen sensorisch aktivem Bereich Z und Auskoppelbereich) |
| $A_{fok}$ | - auf den Flächensensor 18 oder den Zeilensensor 18a fokussierter Ausgangsstrahl |
| AF | - Auflagefläche eines Sensorkörpers |
| $A_L$, $A_R$ | - Begrenzungslinien des Ausgangsstrahls A (bei einem Flächensensor) |
| A | - Ausgangssignal des Schalterelements |
| B1,...,B3 | - kreisförmige Aussparungen in einer Lichtleiterplatte |
| E | - kollimierter Eingangsstrahl, der an der Auflagefläche totalreflektiert wird |
| $E_1$, $E_2$,... | - Strahlabschnitte des totalreflektierten Eingangsstrahls E im Sensorkörper (zwischen Einkoppelbereich und sensorisch aktivem Bereich Z) |
| E2 | - kollimierter Eingangsstrahl, der an der Auflagefläche diffus gestreut wird |

E2$_1$, E2$_2$,... — Strahlabschnitte des diffus gestreuten Eingangsstrahls E2 im Sensorkörper (zwischen Einkoppelbereich und sensorisch aktivem Bereich Z)

E$_{div}$ — divergenter Strahl der Lichtquelle 12 vor dem Kollimator

E$_L$, E$_R$ — Begrenzungslinien des kollimierten Eingangsstrahls hinter dem Kollimator (bei einem Flächensensor)

E$_S$ — Eingangsstrahl für Schalterelement

FB — Fingerbeere mit Papillen Pa und Tälern Ta

FS — Fingerabdrucksensor

G, G', G$_S$ — Grenzschicht, ausgeführt als Aussparung

m$_{lin}$ — linearer Messbereich

m$_{circ}$ — kreisringförmiger Messbereich

MG — Mobilgerät

M$_i$ — Module, die einen Sensorkörper bilden ($i$ = 1, ..., $N$)

M$_{Ra}$ — Modul (Lichtleiterplatte) vom Rand einer ergonomisch geformten Mulde

M$_{Ta}$ — Modul (Lichtleiterplatte) aus dem Tal einer ergonomisch geformten Mulde

O$_G$ — Oberfläche einer Aussparung G oder G'

Pa — Papille

R — Grenzschicht, ausgeführt als reflektierende Fläche

R$y$, R$z$ — Symbole für die frei wählbaren Abmessungen jedes Moduls M$_i$ in $y$- und $z$-Richtung

Ta — Tal

U — Umlenkfläche

VP — "virtuelles" Prisma

Z — sensorisch aktiver Bereich der Auflagefläche eines Sensorkörpers für einen Zeilensensor

Z$_S$ — sensorisch aktiver Bereich eines Schalterelements, erstreckt über ein Modul

Z$_S$' — sensorisch aktiver Bereich eines Schalterelements, erstreckt über mehrere Module

**Formelzeichen mit Bezug zum Sensorkörper**

$a_S$ — Abstand zweier benachbarter streifenförmiger Aussparungen G$_S$

$a_x$, $a_y$ — Abmessungen eines Sensorkörpers 10$_D$ in der Ebene der Auflagefläche AF

$d_G$ — Dicke der Grenzschicht zwischen zwei benachbarten Modulen M$_i$

$d_M$ — Dicke eines Moduls M$_i$

$h$ — Höhe eines Sensorkörpers 10$_D$

$\Delta H$ — Höhendifferenz zwischen Muldenrand und Muldental einer ergonomisch geformten Senke

$H_R$ — Höhe eines Rechteckprismas 10$_R$ (z-Richtung)

$n$ — Brechungsindex (allgemein)

$n_F$ — Brechungsindex von (menschlichem) Gewebe, hier: Finger

$n_L$ — Brechungsindex der Umgebung (hier: Luft)

$n_S$ — Brechungsindex des Sensormaterials

$L_R$ — Länge eines Rechteckprismas 10$_R$ ($y$-Richtung)

$N$ — Anzahl der Module (Lichtleiterplatten) eines Sensorkörpers

$R_{rms}$ — Oberflächenrauigkeit des Sensorkörpers (root-mean-squared roughness)

$s_x$, $s_z$ — Abmessungen des Querschnitts einer streifenförmigen Aussparung G$_S$

x, y, z — Achsen eines dem Sensorkörper zugeordneten orthogonalen Koordinatensystems

$\alpha_L$, $\alpha_F$, $\alpha_S$ — Winkel zwischen dem Strahl im jeweiligen Medium (Luft, Gewebe, hier: Finger, Sensor) und dem Lot auf die Grenzfläche

$\alpha_E$ — Einfallswinkel des Eingangsstrahls auf die Auflagefläche

$\alpha_1$ — Einfallswinkel eines über eine Seitenfläche eingekoppelten Lichtstrahls auf eine Basisfläche einer Licht- leiterplatte

$\alpha_P$ — Einfallswinkel auf eine Umlenkfläche U

$\alpha_{SL}$ — Grenzwinkel der Totalreflexion beim Übergang Sensorkörper-Luft

$\alpha_{SF}$ — Grenzwinkel der Totalreflexion beim Übergang Sensorkörper-Gewebe (Finger)

$\lambda$ — Wellenlänge des in den Sensor eingekoppelten Lichts

$z_i$ — unterschiedliche Oberflächenhöhen der virtuellen Prismen im Messbereich m$_{lin}$

$z_{OF}$ — gleiche Oberflächenhöhen der virtuellen Prismen im Messbereich m$_{circ}$

**Formelzeichen, verwendet bei der Bemessung von Zeilendetektor und Schalterelement**

$B_F$       - Breite eines Objekts (hier: Finger)
$D_x, D_y$   - Pixelabmessungen, die die horizontale und vertikale Auflösung bestimmen
$f_Z$       - Zeilenfrequenz
$N_P$      - Anzahl der Pixel in einer Zeile
$PD$      - Pulsdauer beim Betrieb eines Schalterelements
$PWD$    - Pulswiederholdauer beim Betrieb eines Schalterelements
$t_B$       - Zeitdauer des Überstreichens eines Papille-Tal-Papille-Abschnitts
$T_Z$      - Zeit zur Erfassung einer Zeile
$v_F$       - Geschwindigkeit eines Objekts (hier: Finger)

**Patentansprüche**

**1.** Optischer Fingerabdrucksensor, aufweisend einen Sensorkörper (10) mit einer Auflagefläche (AF) für eine Fingerbeere (FB), die einen sensorisch aktiven Bereich (Z) umfasst, mindestens eine Lichtquelle (12, 12') zur Erzeugung mindestens eines in den Sensorkörper (10) einkoppelbaren Eingangsstrahls (E, E2), mindestens einen Kollimator (14, 14a), mindestens eine Abbildungsoptik (16, 16a) und mindestens einen Detektor (18, 18a), welcher mit einer Auswerteelektronik verbunden ist, **dadurch gekennzeichnet, dass** der Sensorkörper (10) einen modularen Aufbau aus parallelen Lichtleiterplatten ($M_i$), die senkrecht oder geneigt zur Auflagefläche (AF) angeordnet und durch Grenzschichten voneinander getrennt sind, aufweist, sodass der mindestens eine Lichtstrahl (E, E2) anteilig in jede der den Sensorkörper (10) bildenden Lichtleiterplatten ($M_i$) über eine ihrer Seitenflächen eingekoppelt und innerhalb der jeweiligen Lichtleiterplatte gehalten und zur Auflagefläche (AF) weitergeleitet werden kann, wo er in mindestens einen Ausgangsstrahl (A1, A2) überführt wird, welcher über die mindestens eine Abbildungsoptik (16, 16a) dem mindestens einen Detektor (18, 18a) zuführbar, von diesem detektierbar und mithilfe der Auswertelektronik auswertbar ist.

**2.** Optischer Fingerabdrucksensor, **dadurch gekennzeichnet, dass** der Sensorkörper (10) als dreiseitiges Prisma ($10_D$), Rechteckprisma ($10_R$) oder als Trapezprisma ($10_T$) ausgebildet ist.

**3.** Optischer Fingerabdrucksensor nach Anspruch 1 oder 2, **dadurch gekennzeichnet, dass** die Grenzschichten als flächenhafte Aussparungen (G, G') ausgeführt sind, die sich zumindest über einen Teil einer Basisfläche einer Lichtleiterplatte ($M_i$) erstrecken.

**4.** Optischer Fingerabdrucksensor nach Anspruch 1 oder 2, **dadurch gekennzeichnet, dass** die Grenzschichten durch hinreichend eng angeordnete streifenförmige Aussparungen ($G_S$) gebildet werden, wobei der Abstand $\alpha_S$ zweier benachbarter streifenförmiger Aussparungen ($G_S$), gemessen von der Unterkante der oberen streifenförmigen Aussparung bis zur Oberkante der unteren streifenförmigen Aussparung, etwa der halben Wellenlänge des von der mindestens einen Lichtquelle (12, 12') erzeugten Lichts entspricht, während die Abmessungen des Querschnitts der streifenförmigen Aussparungen ($G_S$) zumindest etwa der doppelten Wellenlänge $\lambda$ des von der min-destens einen Lichtquelle (12, 12') erzeugten Lichts entsprechen, wobei die Tiefe $S_x$ der streifenförmigen Ausspa-rungen ($G_S$) wesentlich kleiner als die Dicke $d_M$ der Lichtleiterplatten ($M_i$) zu wählen ist.

**5.** Optischer Fingerabdrucksensor nach Anspruch 1 oder 2, **dadurch gekennzeichnet, dass** die Grenzschichten durch reflektierende Schichten R gebildet werden, die in Form einer Metallfolie oder einer Lackschicht ausgeführt sein können.

**6.** Optischer Fingerabdrucksensor nach einem der Ansprüche 1 bis 5, **dadurch gekennzeichnet, dass** in den Sensorkörper (10, $10_D$, $10_R$, $10_T$) ein Eingangsstrahl (E) einkoppelbar und unter einem Einfallswinkel $\alpha_E$, der zwischen den Winkeln $\alpha_{SL}$ = arcsin (1/$n_S$) und $\alpha_{SF}$ = arcsin ($n_F$/$n_S$) liegt, wobei ns und $n_F$ die Brechungsindizes des Sensorkörpers (10) und einer Papille (Pa) einer Fingerbeere (FB) sind, auf den sensorisch aktiven Bereich (Z) der Auflagefläche (AF) führbar ist, sodass in Bereichen ohne Kontakt zu Papillen eine Totalreflexion des Eingangsstrahls (E) in einen totalreflektierten Ausgangsstrahl (A1) gewährleistet wird, während in Bereichen mit Kontakt zu Papillen (Pa) infolge gestörter Totalreflexion eine diffuse Streuung in einen großen Winkelbereich gewährleistet wird, aus dem ein Ausgangsstrahl (A2) auswählbar ist, sodass der totalreflektierte Ausgangsstrahl (A1) eine Hellfeldabbildung eines auf der Fingerbeere (FB) befindlichen Fingerabdrucks, der diffus gestreute Ausgangsstrahl (A2) hingegen eine Dunkelfeldabbildung eines auf der Fingerbeere (FB) befindlichen Fingerabdrucks enthält.

7. Optischer Fingerabdrucksensor nach einem der Ansprüche 1 bis 5, **dadurch gekennzeichnet, dass** in den Sensorkörper (10, $10_D$, $10_R$, $10_T$) ein Eingangsstrahl (E2) einkoppelbar und unter einem Einfallswinkel $\alpha_E = 0°$, also senkrecht, auf den sensorisch aktiven Bereich (Z) der Auflagefläche (AF) führbar ist, sodass in Bereichen mit Kontakt zu Papillen (Pa) eine diffuse Streuung des Eingangsstrahls (E2) in einen großen Winkelbereich gewährleistet wird, aus dem ein Ausgangsstrahl (A2) auswählbar ist, welcher eine Dunkelfeldabbildung eines auf der Fingerbeere (FB) befindlichen Fingerabdrucks enthält.

8. Optischer Fingerabdrucksensor nach Anspruch 6 oder 7, **dadurch gekennzeichnet, dass** in den Sensorkörper (10, $10_D$, $10_R$, $10_T$) zwei mindestens ein unterscheidendes Merkmal aufweisende Eingangsstrahlen (E, E2) einkoppelbar sind, wobei der Eingangsstrahl (E) schräg unter einem Winkel $\alpha_E$, der zwischen den Winkeln $\alpha_{SL} = \arcsin$ ($1/n_S$) und $\alpha_{SF} = \arcsin$ ($n_F/n_S$) liegt, und der Eingangsstrahl (E2) senkrecht unter einem Einfallswinkel $\alpha_E = 0°$ auf den sensorisch aktiven Bereich (Z) der Auflagefläche (AF) führbar sind, sodass der Eingangsstrahl (E) in einen totalreflektierten Ausgangsstrahl (A1) und der Eingangsstrahl (E2) diffus in einen großen Winkelbereich gestreut wird, aus dem ein gestreuter Ausgangsstrahl (A2) auswählbar ist, der sich mit dem totalreflektierten Ausgangsstrahl (A1) überlagert, wobei die in den sich überlagernden Ausgangsstrahlen (A1+A2) enthaltenen Hellfeld- und Dunkelfeldabbildungen eines Fingerabdrucks mithilfe des unterscheidenden Merkmals trennbar sind.

9. Optischer Fingerabdrucksensor nach Anspruch 6, 7 oder 8, **dadurch gekennzeichnet, dass** der Sensorkörper (10, $10_D$, $10_R$, $10_T$) in seinem Inneren positionierte Umlenkflächen (U) aufweist, an denen der in den Sensorkörper (10, $10_D$, $10_R$, $10_T$) eingekoppelte mindestens eine Eingangsstrahl (E, E2) über Strahlabschnitte ($E_1$, $E_2$,...; $E2_1$, $E2_2$,...) so in Richtung der Auflagefläche (AF) und/oder des sensorisch aktiven Bereichs (Z) lenkbar ist, dass er unter dem erforderlichen Einfallswinkel $\alpha_E$ auf den sensorisch aktiven Bereich (Z) der Auflagefläche (AF) trifft und dass der von dem sensorisch aktiven Bereich (Z) der Auflagefläche (AF) ausgehende totalreflektierte Ausgangsstrahl (A1) und/oder der von dem sensorisch aktiven Bereich (Z) der Auflagefläche (AF) ausgehende diffus gestreute Ausgangsstrahl (A2) über Strahlabschnitte ($A1_1$, $A1_2$,...; $A2_1$, $A2_2$,...) jeweils in Richtung eines Detektors (18, 18a) umlenkbar sind.

10. Optischer Fingerabdrucksensor nach Anspruch 9, **dadurch gekennzeichnet, dass** die Umlenkflächen (U) als Oberflächen von prismenförmigen Ausnehmungen (31, $31_1$,..., 32, $32_1$,..., 33) im Sensorkörper (10, P) ausgebildet sind, die relativ zu einem Strahlabschnitt ($E_1$, $E_2$,...; $E2_1$, $E2_2$,...) des Eingangsstrahls (E, E2) oder einem Strahlabschnitt ($A1_1$, $A1_2$,...; $A2_1$, $A2_2$,...) des Ausgangsstrahls (A1, A2) so ausgerichtet sind, dass für den jeweiligen Strahlabschnitt die Bedingung für Totalreflexion an einer Umlenkfläche (U) erfüllt ist.

11. Optischer Fingerabdrucksensor nach Anspruch 9, **dadurch gekennzeichnet, dass** die Umlenkflächen (U) als metallisch reflektierende Flächen ausgeführt sind.

12. Optischer Fingerabdrucksensor nach einem der Ansprüche 1 bis 11, **dadurch gekennzeichnet, dass** jede Lichtleiterplatte $M_i$ eine individuelle Form aufweist, wodurch die Bildung eines Sensorkörpers (10, $10_D$, $10_R$, $10_T$) mit einer ergonomisch geformten Auflagefläche (AF) in Gestalt einer Mulde oder einer anderen frei wählbaren Gestalt ermöglicht wird.

13. Optischer Fingerabdrucksensor nach einem der Ansprüche 1 bis 12, **dadurch gekennzeichnet, dass** der Detektor als Flächendetektor (18) oder als Zeilendetektor (18a) ausgeführt ist.

14. Verfahren zur Fertigung eines modular strukturierten, aus Lichtleiterplatten ($M_i$) aufgebauten, Sensorkörpers (10, $10_D$, $10_R$, $10_T$) für einen optischen Fingerabdrucksensor nach einem der Ansprüche 1 bis 13, **dadurch gekennzeichnet, dass** die Lichtleiterplatten ($M_i$) durch Laserschneiden oder Stanzen ihre äußere Form und/oder innenliegende prismenförmige Ausnehmungen (31, 32, 33) erhalten und durch Laserablation oder Metallisierung mit Grenzschichten (G, G', $G_S$, R) ausgestattet werden, danach passgenau übereinander gestapelt werden und mittels Kleben, Nieten oder Schrauben miteinander verbunden werden.

15. Verfahren zur Fertigung eines modular strukturierten Sensorkörpers (10, $10_D$, $10_R$, $10_T$) für einen optischen Fingerabdrucksensor nach einem der Ansprüche 1 bis 13, **dadurch gekennzeichnet, dass** der Sensorkörper (10, $10_D$, $10_R$, $10_T$) aus einem massiven Werkstück gefertigt wird und dass zur Herstellung der modularen Struktur rasterartig angeordnete Kanäle durch Laserbohren oder chemisches Ätzen in den Sensorkörper (10, $10_D$, $10_R$, $10_T$) eingebracht werden oder dass der Sensorkörper (10, $10_D$, $10_R$, $10_T$) additiv mit einem 3D-Druckverfahren aufgebaut wird.

Fig. 1

AF

$a_x$

$a_y$

10, 10$_D$

$x$

$y$

$z$

Fig. 2

M$_i$ ($i$=1, ..., $N$)

M$_N$

M$_3$

M$_2$

M$_1$

Fig. 3

Fig. 4

Fig. 5a

$M_i$   G′   X

G′

$M_i$   G′

$O_G$

X — X

Fig. 5b

$G_S$   $s_x$

$M_i$   $G_S$   X

$s_z$

$M_i$

$a_s$

$G_S$

$G_S$

y

z

$G_S$

x

X

z

X — X

Fig. 5c

Fig. 6a

Fig. 6b

Fig. 7

Fig. 8

Fig. 9

Fig. 10a

Fig. 10b

Fig. 11

Fig. 12

Fig. 13

Fig. 14

Fig. 15

Fig. 16

Fig. 17a

Fig. 17b

Fig. 17c

Fig. 18

MG

$M_i$

FS

x

y

z

C2

K2

C3

C1

$M_i$

K1

C4

Fig. 19a

Fig. 19b

Z=AF

$A2_1$

$A1_1$

C3

C2

$A1_2$

K2

32

$A1_3$

$E_2$

$\Rightarrow$ A1

$\Rightarrow$ A2

$\Leftarrow$ E

C4

$E_1$

31

K1

$A2_2$

C1

Z

AF

C3

C2

$\Rightarrow$ A1

$\Rightarrow$ A2

$\Leftarrow$ E

C4

C1

Fig. 19c

Fig. 19d

C1

C1

Fig. 19e

Fig. 19f

C1

C1

Fig. 19g

a    b    c    d    e    f    e    d    c    b    a

Fig. 20

Fig. 21a

Fig. 21b

Fig. 21c

Fig. 21d

Fig. 21e

Fig. 21f

Fig. 22

**EUROPÄISCHER RECHERCHENBERICHT**

Europäisches Patentamt
European Patent Office
Office européen des brevets

Nummer der Anmeldung

EP 18 17 5227

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 106 291 894 A (LENOVO CO LTD) 4. Januar 2017 (2017-01-04) | 1,2,5-7, 9-11, 13-15 | INV. G06K9/00 G02B5/04 |
| A | * das ganze Dokument * ----- | 3,4,8,12 | |
| T | William Burke: "Image Acquisition", 1. Januar 1996 (1996-01-01), Chapman & Hall, XP055530485, Seiten 406-408, * Abbildungen 3112-3.114 * ----- | 10 | |
| T | Warren Smith: "Modern Optical Engineering: The Design of Optical Systems, 4e Aufl.", 1. Januar 2008 (2008-01-01), SPIE, XP055530507, Bd. 20, Seiten 144-146, * Abbildungen 7.27(b)(c)(e), 7.28(b)(d), 7.29(a * ----- | 10 | |
| A | YAMAGUCHI S ET AL: "COLLIMATION OF EMISSIONS FROM A HIGH-POWER MULTISTRIPE LASER-DIODE BAR WITH MULTIPRISM ARRAY COUPLING AND FOCUSING TO A SMALL SPOT", OPTICS LETTERS, OPTICAL SOCIETY OF AMERICA, US, Bd. 20, Nr. 8, 15. April 1995 (1995-04-15) , Seiten 898-900, XP000499612, ISSN: 0146-9592 * Seite 899, rechte Spalte, Absatz 2; Abbildungen 1-3 * ----- | 3,4 | |

RECHERCHIERTE SACHGEBIETE (IPC)

G06K
G02B

-/--

Der vorliegende Recherchenbericht wurde für alle Patentansprüche erstellt

| Recherchenort | Abschlußdatum der Recherche | Prüfer |
|---|---|---|
| Den Haag | 28. März 2019 | Granger, Bruno |

EPO FORM 1503 03.82 (P04C03)

Seite 1 von 2

**Europäisches Patentamt**
**European Patent Office**
**Office européen des brevets**

## EUROPÄISCHER RECHERCHENBERICHT

**Nummer der Anmeldung**

EP 18 17 5227

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | YULONG WU ET AL: "Beam shaping for kilowatt fiber-coupled diode lasers by using one-step beam cutting-rotating of prisms", APPLIED OPTICS, Bd. 55, Nr. 34, 28. November 2016 (2016-11-28), Seite 9769, XP055575175, WASHINGTON, DC; US ISSN: 0003-6935, DOI: 10.1364/AO.55.009769 * Seite 9770, rechte Spalte, Absatz 2; Abbildungen 1-2 *  ----- | 3,4 | |
| A | Joshua Engelsma ET AL: "RaspiReader: An Open Source Fingerprint Reader Facilitating Spoof Detection", , 25. August 2017 (2017-08-25), Seiten 1-14, XP055575214, Gefunden im Internet: URL:https://arxiv.org/pdf/1708.07887.pdf [gefunden am 2019-03-28] * Abbildung 4 *  ----- | 8 | **RECHERCHIERTE SACHGEBIETE (IPC)** |
| A | EP 0 045 914 A1 (SIEMENS AG [DE]) 17. Februar 1982 (1982-02-17) * Seite 13, Zeile 12 * * Seite 10, Zeile 2; Abbildung 1 * | 12 | |
| A | & US 4 340 300 A (RUELL HARTWIG) 20. Juli 1982 (1982-07-20) * Spalte 4, Zeile 26 - Zeile 29; Abbildungen 1, 2, 3, 8 *  ----- | 12 | |

Der vorliegende Recherchenbericht wurde für alle Patentansprüche erstellt

| Recherchenort | Abschlußdatum der Recherche | Prüfer |
|---|---|---|
| Den Haag | 28. März 2019 | Granger, Bruno |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

Seite 2 von 2

Europäisches
Patentamt

European
Patent Office

Office européen
des brevets

Nummer der Anmeldung

EP 18 17 5227

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

| Europäisches Patentamt / European Patent Office / Office européen des brevets | MANGELNDE EINHEITLICHKEIT DER ERFINDUNG ERGÄNZUNGSBLATT B | Nummer der Anmeldung EP 18 17 5227 |

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-3, 5-7, 9-11, 13-15

   Optischer Fingerabdrucksensor mit modularem Aufbau aus parallelen Lichtleiterplatten, wobei die Grenzschichten als flächenhafte Aussparungen ausgeführt sind

   ---

2. Anspruch: 4

   Optischer Fingerabdrucksensor mit modularem Aufbau aus parallelen Lichtleiterplatten, wobei die Grenzschichten durch hinreichend eng angeordnete streifenförmige Aussparungen (Gs) gebildet werden, wobei der Abstand as zweier benachbarter streifenförmiger Aussparungen (Gs), gemessen von der Unterkante der oberen streifenförmigen Aussparung bis zur Oberkante der unteren streifenförmigen Aussparung, etwa der halben Wellenlänge des von der mindestens einen Lichtquelle (12, 12') erzeugten Lichts entspricht, während die Abmessungen des Querschnitts der streifenförmigen Aussparungen (Gs) zumindest etwa der doppelten Wellenlänge X des von der mindestens einen Lichtquelle (12, 12') erzeugten Lichts entsprechen, wobei die Tiefe sx der streifenförmigen Aussparungen (Gs ) wesentlich kleiner als die Dicke dM der Lichtleiterplatten (Mi) zu wählen ist

   ---

3. Anspruch: 8

   in den Sensorkörper (10, 100 , 10R , 10T ) zwei mindestens ein unterscheidendes Merkmal aufweisende Eingangsstrahlen (E, E2) einkoppelbar sind, wobei der Eingangsstrahl (E) schräg unter einem Winkel ?E , der zwischen den Winkeln ?SL = arcsin (1/ns) und asF = arcsin ( n F/ n s ) liegt, und der Eingangsstrahl (E2) senkrecht unter einem Einfallswinkel ?E = 0° auf den sensorisch aktiven Bereich (Z) der Auflagefläche (AF) führbar sind, sodass der Eingangsstrahl (E) in einen totalreflektierten Ausgangsstrahl (A1) und der Eingangsstrahl (E2) diffus in einen großen Winkelbereich gestreut wird, aus dem ein gestreuter Ausgangsstrahl (A2) auswählbar ist, der sich mit dem totalreflektierten Ausgangsstrahl (A1) überlagert, wobei die in den sich überlagernden Ausgangsstrahlen (A1+A2) enthaltenen Hellfeld- und Dunkelfeldabbildungen eines Fingerabdrucks mithilfe des unterscheidenden Merkmals trennbar sind

   ---

4. Anspruch: 12

   jede Lichtleiterplatte Mi eine individuelle Form aufweist, wodurch die Bildung eines Sensorkörpers (10, 100 , 10R , 10T

| Europäisches Patentamt<br>European Patent Office<br>Office européen des brevets | **MANGELNDE EINHEITLICHKEIT<br>DER ERFINDUNG<br>ERGÄNZUNGSBLATT B** | **Nummer der Anmeldung**<br>EP 18 17 5227 |
|---|---|---|

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

```
) mit einer ergonomisch geformten Auflagefläche (AF) in
Gestalt einer Mulde oder einer anderen frei wählbaren
Gestalt ermöglicht wird
                   ---
```

Seite 2 von 2

## ANHANG ZUM EUROPÄISCHEN RECHERCHENBERICHT
## ÜBER DIE EUROPÄISCHE PATENTANMELDUNG NR.

EP 18 17 5227

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-03-2019

| Im Recherchenbericht angeführtes Patentdokument | Datum der Veröffentlichung | Mitglied(er) der Patentfamilie | Datum der Veröffentlichung |
|---|---|---|---|
| CN 106291894 A | 04-01-2017 | KEINE | |
| EP 0045914 A1 | 17-02-1982 | EP 0045914 A1 | 17-02-1982 |
| | | US 4340300 A | 20-07-1982 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2562682 B1
- EP 2871593 A1
- DE 202014010426 U1
- DE 202014105781 U1
- WO 2015005959 A1
- EP 2336805 B1